# EUROPÄISCHE PATENTSCHRIFT

(11) **EP 3 444 205 B1**
(45) Veröffentlichungstag und Bekanntmachung des Hinweises auf die Patenterteilung: **27.09.2023**
(21) Anmeldenummer: 18194091.7
(22) Anmeldetag: 23.05.2016
(51) Int. Cl.: B65G 1/04, B65G 39/06, B65G 1/137, B65G 39/12, B65G 43/08

(54) **VERFAHREN ZUM EINLAGERN UNTERSCHIEDLICHER STÜCKGÜTER IN EIN LAGERREGAL**
METHOD FOR STORING DIFFERENT PIECE GOODS IN A STORAGE RACK
PROCÉDÉ DE STOCKAGE DE DIFFÉRENTES PIÈCES DANS UN RAYONNAGE DE STOCKAGE

(30) Priorität: 29.05.2015 AT 504392015; 23.12.2015 AT 511012015
(43) Veröffentlichungstag der Anmeldung: 20.02.2019
(62) Teilanmeldung aus: 16735973.6
(73) Patentinhaber: TGW Mechanics GmbH, 4600 Wels (AT)
(72) Erfinder: GROSSE, Eric, 63225 Langen (DE); GRUBER, Thomas, 4643 Pettenbach (AT); RAUSCH, Martin, 4810 Gmunden (AT); SCHAUER, Johannes, 4076 St. Marienkirchen an der Polsenz (AT)
(74) Vertreter: Burger, Hannes

(56) Entgegenhaltungen:
- EP-A2- 2 436 620
- JP-A- H09 315 522
- JP-A- 2005 047 696
- JP-A- 2010 070 300
- JP-A- 2013 237 520

## Beschreibung

Die Erfindung betrifft ein Verfahren zum Einlagern unterschiedlicher Stückgüter in zumindest ein Lagerregal mit in übereinander liegenden Lagerebenen und nebeneinander ausgebildeten Lagerplätzen.

Die JP 2010-070300 A offenbart ein Verfahren nach dem Oberbegriff des Anspruches 1. Insbesondere offenbart dieses Dokument ein Verfahren zum Einlagern unterschiedlich schwerer Stückgüter in ein Lagerregal mit in übereinander liegenden Lagerebenen nebeneinander und hintereinander ausgebildeten Lagerplätzen, bei dem vorerst von den Stückgütern das Gewicht ermittelt und danach mittels einer teleskopierbaren Transportvorrichtung schwere Stückgüter auf vordere Lagerplätze des Lagerregales und leichte Stückgüter auf hintere Lagerplätze des Lagerregales eingelagert werden, um die Transportvorrichtung möglichst leichtbauend gestalten zu können.

Es sind aus dem Stand der Technik gemäß der EP 2 327 643 A1, EP 2 543 611 A1, EP 2 754 625 A1, EP 2 530 035 A1 und WO 2013/090970 A2 Lagersysteme bekannt, welche ein erstes Lagerregal mit in übereinander liegenden Regalebenen nebeneinander angeordneten Lagerkanälen, ein zweites Lagerregal mit in übereinander liegenden Regalebenen nebeneinander angeordneten Lagerkanälen, eine Regalgasse, welche in x-Richtung zwischen dem ersten Lagerregal und zweiten Lagerregal verläuft, und eine Vielzahl von in x-Richtung auf Führungsschienen verfahrbaren Transportfahrzeugen zum Einlagern von Stückgütern in das Lagerregal und Auslagern von Stückgütern aus dem Lagerregal umfassen. Diese Transportfahrzeuge sind so genannte Einebenenregalbediengeräte, daher bedienen diese eine Regalebene. Diese Lagersysteme umfassen ferner eine Ladegut-Manipulationseinheit, welche zumindest eine Stückgut-Hebevorrichtung mit einer heb- und senkbaren Transportvorrichtung zum Einlagern und/oder Auslagern von Stückgütern sowie eine Puffervorrichtung mit Bereitstellvorrichtungen für das Zwischenpuffern von Stückgütern aufweisen. Die Stückgut-Hebevorrichtung ist an eine Fördertechnik zum Antransport und Abtransport von Stückgütern zu bzw. von der Stückgut-Hebevorrichtung angeschlossen. Die Führungsschienen sind je Regalebene paarweise angeordnet und an den Lagerregalen befestigt, wobei eine der Führungsschienen je Regalebene eine erste Führung und eine zweite Führung ausbildet. Die Transportfahrzeuge können über die Führungsschienen die Lagerkanäle und die Bereitstellvorrichtungen anfahren, um Stückgüter zwischen den Lagerkanälen und Bereitstellvorrichtungen zu transportieren.

Die erste Führung erstreckt sich parallel zur Längsrichtung der Lagerregale und in einer parallel zur Regalebene verlaufenden ersten Führungsebene. Die zweite Führung erstreckt sich parallel zur Längsrichtung der Lagerregale und in einer im Wesentlichen senkrecht zur Regalebene verlaufenden zweiten Führungsebene.

Das Transportfahrzeug, wie es beispielweise aus der EP 2 351 698 A1, EP 2 526 032 A1, EP 2 530 034 A1, EP 2 759 494 A1 und WO 2013/013252 A1 bekannt ist, umfasst einen Grundrahmen, Laufräder, eine Transportvorrichtung zum Einlagern von Stückgütern in den Lagerkanal und Auslagern von Stückgütern aus dem Lagerkanal, eine Aufnahmeplattform, einen Fahrantrieb, eine elektronische Steuereinheit und zumindest eine Führungseinheit. Die Aufnahmeplattform ist dazu eingerichtet, zumindest ein Stückgut zu transportieren. Die Transportvorrichtung umfasst parallel zu den Längsseiten der Aufnahmeplattform angeordnete Teleskopeinheiten, welche jeweils einen Grundrahmen, einen gegenüber dem Grundrahmen verstellbaren ersten Schlitten und einen gegenüber dem ersten Schlitten verstellbaren zweiten Schlitten aufweisen. Die zweiten Schlitten sind jeweils an ihren einander gegenüberliegenden Endbereichen mit je einem äußeren Transportorgan und zumindest einem dazwischen angeordneten inneren Transportorgan versehen. Die Transportorgane sind zwischen einer gegenüber dem Stückgut zurückgezogenen Ausgangsstellung und einer das Stückgut ergreifenden Betätigungsstellung verstellbar.

Die Laufräder liegen auf der ersten Führung abrollbar auf und sind am Grundrahmen drehbar gelagert. Zumindest eines der Laufräder wird vom Fahrantrieb angetrieben.

Die Führungseinheit ist über eine Lagervorrichtung am Grundrahmen fest montiert und weist auf der zweiten Führung an voneinander abgewandten und parallel verlaufenden Führungsabschnitten abrollbar anliegende Führungsräder auf, wobei die Führungsräder an der Lagervorrichtung drehbar gelagert sind. Das Transportfahrzeug wird auf der Fahrbewegung entlang der Lagerregale in senkrechter zur zweiten Führungsebene geführt bewegt, wie beispielweise in der WO 2013/006879 A2 beschrieben. Das Transportfahrzeug ist über die Führungsräder entlang der Führungsschiene zwangsgeführt.

Es hat sich bei diesen bekannten Lagersystemen nun als gravierendes Problem herausgestellt, dass sich durch Fertigungstoleranzen an der zweiten Führung bedingte Führungsungenauigkeiten unmittelbar auf die Führung des Transportfahrzeuges auswirken. Gleiches trifft beim Überfahren von Verbindungsstößen zwischen miteinander verbundenen Führungsschienen zu. Zunehmende Leistungsanforderungen an das Lagersystem verlangen hohe Fahrgeschwindigkeiten der Transportfahrzeuge, sodass diese Führungsungenauigkeiten in Form von Schwingungen in die Lagerregale eingeleitet werden. Je mehr Transportfahrzeuge nun in einem Lagersystem eingesetzt werden, desto mehr "schaukeln" sich die Schwingungen auf und besteht die Gefahr, dass sich die Stückgüter in den Lagerkanälen undefiniert verlagern. Die tatsächliche Lageposition des Stückgutes im Lagerkanal entspricht nicht mehr der Lageposition, in welcher das Stückgut von der Transportvorrichtung im Lagerkanal abgestellt wurde. Dies hat zur Folge, dass die Transportvorrichtung ein Stückgut, welches aus einem Lagerkanal auszulagern wäre, nicht ergreifen kann oder mit dem Stückgut kollidiert. Dies hat dramatische Konsequenzen für die Leistung und Verfügbarkeit eines Lagersystems.

Auch hat sich in der Praxis gezeigt, dass die Transportfahrzeuge bei zunehmender Fahrgeschwindigkeit turbulente Luftströmungen erzeugen, die eine unerwünschte Verlagerung der Stückgüter im Lagerregal bewirken. Dies hat zur Folge, dass die Transportvorrichtung ein Stückgut, welches aus einem Lagerkanal auszulagern wäre, nicht ergreifen kann oder mit dem Stückgut kollidiert, wie oben beschrieben. Dieses Phänomen ist nicht nur bei Lagersystemen mit in übereinander liegenden Fahrebenen angeordneten Transportfahrzeugen (Einebenenregalbediengeräten) zu beobachten, sondern auch bei Lagersystemen mit einem entlang des Lagerregales in einer ersten Richtung (x-Richtung) bewegbaren Transportfahrzeug, bei welchem die in einer zweiten Richtung (z-Richtung) in das Lagerregal ausfahrbare Transportvorrichtung auf einer heb-/senkbaren Hubplattform angeordnet ist.

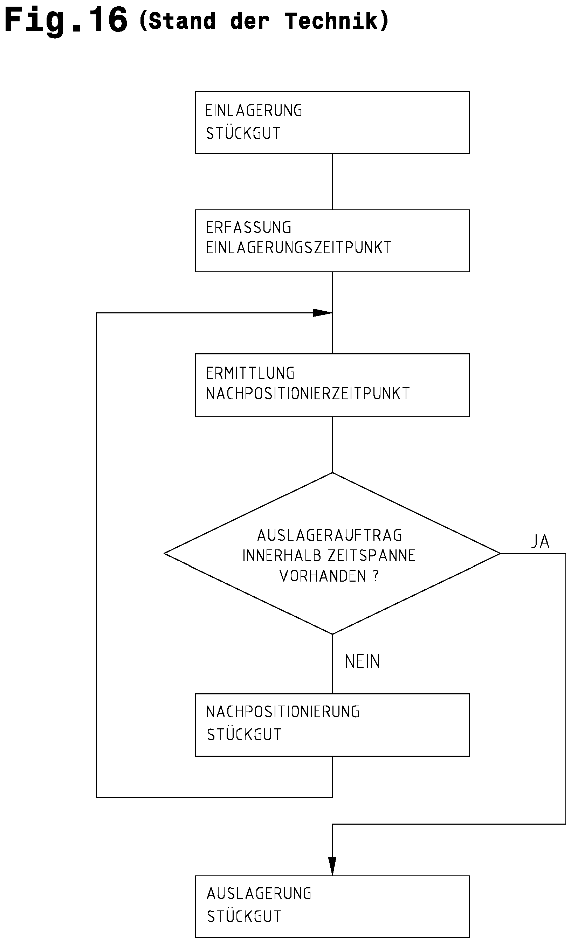

Nach einem aus dem Stand der Technik bekannten Steuerungsverfahren, werden jene Stückgüter nach einer definierten Zeitspanne nachpositioniert, zu welchen innerhalb dieser Zeitspanne kein Auslagerauftrag vorliegt, wie in Fig. 16 dargestellt. Hierzu ist es vorgesehen, dass von einer Steuerungsvorrichtung in einem ersten Schritt zu jedem Stückgut der Einlagerungszeitpunkt gespeichert und in einem zweiten Schritt ein Nachpositionierzeitpunkt ermittelt werden. Der Nachpositionierzeitpunkt beruht beispielweise auf empirischen Ermittlungen und beruht auf der Tatsache, dass zu diesem Zeitpunkt das Stückgut von der Transportvorrichtung beschädigungsfrei manipuliert werden kann. Würde das Stückgut bis zum Ende des Nachpositionierzeitpunktes nicht nachpositioniert werden, kann das Stückgut von der Transportvorrichtung nicht mehr ergriffen werden oder die Transportvorrichtung kollidiert mit dem Stückgut. Die Zeitspanne wird aus dem Einlagerungszeitpunkt und Nachpositionierzeitpunkt berechnet. In einem dritten Schritt werden von der Steuerungsvorrichtung die zuvor elektronisch erfassten Auslageraufträge ausgewertet. Liegt zu einem Stückgut, welches in das Lagerregal eingelagert wurde, innerhalb der Zeitspanne kein Auslagerauftrag vor, muss das Stückgut in x-Richtung und z-Richtung neuerlich positioniert werden. Um diesen Verlagerungsprozess möglichst effizient zu gestalten, erfolgt die x-, z-Positionierung innerhalb des Lagerregales. Danach wird von der Steuerungsvorrichtung wiederum ein Nachpositionierzeitpunkt berechnet und dieses Stückgut nochmals nachpositioniert, sofern auch innerhalb der Zeitspanne zwischen vorherigen Nachpositionierzeitpunkt und nachfolgenden Nachpositionierzeitpunkt kein Auslagerauftrag vorliegt. Liegt hingegen innerhalb der Zeitspanne zwischen Einlagerungszeitpunkt und Nachpositionierzeitpunkt ein Auslagerauftrag vor, ist eine Nachpositionierung nicht unbedingt erforderlich.

Sind in einem Lagerregal eine Vielzahl von Stückgütern mit geringer Umschlaghäufigkeit gelagert, muss das Transportfahrzeug und die Transportvorrichtung auch eine hohe Anzahl an Nachpositioniervorgänge vornehmen, was sich nachteilig auf die Verfügbarkeit und den Energieverbrauch des Lagersystems auswirkt. Auch kann die Einlagerleistung beeinträchtigt werden, da die Kapazitäten des Transportfahrzeuges und der Transportvorrichtung an die Nachpositioniervorgänge gebunden sind.

Der vorliegenden Erfindung liegt die Aufgabe zugrunde, ein Verfahren zum Einlagern von Stückgütern in ein Lagerregal des Lagersystems bereitzustellen, bei dem auch bei zunehmenden Leistungsanforderungen ein zuverlässiger Lagerbetrieb sichergestellt ist.

Die Aufgabe der Erfindung wird durch das Verfahren gemäß Anspruch 1 gelöst. Das Verfahren umfasst die folgende Schritte:
Erfassung einer Dichte zu jedem Stückgut durch ein Steuersystem,
Erfassung zumindest eines Grenzwertes für die Dichte des Stückgutes durch das Steuersystem,
Vergleichen der erfassten Dichte zu jedem Stückgut mit dem Grenzwert für die Dichte des Stückgutes durch das Steuersystem (Vergleichsmodul),
Zuweisung / Zuordnung der Lagerplätze zu einer ersten Lagerplatzkategorie und zu einer zweiten Lagerplatzkategorie und Erfassung (Speicherung) dieser Lagerplatzkategorien durch das Steuersystem (Speichermodul),
Ermittlung unbelegter Lagerplätze der ersten Lagerplatzkategorie und Ermittlung unbelegter Lagerplätze der zweiten Lagerplatzkategorie durch das Steuersystem (Lagerverwaltungsrechner),
Einlagerung erster Stückgüter mittels der Stückgutaufnahmevorrichtung und Transportvorrichtung auf unbelegte Lagerplätze der zweiten Lagerplatzkategorie, sofern eine einen Grenzwert unterschreitende Abweichung ermittelt wird, und
Einlagerung zweiter Stückgüter mittels der Stückgutaufnahmevorrichtung und Transportvorrichtung auf unbelegte Lagerplätze der ersten Lagerplatzkategorie, sofern eine einen Grenzwert überschreitende Abweichung ermittelt wird.

Erfindungsgemäß ist vorgesehen, dass vor dem Hintergrund physikalischer Eigenschaften des Lagerregales und/oder Umgebungsbedingungen im Bereich des Lagerreales unterschiedliche Lagerplatzkategorien festgelegt und die Stückgüter basierend auf einem Vergleich zwischen einer ermittelten Dichte je Stückgut und einem festgelegten Grenzwert für die Dichte selektiv auf die Lagerplätze verteilt werden. Die Dichte charakterisiert einen Stückgut-Eigenschaftskennwert. Die physikalische Eigenschaft ist insbesondere durch das Schwingungsverhalten des Lagerreales bestimmt. Die Umgebungsbedingung resultiert insbesondere aus der durch die Fahrbewegung der Stückgutaufnahmevorrichtung erzeugten turbulenten Luftströmung. Liegt die ermittelte Dichte (zB 40 g/dm³) unterhalb des Grenzwertes (ca. 50 g/dm³), so wird das Stückgut mittels der Stückgutaufnahmevorrichtung / Transportvorrichtung auf einen unbelegten Lagerplatz der zweiten Lagerplatzkategorie, daher einen "unkritischen" Lagerplatz eingelagert. Liegt hingegen die ermittelte Dichte (zB 100 g/dm³) oberhalb des Grenzwertes (ca. 50 g/dm³), so kann das Stückgut mittels der Stückgutaufnahmevorrichtung / Transportvorrichtung auf einen unbelegten Lagerplatz der ersten Lagerplatzkategorie, daher einen "kritischen" Lagerplatz eingelagert werden. Durch die Zuordnung der unterschiedlich klassifizierten Stückgüter zu den "kritischen" Lagerplätzen und "unkritischen" Lagerplätzen kann selbst bei hohen Bewegungsgeschwindigkeiten der Stückgutaufnahmevorrichtung / Transportvorrichtung eine Verlagerung jener Stückgüter, deren Dichte unterhalb des Grenzwertes liegt und wenn diese auf den Lagerplätzen abgestellt wurden, vermieden werden. Eine Nachpositionierung der Stückgüter im Lagerregal kann auch dann entfallen, wenn die Stückgüter über mehrere Tage im Lagerregal stehen. Damit kann auch ein anschließender Auslagervorgang der Stückgüter durch die Transportvorrichtung zuverlässig erfolgen. Von Vorteil ist auch, dass die Einlagerung der Stückgüter auf die unbelegten Lagerplätze der ersten Lagerplatzkategorie und unbelegten Lagerplätzen der zweiten Lagerplatzkategorie nach dem chaotischen Lagerprinzip erfolgen kann.

Von Vorteil ist auch, wenn die Lagerplätze der zweiten Lagerplatzkategorie in jenen Bereichen des Lagerregales liegen, in welchen die durch die Fahrbewegung der Stückgutaufnahmevorrichtung im Lagerregal angeregte Schwingung eine minimale Schwingungsamplitude aufweist. Hingegen liegen die Lagerplätze der ersten Lagerplatzkategorie in jenen Bereichen des Lagerregales, in welchen die durch die Fahrbewegung der Stückgutaufnahmevorrichtung im Lagerregal angeregte Schwingung eine maximale Schwingungsamplitude aufweist. Es ist also möglich, dass ein Lagerregal je Regalebene (Lagerfläche) Lagerplätze verschiedener Lagerplatzkategorien aufweist, daher können auf einer Regalebene (Lagerfläche) Lagerplätze der ersten Lagerplatzkategorie und/oder Lagerplätze der zweiten Lagerplatzkategorie vorhanden sein.

Das Lagerregal kann auf zumindest einigen der verschiedenen Regalebenen (Lagerflächen) wiederum Lagerplätze verschiedener Lagerplatzkategorien aufweisen, daher können beispielweise auf einer dritten Regalebene (Lagerfläche) Lagerplätze der ersten Lagerplatzkategorie und Lagerplätze der zweiten Lagerplatzkategorie und beispielweise auf einer sechsten Regalebene (Lagerfläche) Lagerplätze der ersten Lagerplatzkategorie und Lagerplätze der zweiten Lagerplatzkategorie vorhanden sein. Die Verteilung der Lagerplätze der ersten Lagerplatzkategorie und Lagerplätze der zweiten Lagerplatzkategorie kann relativ zueinander auf den Regalebenen unterschiedlich sein. Das Lagerregal kann aber auch auf zumindest einigen der verschiedenen Regalebenen (Lagerflächen) Lagerplätze gleicher Lagerplatzkategorie aufweisen, daher können beispielweise auf einer ersten Regalebene (Lagerfläche) nur Lagerplätze der zweiten Lagerplatzkategorie (unkritische Lagerplätze) und auf einer zehnten Regalebene (Lagerfläche) Lagerplätze der ersten Lagerplatzkategorie (kritische Lagerplätze) vorhanden sein.

Es erweist sich auch von Vorteil, wenn das Lagerregal in den übereinander liegenden Lagerebenen an einer ersten Tiefenposition und einer dahinter liegenden zweiten Tiefenposition jeweils nebeneinander Lagerplätze ausbildet, wobei die Lagerplätze der zweiten Lagerplatzkategorie in der zweiten Tiefenposition liegen und die ersten Stückgüter auf den Lagerplätzen in der zweiten Tiefenposition gelagert werden. Mit dieser Maßnahme kann selbst bei turbulenten Luftströmungen eine unerwünschte Verlagerung auch jener Stückgüter vermieden werden, deren Dichte (zB 40 g/dm³) unterhalb des Grenzwertes liegt, da diese an der zweiten Tiefenposition abgestellt werden.

Gemäß einer Weiterbildung der Erfindung ist es vorgesehen, dass zu jedem Stückgut eine Längen/Breiten/Höhenabmessung und ein Gewicht erfasst werden, wobei die Dichte aus der Volumenabmessung und Gewichtsmessung bestimmt wird. Die Längen/Breiten/Höhenabmessung und das Gewicht können entweder bereits als Stammdaten zu den Stückgütern vorliegen oder über eine Messvorrichtung ermittelt werden. Die Dichte kann einfach berechnet werden und erlaubt eine eindeutige Zuordnung der Stückgüter zu einem Lagerplatz der ersten Lagerplatzkategorie und zu einem Lagerplatz der zweiten Lagerplatzkategorie.

Auch ist von Vorteil, wenn zu jedem Stückgut nach einem Kommissioniervorgang mittels einer Messvorrichtung ein Gewicht ermittelt und vor der Einlagerung die Dichte neuerlich aus der Volumenabmessung und dem erfassten Gewicht bestimmt wird. Damit wird stets das tatsächliche Gewicht der Stückgüter ermittelt und die Berechnung der Dichte auf den gegenwärtigen Gewichtszustand gestützt. Dies bildet die Basis für die korrekte Einlagerung der Stückgüter auf die unterschiedlichen Lagerplätzen.

Nach einer vorteilhaften Ausführung ist die Stückgutaufnahmevorrichtung ein Transportfahrzeug zum Einlagern von Stückgütern in das Lagerregal und Auslagern von Stückgütern aus dem Lagerregal in einem Lagersystem, wobei das Lagersystem übereinander liegende und vor dem Lagerregal horizontal verlaufende Fahrebenen umfasst, entlang welcher das Transportfahrzeug bewegbar ist, welches Transportfahrzeug umfasst,
- einen Grundrahmen,
- Laufräder, welche auf einer ersten Führung abrollbar aufliegen und am Grundrahmen drehbar gelagert sind, wobei sich die erste Führung parallel zur Längsrichtung des Lagerregales und in einer parallel zur Fahrebene verlaufenden ersten Führungsebene erstreckt,
- einen Fahrantrieb, welcher mit zumindest einem Laufrad gekoppelt ist,
- zumindest eine Führungseinheit, welche über eine Lagervorrichtung am Grundrahmen montiert ist und welche auf einer zweiten Führung an voneinander abgewandten Führungsabschnitten abrollbar anliegende Führungsräder aufweist, wobei die Führungsräder an der Lagervorrichtung drehbar gelagert sind und wobei sich die zweite Führung parallel zur Längsrichtung des Lagerregales und in einer die Fahrebene schneidenden zweiten Führungsebene erstreckt, um das Transportfahrzeug auf der Fahrbewegung entlang des Lagerregales quer zur zweiten Führungsebene geführt zu bewegen,
- wobei die Lagervorrichtung zumindest ein elastisch nachgiebiges Ausgleichselement aufweist, welches derart angeordnet und gestaltet ist, dass zumindest eines der Führungsräder relativ zum Grundrahmen beweglich ist.

Eine solcher Anwendungsfall kann sich ergeben, wenn zwar sichergestellt ist, dass im Lagerregal kaum Schwingungen angeregt werden, jedoch die Stückgutaufnahmevorrichtung(en) mit höchster Fahrgeschwindigkeit bewegt werden muss (müssen) und durch den dabei entwickelten Fahrtwind turbulente Luftströmungen entstehen, welche eine unerwünschte Verlagerung der auf den Lagerplätzen abgestellten Stückgüter bewirken.

Von Vorteil ist, dass die durch Unebenheiten an der zweiten Führung und/oder an einem Verbindungsstoß zwischen miteinander verbundenen Führungen vorhandenen Führungsungenauigkeiten mittels des Ausgleichselementes kompensiert werden und das Transportfahrzeug selbst bei hohen Fahrgeschwindigkeiten kaum Schwingungen am / im Lagerregal anregt. Somit haben Fertigungstoleranzen an der zweiten Führung keine negativen Auswirkungen auf die Abstellgenauigkeit der Stückgüter in den Lagerkanälen. Es können die Führungen mit geringerer Fertigungsqualität und größeren Führungslängen montiert werden. Damit werden die Installationskosten für ein Lagersystem reduziert. Auch kann das Lagerregal dünnwandig gestaltet werden und können die Anschaffungskosten gesenkt werden. Das Transportfahrzeug kann in beliebiger Stückzahl in einem Lagersystem eingesetzt werden. Ein solches Lagersystem zeichnet sich durch eine hohe Verfügbarkeit aus.

Die Lagervorrichtung kann einen Lagerkörper und ein elastisch nachgiebiges erstes Ausgleichselement aufweisen, wobei die Führungsräder in einem fixen Abstand drehbar am Lagerkörper gelagert sind und wobei das erste Ausgleichselement zwischen dem Grundrahmen und dem Lagerkörper angeordnet und derart gestaltet ist, dass der Lagerkörper mit den Führungsrädern relativ zum Grundrahmen beweglich ist. Dabei kann das elastisch nachgiebige erste Ausgleichselement durch ein bevorzugt vorgespanntes Federelement gebildet sein. Diese Ausführung zeichnet sich durch ihren kompakten Aufbau aus und kann sehr einfach bei bereits im Betrieb befindlichen Transportfahrzeugen nachgerüstet werden. Dabei kann das elastisch nachgiebige Ausgleichselement als Dämpfungsplatte ausgebildet werden, welche in zur Plattenebene senkrechter Richtung wirkende Druckkräfte aufnehmen und damit kinetische Energie abbauen kann. Die Druckkräfte können je nach Formabweichung an der zweiten Führung in entgegen gesetzte Richtung wirken.

Andererseits kann die Lagervorrichtung einen Lagerkörper, ein elastisch nachgiebiges erstes Ausgleichselement und ein elastisch nachgiebiges zweites Ausgleichselement aufweisen, wobei die Führungsräder in einem fixen Abstand drehbar am Lagerkörper gelagert sind und wobei die Ausgleichselemente zu beiden Seiten des Grundrahmens angeordnet sind und eines der Ausgleichselemente zwischen dem Grundrahmen und dem Lagerkörper angeordnet ist und die Ausgleichselemente derart gestaltet sind, dass der Lagerkörper mit den Führungsrädem relativ zum Grundrahmen beweglich ist. Dabei können die elastisch nachgiebigen Ausgleichselemente jeweils durch ein bevorzugt vorgespanntes Federelement gebildet sein. Nach dieser Ausführung wird zwischen dem ersten Ausgleichselement und zweiten Ausgleichselement der Grundrahmen aufgenommen, sodass auch größere Formabweichungen der zweiten Führung ausgeglichen werden können und sich bei Belastung ein optimales Kräftegleichgewicht einstellt. Damit wird eine besonders gute Dämpfungseigenschaft erreicht.

Das erste Ausgleichselement oder das erste Ausgleichselement und zweite Ausgleichselement ist / sind eine Ausgleichsplatte bzw. Dämpfungsplatte aus Kunststoff, insbesondere Elastomer, wie Polyurethan Elastomer, oder Gummi. Das Ausgleichselement ist mit einer Härte im Bereich von 30 Shore A bis 50 Shore A (DIN 53505) ausgeführt, sodass eine ausreichend präzise Führung und eine ausreichend hohe Dämpfung erreicht wird.

Es kann auch vorgesehen sein, dass die Lagervorrichtung einen Lagerkörper mit einem ersten Lagerarm und einen zweiten Lagerarm, ein elastisch nachgiebiges erstes Ausgleichselement und ein elastisch nachgiebiges zweites Ausgleichselement aufweist, wobei das erste Führungsrad am ersten Lagerarm und das zweite Führungsrad am zweiten Lagerarm drehbar gelagert sind und wobei der erste Lagerarm mit dem ersten Ausgleichselement und der zweite Lagerarm mit dem zweiten Ausgleichselement verbunden ist, sodass die Führungsräder relativ zum Grundrahmen beweglich sind, und wobei die Lagervorrichtung am Grundrahmen (im Wesentlichen starr) befestigt ist. Bevorzugt sind die Ausgleichselemente jeweils durch eine Blattfeder, insbesondere aus Federstahl gebildet und ist zumindest eine der Blattfedern (nahe dem Grundrahmen) einseitig eingespannt. Diese Ausführung ermöglicht den Ausgleich von Unebenheiten an jedem Führungsabschnitt der zweiten Führung. Die Führungsräder werden unabhängig voneinander mit einer voreingestellten Anpresskraft gegen die Führungsabschnitte angedrückt, sodass Führungsungenauigkeiten optimal ausgeglichen werden. Selbst bei Fahrgeschwindigkeiten des Transportfahrzeuges von 5 m/sec und mehr, können Unebenheiten an der zweiten Führung keine relevanten Schwingungen im / am Lagerregal bewirken. Zudem bleiben die Materialeigenschaften der Ausgleichselemente über die Einsatzdauer erhalten und können die Ausgleichselemente sehr kompakt gebaut werden.

Nach einer anderen Ausgestaltung umfasst die Lagervorrichtung einen Lagerkörper mit einem ersten Lagerarm und einen zweiten Lagerarm, ein elastisch nachgiebiges erstes Ausgleichselement und ein elastisch nachgiebiges zweites Ausgleichselement, wobei das erste Führungsrad mit seiner Radachse über das elastisch nachgiebige erste Ausgleichselement am ersten Lagerarm und das zweite Führungsrad mit seiner Radachse über das elastisch nachgiebige zweite Ausgleichselement am zweiten Lagerarm derart gelagert sind, dass die Führungsräder relativ zum Grundrahmen beweglich sind. Nach dieser Ausführung können die Führungsräder unabhängig voneinander Führungsungenauigkeiten an den Führungsabschnitten der zweiten Führung ausgleichen. Somit können Unebenheiten an der zweiten Führung keine relevanten Schwingungen im / am Lagerregal bewirken, selbst wenn die Fahrgeschwindigkeiten des Transportfahrzeuges bei 5 m/sec und mehr liegen.

Ein besonders kompakter und vor äußeren Einflüssen, wie Schmutz, Spritzwasser und dgl. geschützter Aufbau der Lagervorrichtung wird erreicht, wenn das Ausgleichselement eine Lagerhülse, eine Innenhülse und einen zwischen der Lagerhülse und Innenhülse angeordneten Elastomerring umfasst, wobei die Lagerhülse eine Bohrung ausbildet, in welcher die Radachse des Führungsrades gehalten ist.

Auch ist von Vorteil, wenn die Lagervorrichtung einen ersten Lagerkörper und einen zweiten Lagerkörper und ein elastisch nachgiebiges erstes Ausgleichselement aufweist, wobei das erste Führungsrad am ersten Lagerkörper und das zweite Führungsrad am zweiten Lagerkörper drehbar gelagert sind und wobei der erste Lagerkörper am Grundrahmen starr befestigt ist und der zweite Lagerkörper über das erste Ausgleichselement mit dem Grundrahmen derart verbunden ist, dass das zweite Führungsrad relativ zum Grundrahmen beweglich ist. Nach dieser Ausführung wird einerseits die, wenn auch niedrige Dämpfungswirkung des elastischen Laufbelages am ersten Führungsrad und andererseits die im Vergleich höhere Dämpfungswirkung des Ausgleichselementes ausgenutzt, um die Unebenheiten an der ersten Führung bzw. zweiten Führung auszugleichen. Bevorzugt ist der Kunststoff des Laufbelages am ersten Führungsrad mit einer Härte im Bereich von 70 Shore A bis 100 Shore A, insbesondere 93 Shore A (DIN 53505) und das Ausgleichselement mit einer Härte im Bereich von 30 Shore A bis 50 Shore A (DIN 53505) ausgeführt. Es kann sich dabei auch von Vorteil erweisen, wenn die Radachse des ersten Führungsrades und die Radachse des zweiten Führungsrades einen Winkel einschließen, wobei die Radachse des zweiten Führungsrades senkrecht verläuft.

Nach einer vorteilhaften Ausführung ist das Transportfahrzeug auf einer Fahrzeugseite mit zwei Führungseinheiten, wie oben beschrieben, ausgestattet. Das Transportfahrzeug ist somit einseitig an einer ersten Führungsschiene (insbesondere dämpfend) geführt und kann sich bei vorhandenen Fertigungstoleranzen an der ersten Führungsschiene (Fertigungstoleranzen an der zweiten Führungsschiene haben keine Auswirkung auf die Führung des Transportfahrzeuges in senkrechter zur zweiten Führungsebene) relativ zu den Führungsschienen in senkrechter Richtung zur zweiten Führungsebene mitbewegen, ohne dabei Schwingungen im Lagerregal, welches der anderen Fahrzeugseite benachbart ist, welche keine Führungseinheit aufweist, zu verursachen.

Grundsätzlich kann die Lagervorrichtung aber auch ohne elastisch nachgiebiges Ausgleichselement ausgestaltet werden, sodass alleinig durch die verfahrenstechnische Maßnahme eine Verlagerung der Stückgüter im Lagerregal vermieden wird.

Auch ist es möglich, dass die Laufräder zusätzlich zwischen der Radnabe und dem Laufbelag ein elastisches Dämpfungselement aufweisen. Diese Maßnahme kann vorgesehen werden, um beim Überfahren von Verbindungsstößen zwischen miteinander verbundenen Führungsschienen Vibrationen am Transportfahrzeug und am Lagerregal zu vermeiden bzw. zu kompensieren. Dies ermöglicht wiederum, wie oben beschrieben, hohe Fahrgeschwindigkeiten für das Transportfahrzeug und die Verwendung von Lagerregalen in dünnwandiger Ausgestaltung. Man macht sich die elastische Verformung des Dämpfungselementes zu Nutze, um bei der Einwirkung von radialen Kräften auf das Laufrad eine federnde Wirkung zu erreichen. Somit werden "Schläge" von den Laufrädern gedämpft auf den Grundrahmen weitergeleitet. Damit wird auch ein Verrutschen des Stückgutes auf der Aufnahmeplattform des Transportfahrzeuges weitestgehend vermieden.

Nach einer anderen Ausführung ist es möglich, dass zumindest zwei der Laufräder auf einer (angetriebenen) Antriebswelle befestigt und die Antriebswelle über Lagervorrichtungen am Grundrahmen gelagert ist, wobei die Lagervorrichtungen jeweils zumindest ein elastisch nachgiebiges Ausgleichselement aufweisen, welches derart angeordnet und gestaltet ist, dass die Laufräder in radialer Richtung relativ zum Grundrahmen beweglich sind.

Von Vorteil ist auch, wenn je zwei Laufräder auf einer Antriebswelle befestigt und die Antriebswellen je über Lagervorrichtungen am Grundrahmen gelagert sind, wobei die Lagervorrichtungen je Antriebswelle jeweils zumindest ein elastisch nachgiebiges Ausgleichselement aufweisen, welches derart angeordnet und gestaltet ist, dass die Laufräder in radialer Richtung relativ zum Grundrahmen beweglich sind. Dabei kann nur eine der Antriebswellen oder beide Antriebswellen angetrieben sein. Eine solche Ausführung ermöglicht die Verwendung konventioneller Laufräder, beispielsweise Laufräder mit einer Radnabe aus Metall oder faserverstärktem Kunststoff und einem Laufbelag aus verschleißfestem Kunststoff, da die Lagervorrichtungen für die Antriebswelle(n) mit dem elastischen Dämpfungselement versehen sind.

Es ist auch möglich, dass die Laufräder jeweils eine Radnabe und einen koaxial zur Radnabe angeordneten Laufbelag und zusätzlich zwischen der Radnabe und dem Laufbelag ein elastisches Dämpfungselement aufweisen, wobei die Laufräder mit dem Laufbelag auf der ersten Führung abrollbar aufliegen. Nach dieser Ausgestaltung werden "Schläge" an den Laufrädern gedämpft, da diese mit dem elastischen Dämpfungselement versehen sind. Grundsätzlich ist auch eine Kombination mit den Lagervorrichtungen für die Antriebswelle(n) mit dem elastischen Dämpfungselement möglich.

Es erweist sich als günstig, wenn das elastische Dämpfungselement koaxial zur Radnabe angeordnet ist, wobei das elastische Dämpfungselement einen Innenring, einen Außenring, einen Mittelsteg, welcher den Innenring und Außenring verbindet, und Rippen, welche voneinander getrennt in axialer Richtung der Innen- und Außenringe verlaufen und welche den Innenring und Außenring verbinden. Ein solches elastisches Dämpfungselement kann besonders günstig hergestellt werden und zeichnet sich durch eine hohe Dämpfungseigenschaft aus.

Die Radnabe umfasst einen Innenring, einen Außenring, einen Mittelsteg, welcher den Innenring und Außenring verbindet, und Rippen, welche voneinander getrennt in axialer Richtung der Innen- und Außenringe verlaufen und welche den Innenring und Außenring verbinden. Eine solche Radnabe kann besonders günstig hergestellt werden und zeichnet sich durch seine hohe Formstabilität aus.

Eine besonders gute Dämpfungswirkung wird erreicht, wenn das elastische Dämpfungselement aus einem elastomeren Material mit einer Härte bis maximal 50 Shore A besteht.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt eines Lagersystems in einer ersten Ausführung mit Lagerregalen und einer Stückgut-Manipulationseinheit in Draufsicht auf eine Regalebene;
- Fig. 2: das Lagersystem in Ansicht gemäß der Linie II in Fig. 1;
- Fig. 3: das Lagersystem ohne der Stückgut-Manipulationseinheit nach Fig. 1 in Stirnansicht;
- Fig. 4: einen Ausschnitt eines Lagersystems in einer zweiten Ausführung mit Lagerregalen und einer Stückgut-Manipulationseinheit in Draufsicht auf eine Regalebene;
- Fig. 5: ein Transportfahrzeug mit einer Transportvorrichtung zum Einlagern von Stückgütern in Lagerkanäle und Auslagern von Stückgütern aus Lagerkanälen, in perspektivischer Ansicht;
- Fig. 6: eine Ausschnittsvergrößerung aus einem Lagerregal und des Transportfahrzeuges mit einer ersten Ausführung einer Führungseinheit, gemäß Fig. 5, in Stirnsicht;
- Fig. 7: eine Ausschnittsvergrößerung von Fig. 6 mit dem Transportfahrzeug und der Führungseinheit;
- Fig. 8: die Führungseinheit nach Fig. 7 in Explosionsdarstellung;
- Fig. 9: eine Ausschnittsvergrößerung von Fig. 6 mit dem Transportfahrzeug und einer zweiten Ausführung einer Führungseinheit;
- Fig. 10: die Führungseinheit nach Fig. 9 in Explosionsdarstellung;
- Fig. 11: eine Ausschnittsvergrößerung von Fig. 6 mit dem Transportfahrzeug und einer dritten Ausführung einer Führungseinheit, in geschnittener Ansicht;
- Fig. 12: die Führungseinheit nach Fig. 11 in perspektivischer Ansicht;
- Fig. 13: eine andere Ausführung für die Ausgestaltung einer Blattfeder mit einem elastisch nachgiebigen ersten Ausgleichselement und einem elastisch nachgiebigen zweiten Ausgleichselement in perspektivischer Ansicht;
- Fig. 14: eine Ausschnittsvergrößerung von Fig. 6 mit dem Transportfahrzeug und einer vierten Ausführung einer Führungseinheit;
- Fig. 15: eine Ausschnittsvergrößerung von Fig. 6 mit dem Transportfahrzeug und einer fünften Ausführung einer Führungseinheit;
- Fig. 16: ein Flussdiagramm für ein Einlagerverfahren aus dem Stand der Technik;
- Fig. 17: einen Ausschnitt eines Lagersystems in einer ersten Ausführung zur Ausführung eines erfindungsgemäßen Verfahrens zum Einlagern von Stückgütern in Draufsicht auf eine Regalebene;
- Fig. 18: das Lagersystem in Ansicht gemäß der Linie XVIII in Fig. 17;
- Fig. 19: das Lagersystem ohne der Stückgut-Manipulationseinheit nach Fig. 17 in Stirnansicht;
- Fig. 20: einen Ausschnitt eines Lagersystems in einer zweiten Ausführung zur Ausführung eines erfindungsgemäßen Verfahrens zum Einlagern von Stückgütern in Draufsicht auf eine Regalebene;
- Fig. 21: das Lagersystem in Ansicht gemäß der Linie XXI in Fig. 20;
- Fig. 22: eine Draufsicht auf eine Regalebene mit Lagerplätzen einer ersten Lagerplatzkategorie, auf welchen Stückgüter lagern, deren Dichte einen Grenzwert überschreiten;
- Fig. 23: eine Draufsicht auf eine Regalebene mit Lagerplätzen einer ersten Lagerplatzkategorie, auf welchen Stückgüter lagern, deren Dichte einen Grenzwert überschreiten, und Lagerplätzen einer zweiten Lagerplatzkategorie, auf welchen Stückgüter lagern, deren Dichte einen Grenzwert unterschreiten;
- Fig. 24: eine Draufsicht auf eine Regalebene mit Lagerplätzen einer zweiten Lagerplatzkategorie, auf welchen Stückgüter lagern, deren Dichte einen Grenzwert unterschreiten;
- Fig. 25: eine Draufsicht auf eine Regalebene mit Lagerplätzen einer ersten Lagerplatzkategorie, auf welchen Stückgüter lagern, deren Dichte einen Grenzwert überschreiten, und Lagerplätzen einer zweiten Lagerplatzkategorie, auf welchen Stückgüter lagern, deren Dichte einen Grenzwert unterschreiten;
- Fig. 26: ein Flussdiagramm für ein erfindungsgemäßes Einlagerverfahren von Stückgütern;
- Fig. 27: ein Laufrad in einer modifizierten Ausführung mit einem elastischen Dämpfungselement, geschnitten gemäß den Linien XXVII in Fig. 28;
- Fig. 28: das Laufrad aus Fig. 27 in Ansicht von vorne;
- Fig. 29: das Laufrad aus Fig. 27 in Ansicht von hinten;
- Fig. 30: einen Grundrahmen für das Transportfahrzeug in einer modifizierten Ausführung der Lagervorrichtungen für die Antriebswellen mit je einem elastischen Dämpfungselement, in perspektivischer Ansicht;
- Fig. 31: einen Längsschnitt durch die Lagervorrichtung, Antriebswelle und Laufrad, gemäß der Ausführung in Fig. 30.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Es sei an dieser Stelle auch hingewiesen, dass der im Nachfolgenden beschriebene Stückgut-Eigenschaftskennwert durch die Dichte definiert wird.

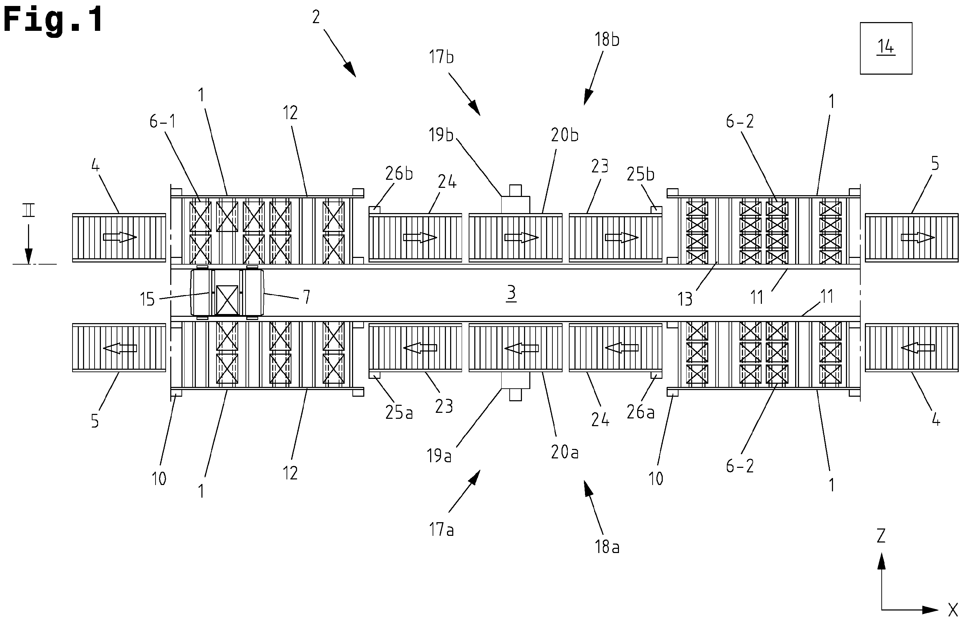

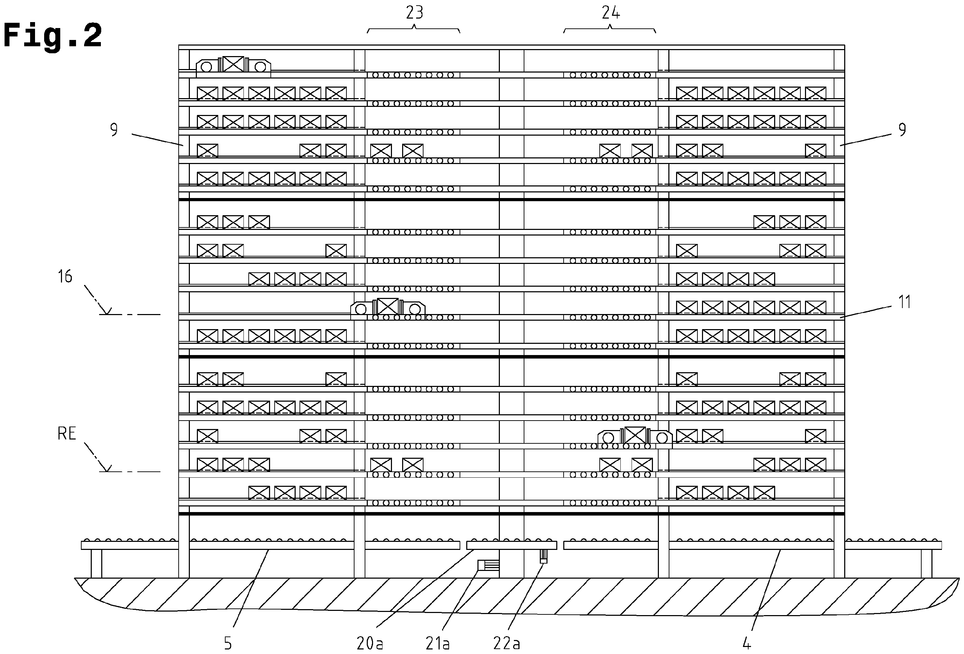

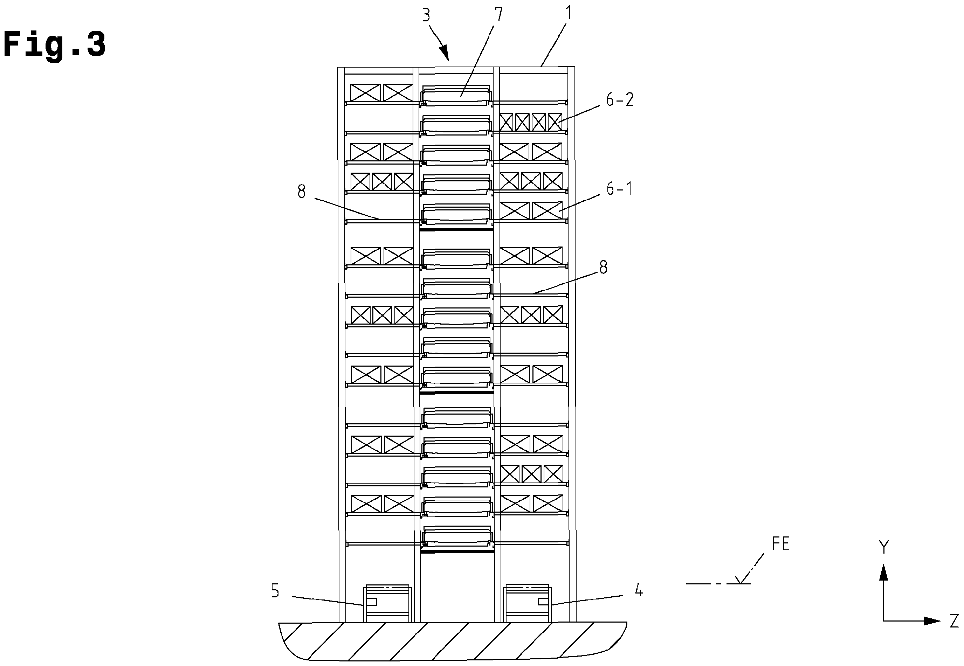

In den Fig. 1 bis 3 ist eine mögliche Ausführung eines Lagersystems gezeigt, welches parallel angeordnete Lagerregale 1, eine Stückgut-Manipulationseinheit 2, zumindest eine zwischen den Lagerregalen 1 und entlang der Stückgut-Manipulationseinheit 2 in einer x-Richtung verlaufende Regalgasse 3, eine an die Stückgut-Manipulationseinheit 2 angeschlossene Fördertechnik 4, 5 zum Antransport von Stückgütern 6-1, 6-2 und zum Abtransport von Stückgütern 6-1, 6-2 und zumindest ein Transportfahrzeug 7 zum Einlagern der Stückgüter 6-1, 6-2 in Lagerkanäle 8 bzw. Auslagern von Stückgütern 6-1, 6-2 aus den Lagerkanälen 8 umfasst. Im gezeigten Beispiel sind zwei Lagerregale 1 dargestellt. Im Rahmen der Erfindung können aber auch mehr als zwei Lagerregale 1 vorgesehen werden, wobei zwischen benachbarten Lagerregalen 1 jeweils eine Regalgasse 3 ausgebildet ist. Auch kann nur ein einziges Lagerregal 1 vorgesehen werden. Die Fördertechnik 4, 5 ist aus Gründen der besseren Übersicht in Fig. 1 nur abschnittsweise dargestellt.

Die Stückgüter 6-1, 6-2 sind Kartons (Packeinheiten) oder Ladehilfsmittel (LHM), wie Tablar oder Behälter, mittels welchen Einzelartikel oder je Ladehilfsmittel zumindest ein Karton gefördert und gelagert werden können. In den Kartons sind Einzelartikel, beispielweise aus der Textilbranche oder Lebensmittelindustrie bevorratet.

Die Lagerregale 1 können jeweils der Regalgasse 3 benachbarte, vertikale vordere Regalsteher 9 und von der Regalgasse 3 entfernte, vertikale hintere Regalsteher 10 umfassen. Die vorderen Regalsteher 9 sind mit in Richtung der Regalgasse 3 horizontal verlaufenden vorderen Längstraversen 11 und die hinteren Regalsteher 10 mit in Richtung der Regalgasse 3 horizontal verlaufenden hinteren Längstraversen 12 verbunden. Zwischen den Längstraversen 11, 12 können Querträger 13 vorgesehen werden, welche sich in Tiefenrichtung eines Lagerregales 1 (z-Richtung) erstrecken. In diesem Fall bilden die Querträger 13 obenseitig eine Lagerfläche bzw. Lagerkanäle 8 aus. Ein Stückgut 6-1, 6-2 lagert je nach Breitenabmessung auf zumindest zwei Querträgern 13.

Möglich wäre aber auch eine (nicht gezeigte) Ausführung, bei der die Lagerregale 1 jeweils vordere Regalsteher, hintere Regalsteher, an diesen befestigte vordere Längstraversen und hintere Längstraversen sowie einen je Regalebene zwischen den Längstraversen angeordneten und an diesen befestigten Lagerboden, beispielsweise eine Lagerplatte oder ein Gitter, umfassen. Der Lagerboden bildet obenseitig eine Lagerfläche aus, die sich je Regalebene in Tiefenrichtung (z-Richtung) zwischen der vorderen Längstraverse und hinteren Längstraversen erstreckt. In Längenrichtung (x-Richtung) des Lagerregales erstreckt sich die Lagerfläche je Regalebene zumindest zwischen den aufeinander folgenden vorderen Regalstehern und hinteren Regalstehern. In diesem Fall bildet der Lagerboden eine Lagerfläche bzw. Lagerkanäle 8 aus.

Somit bildet jedes Lagerregal 1 in übereinander liegenden Regalebenen (RE) jeweils nebeneinander eine Vielzahl von Lagerkanälen 8 aus, welche sich in z-Richtung zwischen den voneinander abgewandten Längsseiten des Lagerregales 1 erstrecken.

Jeder Lagerkanal 8 kann abhängig von einer Längenabmessung der Stückgüter 6-1, 6-2, welche in den Lagerkanälen 8 zwischengelagert werden, eine entsprechende Anzahl an Stückgütern 6-1, 6-2 aufnehmen. Die Längenabmessung verläuft dabei in Richtung der Längserstreckung des Lagerkanales 8, wenn das Stückgut 6-1, 6-2 im Lagerkanal 8 eingelagert wurde. Die Breitenabmessung der Stückgüter 6-1, 6-2 hingegen, wirkt sich auf die Anzahl der nebeneinander liegenden Lagerkanäle 8 aus. Die Breitenabmessung verläuft dabei quer zur Längserstreckung des Lagerkanales 8, wenn das Stückgut 6-1, 6-2 im Lagerkanal 8 eingelagert wurde. Aus Gründen der besseren Übersicht sind die Stückgüter 6-1, 6-2 in Fig. 1 aber mit gleicher Breitenabmessung eingetragen.

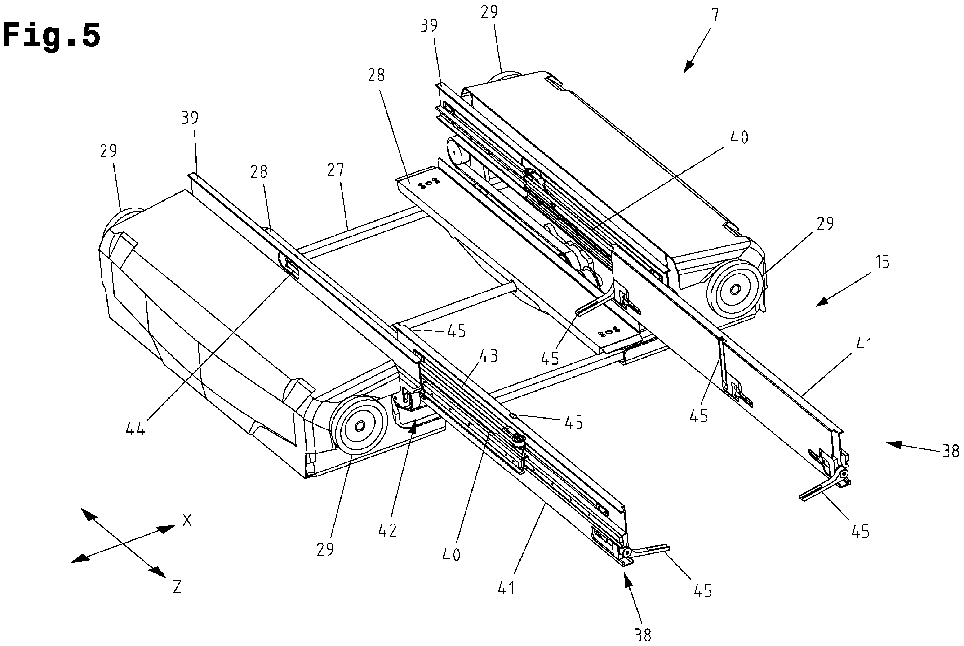

Es sei erwähnt, dass der Begriff "Lagerkanal" so zu verstehen ist, dass dieser von einer elektronischen Steuereinheit 14 "fiktiv" als Stellfläche festgelegt wird. Während die "ausnutzbare" Lagertiefe der Lagerkanäle 8 nicht variiert, kann eine Lagerbreite abhängig von der Breitenabmessung der Stückgüter 6-1, 6-2 variieren. So können über eine noch näher zu beschreibende Transportvorrichtung 15 (Fig. 5) in den Lagerkanälen 8 jeweils in Tiefenrichtung (z-Richtung) an hintereinander liegenden Tiefenpositionen Stückgüter 6-1, 6-2 in unterschiedlicher Anzahl eingelagert werden.

Das Lagersystem umfasst nach gezeigter Ausführung in übereinander liegenden (horizontalen) Fahrebenen 16 vor dem Lagerregal 1 bewegbare und von der Steuereinheit 14 unabhängig voneinander ansteuerbare Transportfahrzeuge 7 zum Einlagern der Stückgüter 6-1, 6-2 in die Lagerkanäle 8 bzw. Auslagern von Stückgütern 6-1, 6-2 aus den Lagerkanälen 8. Es kann vorgesehen werden, dass jeder Regalebene (RE) zumindest ein Transportfahrzeug 7 zugeordnet ist. Somit bedient ein Transportfahrzeug 7 über die Transportvorrichtung 15 eine Regalebene. Die Transportvorrichtung 15 kann in einer Querrichtung (z-Richtung) doppelseitig ein oder mehrere Stückgüter 6-1, 6-2 in die Lagerkanäle 8 einlagern bzw. aus den Lagerkanälen 8 auslagern. Die Fahrebenen 16 und Regalebenen (RE) liegen im gezeigten Ausführungsbeispiel im Wesentlichen auf gleicher Höhenebene, wobei die in Längsrichtung der Regalgasse 3 (x-Richtung) verlaufenden und paarweise einander gegenüberliegenden Längstraversen 11 jeweils eine Fahrebene 16 ausbilden, entlang welcher das Transportfahrzeug 7 bewegt wird. Die vorderen Längstraversen 11 bilden damit Führungsschienen für das Transportfahrzeug 7, welche mit dem Lagerregal 1 verbunden sind.

Es können aber nach einer anderen nicht gezeigten Ausführung auch weniger Transportfahrzeuge 7 als Regalebenen (RE) vorhanden sein, wenn das Transportfahrzeug 7 stockweise übereinander angeordnete Transportvorrichtungen 15 umfasst. Die Transportvorrichtungen 15 können von der Steuereinheit 14 unabhängig voneinander angesteuert werden, wovon eine erste Transportvorrichtung 15 in einer Querrichtung (z-Richtung) auf einer ersten Regalebene (RE) ein oder mehrere Stückgüter 6-1, 6-2 in einen Lagerkanal 8 einlagern bzw. aus einem Lagerkanal 8 auslagern kann und eine zweite Transportvorrichtung 15 in einer Querrichtung (z-Richtung) auf einer zweiten Regalebene (RE) ein oder mehrere Stückgüter 6-1, 6-2 in einen Lagerkanal 8 einlagern bzw. aus einem Lagerkanal 8 auslagern kann. Somit kann ein Transportfahrzeug 7 beispielweise über zwei Transportvorrichtungen 15 mehr als eine Regalebene, beispielweise zwei Regalebenen bedienen. Die Fahrebenen 16 liegen zwar nicht mehr in jeder Regalebene (RE), aber im Wesentlichen auf gleicher Höhenebene jeder zweiten Regalebene (RE), wobei die in Längsrichtung der Regalgasse 3 (x-Richtung) verlaufenden und paarweise einander gegenüberliegenden Längstraversen 11 jeweils eine Fahrebene 16 ausbilden, entlang welcher das Transportfahrzeug 7 bewegt wird.

Wird andererseits eine spezielle Hebevorrichtung eingesetzt, kann die Anzahl der Transportfahrzeuge 7 ebenso geringer sein als die Anzahl an Fahrebenen 16. Dabei können die Transportfahrzeuge 7 zwischen den Fahrebenen 16 umgesetzt werden. Eine solche Hebevorrichtung ist beispielweise aus der WO 2012/106744 A1 oder WO 2012/106745 A1 bekannt.

Die in den Fig. 1 bis 3 gezeigte Stückgut-Manipulationseinheit 2 ist zwischen einander gegenüber liegenden Stirnseiten der Lagerregale 1 angeordnet und umfasst eine erste Stückgut-Hebevorrichtung 17a, eine erste Puffervorrichtung 18a, eine zweite Stückgut-Hebevorrichtung 17b und eine zweite Puffervorrichtung 18b.

Die Stückgut-Hebevorrichtungen 17a, 17b sind ortsfest aufgestellt und umfassen jeweils eine über einen Hubantrieb 19a, 19b heb- und senkbare Transportvorrichtung 20a, 20b. Der Hubantrieb 19a, 19b umfasst einen schematisch dargestellten Antriebsmotor 21a, 21b, welcher mit der Steuereinheit 14 verbunden ist. Bevorzugt sind die Transportvorrichtungen 20a, 20b jeweils auf einem Vertikalmast gelagert. Die Transportvorrichtungen 20a, 20b umfassen jeweils eine über einen Förderantrieb 22a, 22b antreibbare Fördervorrichtung mit einer parallel zur Regalgasse 3 verlaufenden Förderrichtung, wie durch die Pfeile in Fig. 1 angedeutet. Der Förderantrieb ist mit der Steuereinheit 14 verbunden. Die Fördervorrichtungen sind beispielweise ein Rollenförderer, Gurtförderer.

Die Puffervorrichtungen 18a, 18b umfassen jeweils in Richtung der Regalgasse 3 an einer Seite der Stückgut-Hebevorrichtung 17a, 17b und in zumindest einigen der Regalebenen (RE) erste Bereitstellvorrichtungen 23 für das Zwischenpuffern eines oder mehrerer einzulagernder Stückgüter 6-1, 6-2 sowie in Richtung der Regalgasse 3 an der anderen Seite der zweiten Stückgut-Hebevorrichtung 17a, 17b und in zumindest einigen der Regalebenen (RE) zweite Bereitstellvorrichtungen 24 für das Zwischenpuffern eines oder mehrerer auszulagernder Stückgüter 6-1, 6-2. Wie gezeigt, sind die ersten Bereitstellvorrichtungen 23 und zweiten Bereitstellvorrichtungen 24 jeweils in allen Regalebenen (RE) angeordnet. Die ersten Bereitstellvorrichtungen 23 bilden einen ersten Pufferbereich, einen so genannten Einlager-Pufferbereich und die zweiten Bereitstellvorrichtungen 24 bilden einen zweiten Pufferbereich, einen so genannten Auslager-Pufferbereich, wobei jeder Stückgut-Hebevorrichtung 17a, 17b der erste und zweite Pufferbereich zugeordnet ist. Die Bereitstellvorrichtungen 23, 24 weisen nach dieser Ausführung jeweils eine über einen Förderantrieb 25a, 25b, 26a, 26b antreibbare Fördervorrichtung, beispielweise Rollenförderer, auf. Die Bereitstellfördervorrichtungen 23, 24 bilden demnach motorisch angetriebene Bereitstellfördervorrichtungen.

Wie auch aus Fig. 1 ersichtlich, verlaufen die vorderen Längstraversen 11 entlang der Lagerregale 1 und der Stückgut-Manipulationseinheit 2 (Stückgut-Hebevorrichtung 17a, 17b und Puffervorrichtungen 18a, 18b) in Längsrichtung der Regalgasse 3 (x-Richtung) und in zumindest einigen der Regalebenen (RE), bevorzugt in jeder Regalebene (RE). Die Transportfahrzeuge 7 können zum Einlagern von Stückgütern 6-1, 6-2 und Auslagern von Stückgütern 6-1, 6-2 entlang der Längstraversen 11 verfahren werden, wobei einerseits über deren Transportvorrichtung 15 auszulagernde Stückgüter 6-1, 6-2 von den Lagerkanälen 8 entnommen und auf die Bereitstellvorrichtungen 24 der Puffervorrichtung 18a oder Puffervorrichtung 18b abgeben werden können, und andererseits über deren Transportvorrichtung 15 einzulagernde Stückgüter 6-1, 6-2 von den Bereitstellvorrichtungen 23 der Puffervorrichtung 18a oder Puffervorrichtung 18b entnommen und auf Lagerkanäle 8 abgeben werden können.

Im Detail wird das Einlagern und Auslagern von Stückgütern 6-1, 6-2 mittels der Fördertechniken 4, 5, der Stückgut-Manipulationseinheit 2 und der Transportfahrzeuge 7 in der WO 2013/090970 A2 beschreiben und wird zum Gegenstand dieser Offenbarung gemacht.

Die Fördertechniken 4, 5 sind aus Gründen der besseren Übersicht in Fig. 1 nur abschnittsweise dargestellt. Die Fördertechnik 4 zum Antransport von Stückgütern 6-1, 6-2 zur Stückgut-Hebevorrichtung 17a, 17b und die Fördertechnik 5 zum Abtransport von Stückgütern 6-1, 6-2 von der Stückgut-Hebevorrichtung 17a, 17b verlaufen parallel zur Regalgasse 3 unterhalb der Lageregale 1 und bilden eine Fördertechnikebene (FE) aus.

Die heb- und senkbare Transportvorrichtung 20a, 20b kann auf Höhe der Fördertechnikebene (FE) zwischen die einander gegenüber liegenden Fördertechniken 4, 5 und auf Höhe der Regalebenen (RE) zwischen die einander gegenüber liegenden Bereitstellvorrichtungen 23, 24 positioniert werden, um einzulagernde/auszulagernde Stückgüter 6-1, 6-2 zwischen der Transportvorrichtung 20a, 20b und der jeweiligen Fördertechnik 4, 5 sowie zwischen der Transportvorrichtung 20a, 20b und der jeweiligen Bereitstellvorrichtung 23, 24 der ersten/zweiten Puffervorrichtung 18a, 18b zu fördern.

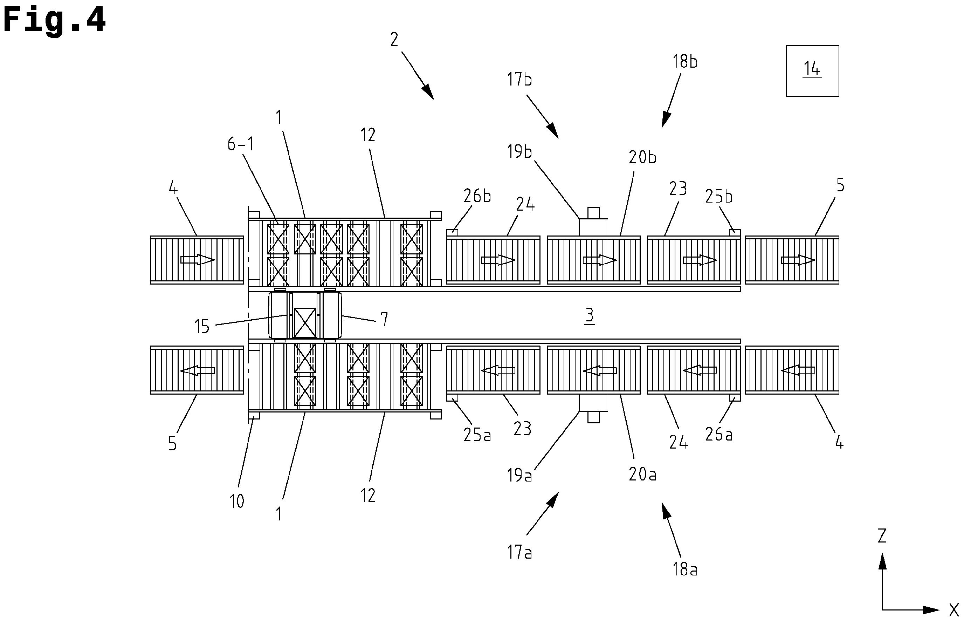

Nach einer anderen Ausführung, wie in Fig. 4 gezeigt, ist die oben beschriebene Stückgut-Manipulationseinheit 2 stirnseitig vor den Lagerregalen 1 angeordnet. Die vorderen Längstraversen 11 (Führungsschienen) verlaufen wiederum entlang der Lagerregale 1 und der Stückgut-Manipulationseinheit 2 (Stückgut-Hebevorrichtung 17a, 17b und Puffervorrichtungen 18a, 18b) in Längsrichtung der Regalgasse 3 (x-Richtung) und in zumindest einigen der Regalebenen (RE), bevorzugt in jeder Regalebene (RE). Das Einlagern und Auslagern von Stückgütern 6-1, 6-2 kann auf oben beschriebene Weise erfolgen.

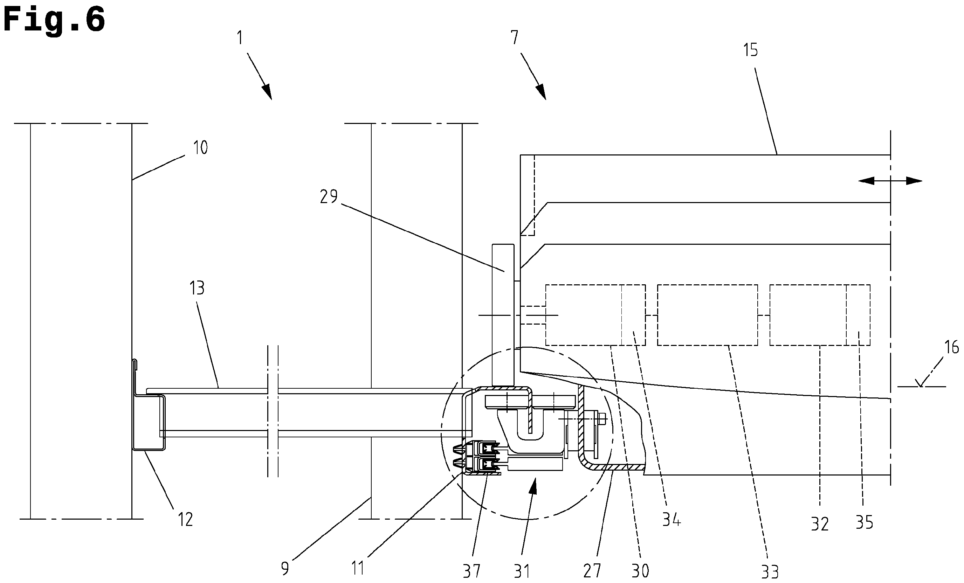

In den Fig. 5 und 6 ist eine mögliche Ausgestaltung des Transportfahrzeuges 7 gezeigt, welches als Einebenenregalbediengerät ausgebildet ist.

Das Transportfahrzeug 7 weist, wie auch im Zusammenhang mit den vorhergehenden Fig. ersichtlich, einen Grundrahmen 27, eine Aufnahmeplattform 28, Laufräder 29, einen Fahrantrieb mit zumindest einem Antriebsmotor 30 zum Antrieb mindestens eines Laufrades 29, zumindest eine Führungseinheit 31, einen Stellantrieb mit zumindest einem Antriebsmotor 32 zum Ausfahren / Einfahren der Transportvorrichtung 15, eine Steuerelektronik 33 sowie die Transportvorrichtung 15, beispielweise zur Einlagerung und Auslagerung von Stückgütern 6-1, 6-2 in ein bzw. aus einem Lagerregal 1 auf. Die Erfassung der Fahrposition des Transportfahrzeuges 7 in x-Richtung kann über eine geeignete Sensorik erfolgen. Vorzugsweise ist ein Sensor 34 vorgesehen, welcher durch einen Drehgeber gebildet und am Antriebsmotor 30 angeordnet ist. Die Erfassung des Ausfahrweges der Transportvorrichtung 15 in z-Richtung kann ebenso über eine geeignete Sensorik erfolgen. Vorzugsweise ist ein Sensor 35 vorgesehen, welcher durch einen Drehgeber gebildet und am Antriebsmotor 32 angeordnet ist.

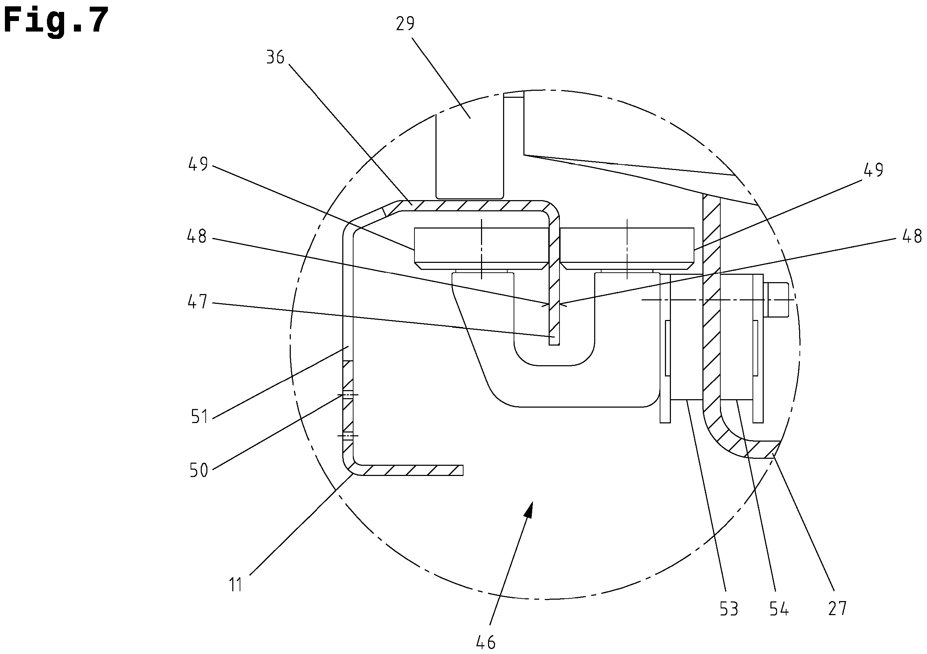

Die Laufräder 29 sind am Grundrahmen 27 (um horizontale Achse) drehbar gelagert und liegen auf einer horizontalen ersten Führung 36 (Fig. 7) abrollbar auf, wobei sich die erste Führung 36 parallel zur Längsrichtung des Lagerregales 1 und in einer parallel zur Fahrebene 16 verlaufenden ersten Führungsebene erstreckt. Die erste Führung 36 wird bevorzugt von der vorderen Längstraverse 11 ausgebildet.

Wie in Fig. 6 schematisch gezeigt, kann die Energie- und/oder Datenversorgung der Transportfahrzeuge 7, insbesondere der Antriebsmotoren 30, 32 und der Steuerelektronik 33 über eine Schleifleitungsanordnung 37 erfolgen, welche je Fahrebene 16 an je einer der vorderen Längstraversen 11 (Führungsschienen) befestigt ist und sich über die gesamte Länge der Längstraverse 11 erstreckt. Das Transportfahrzeug 7 umfasst Stromabnehmer und kontaktiert damit Schleifleitungen der Schleifleitungsanordnung 37 zur Energie- und/oder Datenversorgung.

Die Transportvorrichtung 15 (Lastaufnahmevorrichtung), wie sie in Fig. 5 näher dargestellt ist, kann parallel zueinander auf dem Tragrahmen 27 angeordnete und aus einer Ausgangsstellung nach beiden Richtung synchron ausfahrbare Teleskopiereinheiten 38 umfassen, sodass in die zu beiden Seiten des Transportfahrzeuges 7 angeordneten Lagerregale 1 Stückgüter 6-1, 6-2 eingelagert bzw. Stückgüter 6-1, 6-2 ausgelagert werden können.

Die Teleskopiereinheiten 38 weisen jeweils einen Grundrahmen 39 und relativ gegenüber dem Grundrahmen 39 horizontal in einer Richtung (z-Richtung) ein- bzw. ausfahrbare Schlitten 40, 41 auf. Die Teleskopiereinheiten 38 bilden Teleskoparme. Der erste Schlitten 40 ist über eine Führungsanordnung am Grundrahmen 39 verschiebbar gelagert und der zweite Schlitten 41 ist über eine Führungsanordnung am ersten Schlitten 40 verschiebbar gelagert. Der erste Schlitten 40 kann mit Hilfe einer schematisch dargestellten Antriebsvorrichtung 42 relativ gegenüber dem Grundrahmen 39, beispielweise einer Zahnriemen- und Zahnleistenanordnung gegenüber dem Grundrahmen 39 bewegt werden. Wie in Fig. 5 weiters ersichtlich, ist ein erster Riemen 43 um eine am ersten Schlitten 40 gelagerte (vordere) erste Rolle umgelenkt und mit seinem ersten Ende am Grundrahmen 39 und mit seinem zweiten Ende am zweiten Schlitten 41 befestigt. Ein zweiter Riemen 44 ist um eine am ersten Schlitten 40 gelagerte (hintere) zweite Rolle umgelenkt und mit seinem ersten Ende am Grundrahmen 39 und mit seinem zweiten Ende am zweiten Schlitten 41 befestigt. Wird der erste Schlitten 40 durch die Antriebsvorrichtung 42 bewegt, so wird auch der zweite Schlitten 41 über die Riemen 43, 44 mitbewegt, also entweder ein- bzw. ausgefahren.

Die zweiten Schlitten 41 umfassen jeweils Transportorgane 45 zum Transport von Stückgütern 6-1, 6-2 zwischen dem Lagerkanal 8 und dem Transportfahrzeug 7. Die äußeren Transportorgane 45 sind in den gegenüber liegenden Endbereichen des zweiten Schlittens 41 und das innere Transportorgan 45 ist mittig zwischen den äußeren Transportorganen 45 angeordnet, wobei jedes Transportorgan 45 mit einem elektrischen Antriebsmotor gekuppelt ist und über diesen zwischen einer Ausgangsstellung und Betätigungsstellung bewegbar sind.

Wie in Fig. 5 auch ersichtlich, kann die Aufnahmeplattform durch in z-Richtung verlaufende Stückgutauflagen 28 gebildet sein. Auf der Aufnahmeplattform 28 können ein einziges Stückgut 6-1 mit der ersten Längenabmessung oder auch mehrere Stückgüter 6-2 mit der zweiten Längenabmessung transportiert werden. Andererseits ist es auch in einer nicht gezeigten Ausführung möglich, dass die Aufnahmeplattform eine motorisierte Fördervorrichtung umfasst, welche eine parallel zur z-Richtung verlaufende Förderrichtung aufweist. Die Fördervorrichtung ist beispielweise ein Gurtförderer oder Rollenförderer, welche im Wesentlichen mit der Stellgeschwindigkeit der Teleskopeinheiten synchronisiert betrieben wird.

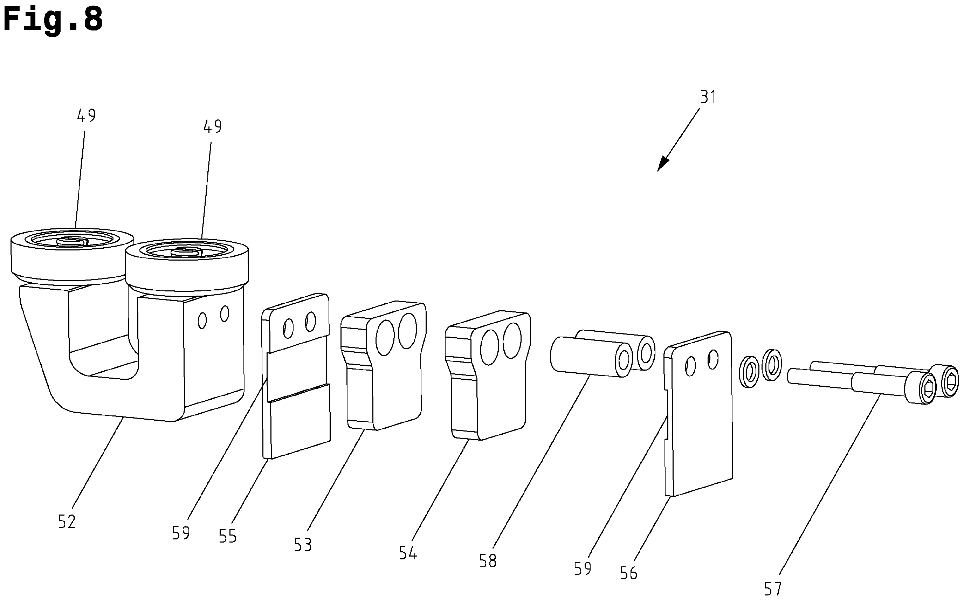

In den Fig. 7 und 8 ist eine erste Ausführung der Führungseinheit 31 gezeigt, welche über eine Lagervorrichtung 46 am Grundrahmen 27 des Transportfahrzeuges 7 montiert ist. Diese umfasst auf einer vertikalen zweiten Führung 47 an voneinander abgewandten und parallel verlaufenden Führungsabschnitten 48 abrollbar anliegende Führungsräder 49, wobei die Führungsräder 49 an der Lagervorrichtung 46 (um vertikale Achse) drehbar gelagert sind. Die zweite Führung 47 erstreckt sich parallel zur Längsrichtung des Lagerregales 1 und in einer im Wesentlichen senkrecht zur Fahrebene 16 verlaufenden zweiten Führungsebene. Das Transportfahrzeug 7 kann auf der Fahrbewegung entlang des Lagerregales 1 über die Führungseinheit 31 quer, insbesondere in senkrechter zur zweiten Führungsebene geführt bewegt werden. Die zweite Führung 47 wird bevorzugt von der vorderen Längstraverse 11 ausgebildet. Sind die Führungsschienen (Längstraversen 11) je Fahrebene 16 paarweise angeordnet, so weist eine der Führungsschienen je Fahrebene 16 die erste Führung 36 und/oder zweite Führung 47 auf.

Demnach umfasst die vordere Längstraverse 11 sowohl die erste Führung 36 als auch die zweite Führung 47. Es ist aber im Rahmen der Erfindung auch möglich, dass die erste Führung 36 und die zweite Führung 47 getrennt ausgebildet und an unterschiedlichen Längstraversen vorgesehen sind.

Im Detail umfasst die vordere Längstraverse 11 einen ersten Führungsschenkel, einen zweiten Führungsschenkel, einen Montageschenkel und einen Profilschenkel. Der Montageschenkel ist durch einen vertikalen unteren Profilschenkel und einen von diesem in Richtung zum ersten Führungsschenkel abgewinkelten oberen Profilschenkel gebildet. Der erste Führungsschenkel bildet die horizontale erste Führung 36 bzw. horizontale Lauffläche aus, an welcher die Laufräder 29 abrollbar anliegen. Der zweite Führungsschenkel bildet die einander gegenüberliegenden vertikalen Führungsabschnitte 48 bzw. vertikalen Führungsflächen aus, an welchen die Führungsräder 49 abrollbar anliegen. Der Montageschenkel bildet in Längsrichtung der Längstraverse 11 in einem Rasterabstand angeordnete Montagebohrungen 50 zur Befestigung der vordere Längstraverse 11 an dem Lagerregal 1 bzw. den vorderen Stehern 9 aus. Wie auch in Fig. 7 schematisch eingetragen, bildet die vordere Längstraverse 11 vom abgewinkelten oberen Profilschenkel bis in den vertikalen unteren Profilschenkel schlitzförmige Ausnehmungen 51 aus, in welche die Querträger 13 des Lageregales 1 einhängbar bzw. einhakbar sind. Die schlitzförmigen Ausnehmungen 51 sind in regelmäßigen Abständen entlang der Längstraversen 11 angeordnet.

In Fig. 8 ist die Führungseinheit 31 mit ihrer Lagervorrichtung 46 im Detail ersichtlich. Die Lagervorrichtung 46 weist nach gezeigter Ausführung einen starren Lagerkörper 52, ein elastisch nachgiebiges erstes Ausgleichselement 53 und ein elastisch nachgiebiges zweites Ausgleichselement 54 auf. Die Führungsräder 49 sind in einem fixen Abstand (um vertikale Achsen) drehbar am Lagerkörper 52 gelagert. Der Lagerkörper 52 ist bevorzugt U-förmig ausgebildet, wobei die Führungsräder 49 an den von einer Basis vorragenden Lagerschenkeln gelagert sind. Die Ausgleichselemente 53, 54 sind zu beiden Seiten des Grundrahmens 27 angeordnet, wie in Fig. 7 ersichtlich, wobei das erste Ausgleichselement 53 zwischen dem Grundrahmen 27 und dem Lagerkörper 52 angeordnet ist. Zusätzlich kann zwischen dem ersten Ausgleichselement 53 und dem Lagerkörper 52 eine erste Anschlagplatte 55 angeordnet werden, welche im Montagezustand gegen den Lagerkörper 52 anliegt. Das zweite Ausgleichselement 54 ist zwischen dem Grundrahmen 27 und einer zweiten Anschlagplatte 56 angeordnet.

Das erste Ausgleichselement 53 und zweite Ausgleichselement 54 sind jeweils durch ein Federelement, insbesondere eine Ausgleichsplatte bzw. Dämpfungsplatte aus Kunststoff, insbesondere Elastomer, wie Polyurethan Elastomer, oder Gummi gebildet. Der Lagerkörper 52 mit den Führungsrädern 49 ist relativ zum Grundrahmen 27 beweglich.

Der Lagerkörper 52, die Ausgleichselemente 53, 54, die Anschlagplatten 55, 56 sind über ein Befestigungselement 57, beispielweise Schrauben, mit dem Grundrahmen 27 verbunden. Der Lagerkörper 52 weist hierzu Gewindebohrungen und die Ausgleichselemente 53, 54 und Anschlagplatten 55, 56 Durchgangsbohrungen auf. Die Anschlagplatten 55, 56 können über Distanzhülsen 58 in einem Abstand gehalten werden. Der Abstand ist dabei so bemessen, dass die Ausgleichselemente 53, 54 jeweils zwischen den Anschlagplatten 55, 56 und dem Grundrahmen 27 vorgespannt sind, wenn die Führungseinheit 31 am Grundrahmen 27 montiert ist.

Zusätzlich können die Anschlagplatten 55, 56 jeweils an ihrer dem Ausgleichselement 53, 54 zugewandten Innenseite eine Ausnehmung 59 ausbilden, in welche bei einer elastischen Verformung der Ausgleichselemente 53, 54 Material "ausweichen" kann.

Es besteht nunmehr die Möglichkeit, dass die durch Unebenheiten an der ersten Führung 36 und/oder zweiten Führung 47 und/oder an einem Verbindungsstoß zwischen miteinander verbundenen Längstraversen 11 (Führungsschienen) vorhandenen Führungsungenauigkeiten von der Lagervorrichtung 46 weitestgehend oder vollständig ausgeglichen und Schwingungen am / im Lagerregal 1 vermieden werden, wenn das Transportfahrzeug 7 entlang der Längstraverse 11 verfährt. Mit anderen Worten kann das Transportfahrzeug 7 trotz Zwangsführung in z-Richtung Führungsungenauigkeiten kompensieren, wodurch Schwingungen am Führungskörper 52 unmittelbar von den elastisch nachgiebigen Ausgleichselementen 53, 54 gedämpft werden. Die Lagerregale 1 können "dünnwandig" und somit kostengünstig gestaltet werden.

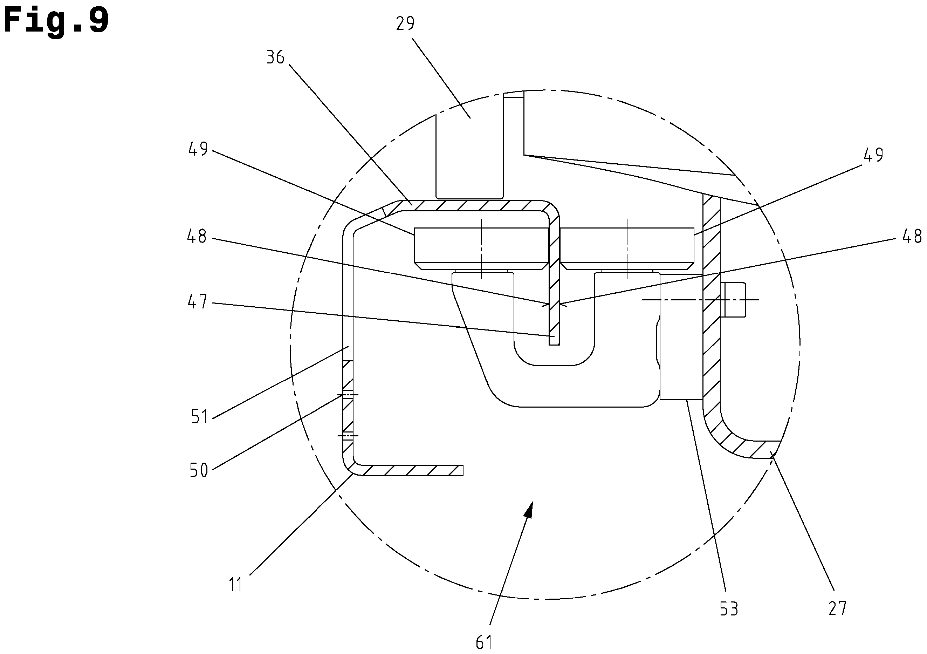

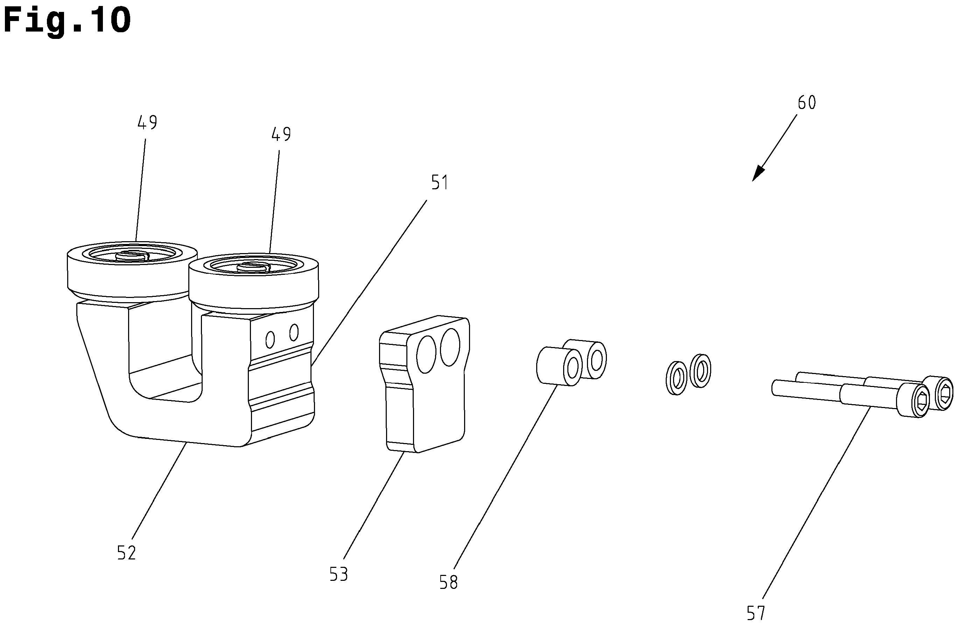

In den Fig. 9 und 10 ist eine zweite Ausführung für eine Führungseinheit 60 gezeigt, welche über eine Lagervorrichtung 61 am Grundrahmen 27 des Transportfahrzeuges 7 montiert ist. Diese umfasst auf einer oben beschriebenen zweiten Führung 47 an voneinander abgewandten und parallel verlaufenden Führungsabschnitten 48 abrollbar anliegende Führungsräder 49, wobei die Führungsräder 49 an der Lagervorrichtung 61 (um vertikale Achse) drehbar gelagert sind.

Die Lagervorrichtung 61 weist nach gezeigter Ausführung den starren Lagerkörper 52 und ein einziges elastisch nachgiebiges Ausgleichselement 53 auf. Die Führungsräder 49 sind in einem fixen Abstand (um vertikale Achsen) drehbar am Lagerkörper 52 gelagert. Der Lagerkörper 52 ist bevorzugt U-förmig ausgebildet, wobei die Führungsräder 49 an den von einer Basis vorragenden Lagerschenkeln gelagert sind. Das Ausgleichselement 53 ist auf einer Seite des Grundrahmens 27 angeordnet, bevorzugt zwischen dem Grundrahmen 27 und dem Lagerkörper 52, wie in Fig. 9 eingetragen. Das Ausgleichselement 53 ist durch ein Federelement, insbesondere eine Ausgleichsplatte bzw. Dämpfungsplatte aus Kunststoff, insbesondere Elastomer, wie Polyurethan Elastomer, oder Gummi gebildet. Der Lagerkörper 52 mit den Führungsrädern 49 ist relativ zum Grundrahmen 27 beweglich.

Der Lagerkörper 52 und das Ausgleichselement 53 sind über ein Befestigungselement 57, beispielweise Schrauben, mit dem Grundrahmen 27 verbunden. Der Lagerkörper 52 weist hierzu Gewindebohrungen und das Ausgleichselement 53 Durchgangsbohrungen auf. Der Lagerkörper 52 und der Grundrahmen 27 können über Distanzhülsen 58 in einem Abstand gehalten werden. Der Abstand ist dabei so bemessen, dass das Ausgleichselement 53 zwischen dem Lagerkörper 52 und dem Grundrahmen 27 vorgespannt ist, wenn die Führungseinheit 60 am Grundrahmen 27 montiert ist.

Zusätzlich kann der Lagerkörper 52 an seiner dem Ausgleichselement 53 zugewandten Innenseite eine Ausnehmung 51 ausbilden, in welche bei einer elastischen Verformung das Ausgleichselement 53 Material "ausweichen" kann.

Auch nach dieser Ausführung kann das Transportfahrzeug 7 trotz Zwangsführung in z-Richtung Führungsungenauigkeiten kompensieren, wodurch Schwingungen am Führungskörper 52 unmittelbar vom elastisch nachgiebigen Ausgleichselement 53 gedämpft werden.

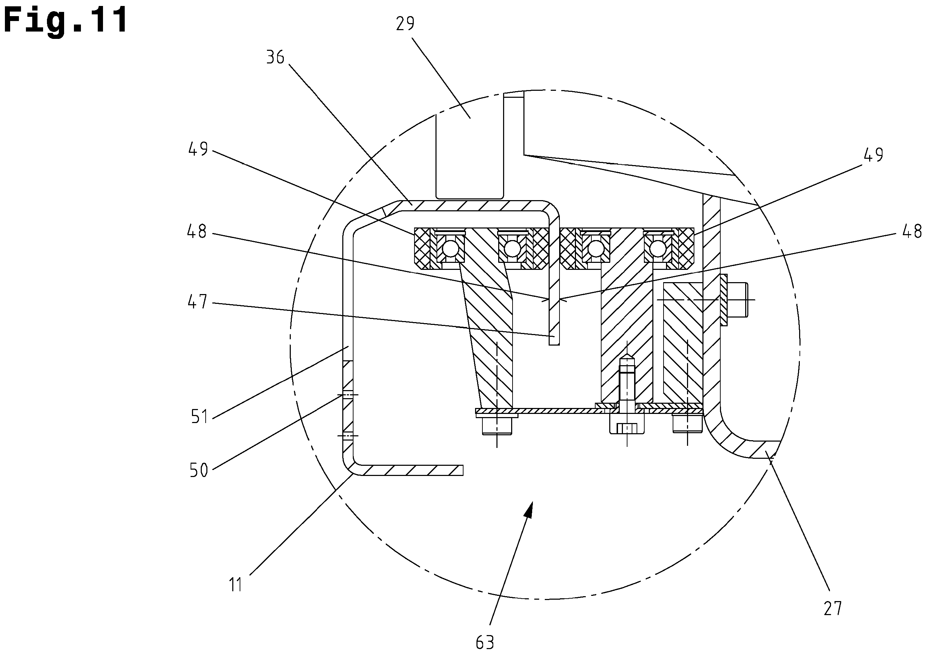

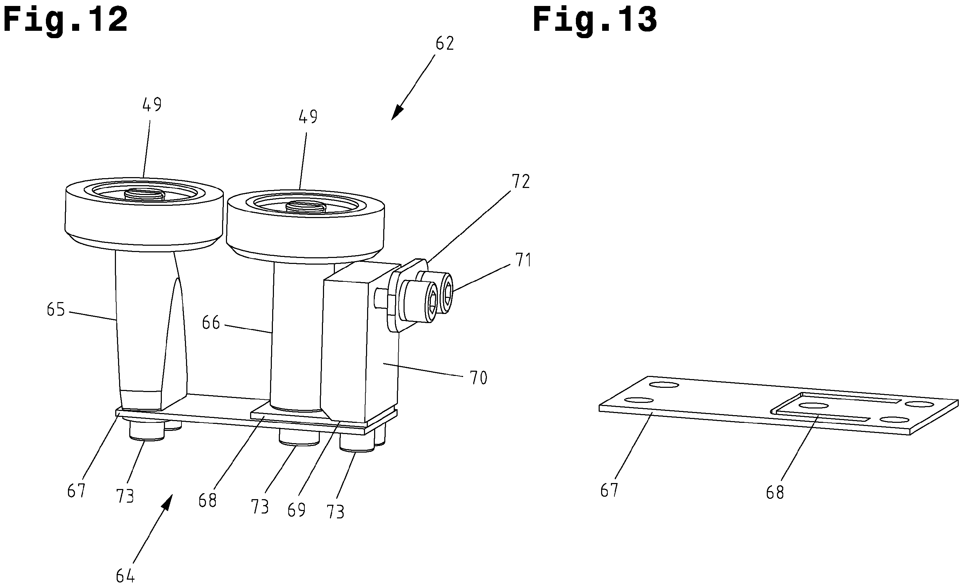

In den Fig. 11 und 12 ist eine dritte Ausführung für eine Führungseinheit 62 gezeigt, welche über eine Lagervorrichtung 63 am Grundrahmen 27 des Transportfahrzeuges 7 im Wesentlichen starr montiert ist. Diese umfasst auf einer oben beschriebenen zweiten Führung 47 an voneinander abgewandten und parallel verlaufenden Führungsabschnitten 48 abrollbar anliegende Führungsräder 49.

Die Lagervorrichtung 63 weist einen Lagerkörper 64 mit einem ersten Lagerarm 65 und einen zweiten Lagerarm 66, ein elastisch nachgiebiges erstes Ausgleichselement 67 und ein elastisch nachgiebiges zweites Ausgleichselement 68 auf. Wie auch ersichtlich, ist das erste Ausgleichselement 67 länger als das zweite Ausgleichselement 68 und sind übereinander angeordnet.

Die Ausgleichselemente 67, 68 sind jeweils als Blattfeder, insbesondere aus Federstahl gestaltet und sind an einer Montagestelle 69 einseitig eingespannt. Der erste Lagerarm 65 ist mit dem ersten Ausgleichselement 67 und der zweite Lagerarm 66 ist mit dem zweiten Ausgleichselement 68 verbunden, insbesondere mittels eines Befestigungsmittels 73, wie beispielweise Schrauben. Die Lagerarme 65, 66 sind jeweils mit ihrem unteren Ende in einem von der Montagestelle 69 frei vorragenden Endabschnitt am Ausgleichselement 67, 68 biegesteif (starr) montiert, insbesondere mittels eines Befestigungsmittels 73, wie beispielweise Schrauben. Das erste Führungsrad 49 ist am oberen Ende des ersten Lagerarmes 65 (um eine vertikale Achse) drehbar gelagert. Das zweite Führungsrad 49 ist am oberen Ende des zweiten Lagerarmes 66 (um eine vertikale Achse) drehbar gelagert. Das erste Ausgleichselement 67 kann auch eine erste Durchgangsbohrung aufweisen, in welcher das Befestigungsmittel 73, wie beispielweise ein Schrauben mit einer abgestuften Distanzscheibe, positioniert werden kann, wie in Fig. 11 ersichtlich. Ebenso kann das zweite Ausgleichselement 67 eine zweite Durchgangsbohrung aufweisen, in welcher das Befestigungsmittel 73, wie beispielweise ein Schrauben mit einer abgestuften Distanzscheibe, positioniert werden kann, wie in Fig. 11 ersichtlich. Die Durchgangsbohrungen sind dabei konzentrisch zu einer Längsachse der Schraube angeordnet.

Die Montagestelle 69 umfasst einen Montageblock 70, welcher gegen eine der Lagervorrichtung 63 zugewandte Außenseite des Grundrahmens 27 anliegt, wenn die Lagervorrichtung 63 mittels eines Befestigungselements 71, beispielweise Schrauben, am Grundrahmen 27 montiert ist, wie in Fig. 11 ersichtlich. Zusätzlich kann eine Montageplatte 72 vorgesehen werden, welche gegen eine der Lagervorrichtung 63 abgewandte Innenseite des Grundrahmens 27 anliegt, wenn die Lagervorrichtung 63 mittels des Befestigungselements 71 am Grundrahmen 27 montiert ist. Der Montageblock 70 weist hierzu Gewindebohrungen und die Montageplatte 72 Durchgangsbohrungen auf. Die Ausgleichselemente 67, 68 sind mit dem Montageblock 70 biegesteif (starr) verbunden, insbesondere mittels eines Befestigungsmittels 73, wie beispielweise Schrauben.

Die durch Unebenheiten an der ersten Führung 36 und/oder zweiten Führung 47 und/oder an einem Verbindungsstoß zwischen miteinander verbundenen Längstraversen 11 (Führungsschienen) vorhandenen Führungsungenauigkeiten werden von der Lagervorrichtung 63 weitestgehend oder vollständig ausgeglichen und Schwingungen am / im Lagerregal 1 vermieden, wenn das Transportfahrzeug 7 entlang der Längstraverse 11 verfährt. Hierzu sind die Führungsräder 49 relativ zum Grundrahmen 27 beweglich. Das erste Führungsrad 49 und zweite Führungsrad 49 können sich auch relativ zueinander bewegen, sodass auch ein Abstand zwischen den Führungsrädern 49 in begrenztem Maße veränderbar ist, wenn das Transportfahrzeug 7 entlang der Längstraverse 11 verfährt und Führungsungenauigkeiten vorhanden sind.

Fig. 13 zeigt eine Blattfeder wie sie in der dritten Ausführung verwendet werden kann. Diese Blattfeder bildet sowohl das elastisch nachgiebige erste Ausgleichselement 67 und das elastisch nachgiebige zweite Ausgleichselement 68 aus. Die Ausgleichselemente 67, 68 verlaufen dabei in einer Ebene, während nach der Ausführung gemäß Fig. 11 die Ausgleichselemente 67, 68 in übereinander liegenden parallelen Ebenen verlaufen. Die Blattfeder ist ein spanlos geformter Blechteil, insbesondere Federstahl, in welchen durch eine Freistellung im Blechteil das zweite Ausgleichselement 68 hergestellt wird. Die Befestigung des ersten Lagerarmes 65 am ersten Ausgleichselement 67 und zweiten Lagerarmes 66 am zweiten Ausgleichselement 68 erfolgt wiederum mittels eines Befestigungsmittels, insbesondere Schrauben. Die (einzige) Blattfeder ist an der Montagestelle 69 einseitig eingespannt, wie oben beschrieben.

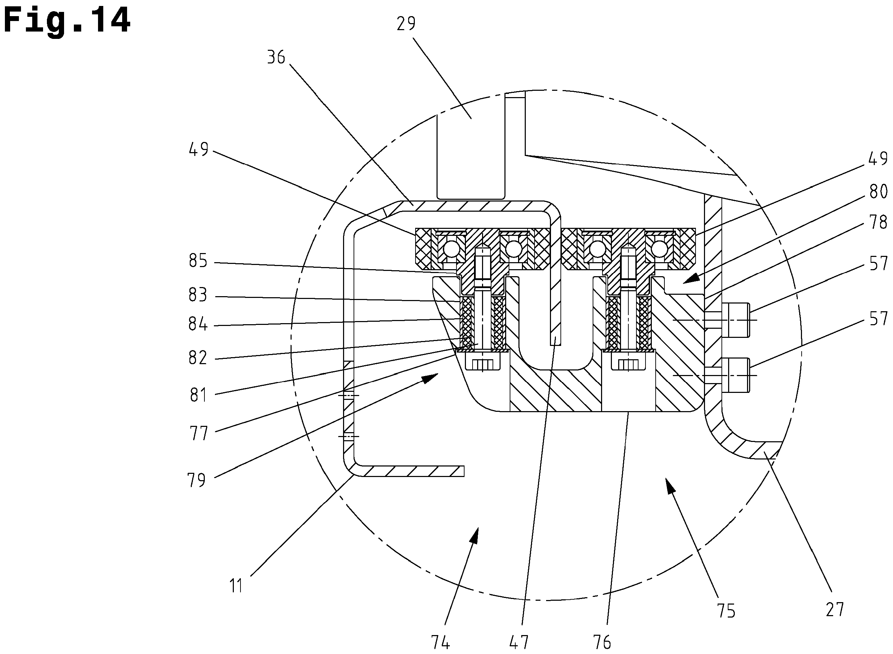

In der Fig. 14 ist eine vierte Ausführung für eine Führungseinheit 74 gezeigt, welche über eine Lagervorrichtung 75 am Grundrahmen 27 des Transportfahrzeuges 7 im Wesentlichen starr montiert ist. Diese umfasst auf einer oben beschriebenen zweiten Führung 47 an voneinander abgewandten und parallel verlaufenden Führungsabschnitten 48 abrollbar anliegende Führungsräder 49.

Die Lagervorrichtung 75 weist einen Lagerkörper 76 mit einem ersten Lagerarm 77 und einen zweiten Lagerarm 78, ein elastisch nachgiebiges erstes Ausgleichselement 79 und ein elastisch nachgiebiges zweites Ausgleichselement 80 auf. Der Lagerkörper 76 ist mittels eines Befestigungselementes 57, beispielweise Schrauben, mit dem Grundrahmen 27 biegesteif (starr) verbunden. Der Lagerkörper 52 weist hierzu Gewindebohrungen auf. Das erste Führungsrad 49 ist mit seiner Radachse 81 über das elastisch nachgiebige erste Ausgleichselement 79 am ersten Lagerarm 77 und das zweite Führungsrad 49 ist mit seiner Radachse 81 über das elastisch nachgiebige zweite Ausgleichselement 80 am zweiten Lagerarm 78 gelagert, sodass die Führungsräder 49 relativ zum Lagerkörper 76 bzw. relativ zum Grundrahmen 27 beweglich sind.

In der gezeigten Ausführung kann das erste Ausgleichselement 79 eine Lagerhülse 82, eine Innenhülse 83 und einen zwischen der Lagerhülse 82 und Innenhülse 83 angeordneten Elastomerring 84 bzw. Gummiring umfassen, wobei die Lagerhülse 82 eine Bohrung ausbildet, in welcher die Radachse 81 (Lagerachse) des Führungsrades 49 eingesteckt ist. Die Lagerhülse 82 und Innenhülse 83 sind bevorzugt metallische Tiefziehteile. Die Radachse 81 ist ein Lagerbolzen, welcher einen Lagerabschnitt und einen Gewindeabschnitt ausbildet. Der Lagerabschnitt dient der Lagerung des ersten Ausgleichselementes 79, insbesondere der Lagerhülse 82. Der Gewindeabschnitt dient der Befestigung des Führungsrades 49. Das Führungsrad 49 weist hierzu einen Lagerbund 85 auf, welcher mit einer Gewindebohrung versehen ist. Der Lagerbund 85 ist in einer Freistellung in den Lagerarmen 77, 78 teilweise aufgenommen. Gleichermaßen ist auch das zweite Ausgleichselement 80 aufgebaut und angeordnet. Das Ausgleichselement 79, 80 bildet ein Gummilager, welches in einer Bohrung im ersten Lagerarm 77 bzw. zweiten Lagerarm 78 eingepresst ist.

In einer anderen nicht gezeigten Ausführung, wäre es auch möglich, dass das erste Ausgleichselement 79 zwischen dem Lagerbund 85 und der Lagerung des ersten Führungsrades 49 bzw. das zweite Ausgleichselement 80 zwischen dem Lagerbund 85 und der Lagerung des zweiten Führungsrades 49 angeordnet sind.

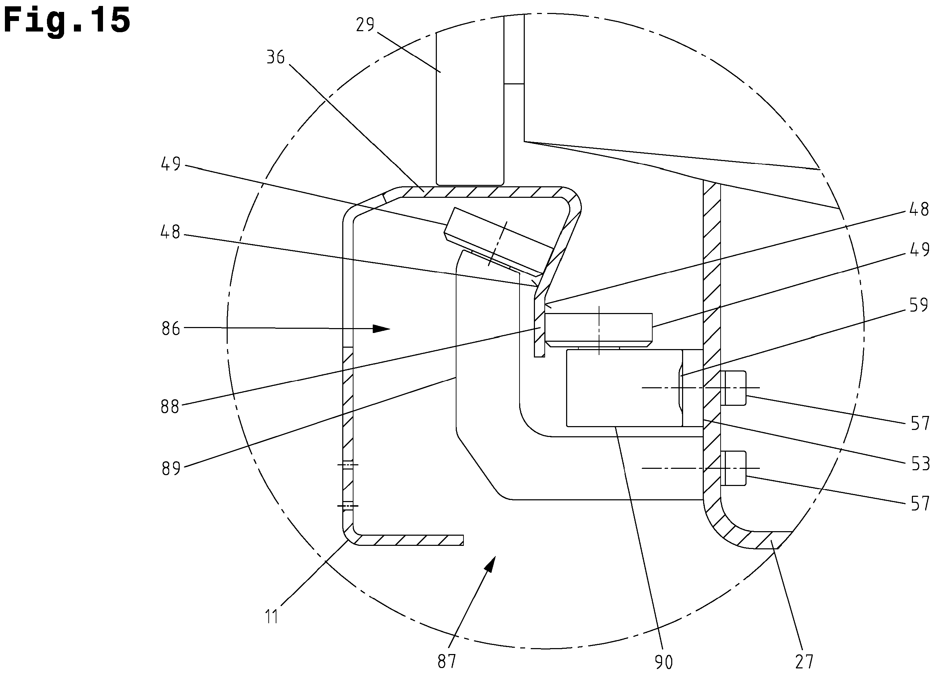

In der Fig. 15 ist eine fünfte Ausführung für eine Führungseinheit 86 gezeigt, welche über eine Lagervorrichtung 87 am Grundrahmen 27 des Transportfahrzeuges 7 montiert ist. Diese umfasst auf einer oben beschriebenen zweiten Führung 47 an voneinander abgewandten Führungsabschnitten 48 abrollbar anliegende Führungsräder 49. Im Unterschied zu den obigen Figuren verlaufen die Führungsabschnitte 48 der zweiten Führung 47 nicht parallel zueinander, sondern verlaufen geneigt zueinander und schließen einen Winkel ein.

Die Lagervorrichtung 87 weist nach gezeigter Ausführung einen starren ersten Lagerkörper 89, einen starren zweiten Lagerkörper 90 und ein elastisch nachgiebiges Ausgleichselement 53 auf, wobei die Lagerkörper 89, 90 voneinander getrennt ausgebildet sind.

Der erste Lagerkörper 89 ist L-förmig gestaltet und mit seinem ersten Endabschnitt über ein Befestigungselement 57, insbesondere Schrauben, mit dem Grundrahmen 27 fest verbunden. Am zweiten Endabschnitt ist das erste Führungsrad 49 (um eine geneigte Achse) drehbar gelagert. Somit ist der Abstand zwischen dem ersten Führungsrad 49 und dem Grundrahmen 27 unveränderbar.

Der zweite Lagerkörper 90 ist quaderförmig gestaltet und ist das zweite Führungsrad 49 (um eine vertikale Achse) drehbar gelagert. Wie in der Fig. ersichtlich, ist zwischen dem zweite Lagerkörper 90 und dem Grundrahmen 27 das Ausgleichselement 53 angeordnet. Dieses Ausgleichselement 53 ist wiederum durch ein Federelement, insbesondere eine Ausgleichsplatte bzw. Dämpfungsplatte aus Kunststoff, insbesondere Elastomer, wie Polyurethan Elastomer, oder Gummi gebildet. Somit ist der zweite Lagerkörper 90 mit dem zweiten Führungsrad 49 relativ zum Grundrahmen 27 beweglich.

Der zweite Lagerkörper 90 und das Ausgleichselement 53 sind über ein Befestigungselement 57, beispielweise Schrauben, mit dem Grundrahmen 27 verbunden. Der zweite Lagerkörper 90 weist hierzu Gewindebohrungen und das Ausgleichselement 53 Durchgangsbohrungen auf. Im zweite Lagerkörper 90 kann auch wiederum die oben beschriebene Ausnehmung 59 angebracht werden.

Es sei noch erwähnt, dass die Führungsräder 49, wie sie beispielhaft in Fig. 11 näher gezeigt sind, jeweils eine Lagerung (Wälzlager), eine Radnabe und einen elastisch nachgiebigen Laufbelag, insbesondere aus Kunststoff, wie Polyurethan, aufweisen. Der Laufbelag ist aufgrund seiner elastischen Eigenschaft grundsätzlich dazu geeignet Unebenheiten in begrenztem Ausmaß auszugleichen, jedoch darf der Laufbelag nicht zu weich sein, da ansonsten der Verschleiß zu hoch wäre. Es hat sich nun in der Praxis gezeigt, dass die Kombination von Führungsrädern 49 mit einem elastisch nachgiebigen Laufbelag und der Anordnung von zumindest einem elastisch nachgiebigen Ausgleichelement 53; 54; 67, 68; 79, 80 hervorragende Dämpfungseigenschaften erreicht werden, sodass Unebenheiten an der ersten Führung 36 bzw. zweiten Führung 47; 88 keine Auswirkung auf die Laufruhe des Transportfahrzeuges 7 haben. Der Kunststoff des Laufbelages des ersten Führungsrades 49 und/oder zweiten Führungsrades 49 ist mit einer Härte im Bereich von 70 Shore A bis 100 Shore A, insbesondere 93 Shore A (DIN 53505) ausgeführt, sodass eine präzise Führung erreicht wird. Das Ausgleichselement 53; 54; 67, 68; 79, 80 ist mit einer Härte im Bereich von 30 Shore A bis 50 Shore A (DIN 53505) ausgeführt, sodass eine ausreichend präzise Führung und im Verhältnis zum Führungsrad 49 eine hohe Dämpfungswirkung erreicht wird.

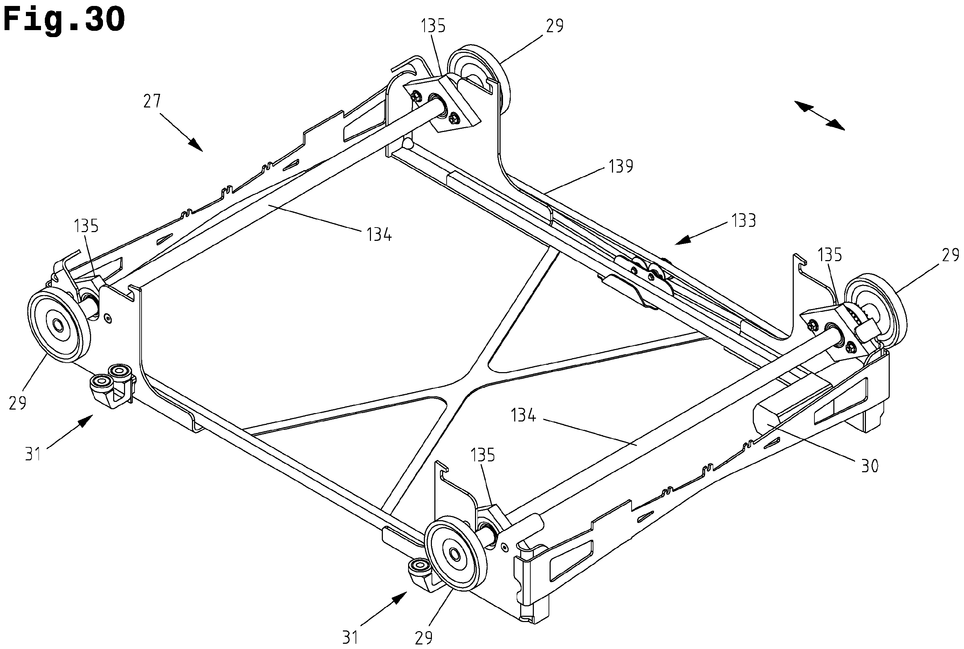

Ferner sei erwähnt, dass das Transportfahrzeug 7 auf einer Fahrzeugseite auch mit zwei Führungseinheiten 31; 60; 62; 74; 86, wie oben beschrieben, ausgestattet werden kann. Dies ist in Fig. 30 ersichtlich.

Wie sich aus dem oben Beschriebenen zeigt, werden die durch Unebenheiten an der zweiten Führung und/oder an einem Verbindungsstoß zwischen miteinander verbundenen Führungen vorhandenen Führungsungenauigkeiten mittels des Ausgleichselementes kompensiert, so dass selbst bei hohen Fahrgeschwindigkeiten der Transportfahrzeuge 7 (Stückgutaufnahmevorrichtungen) kaum Schwingungen am / im Lagerregal 1 angeregt werden.

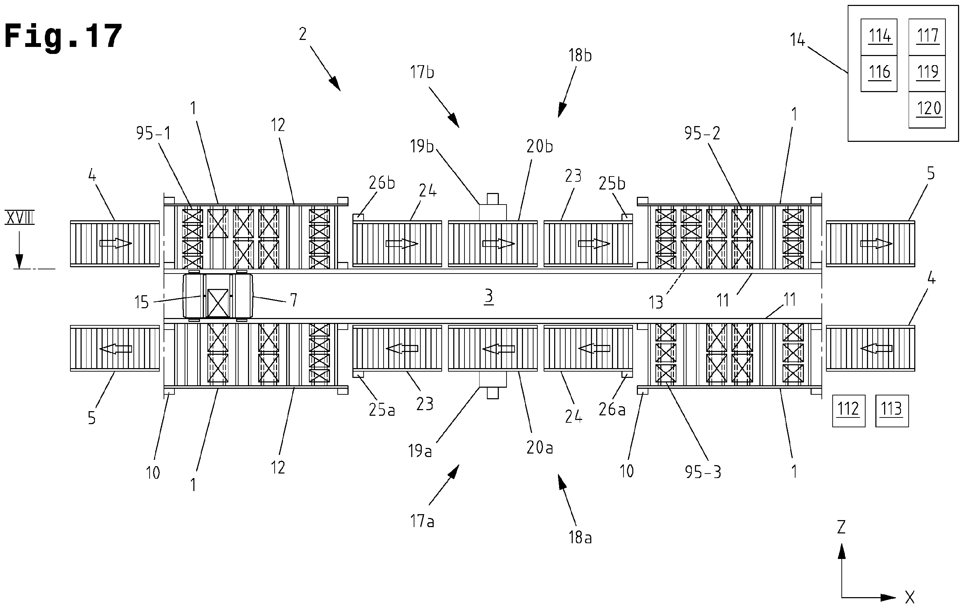

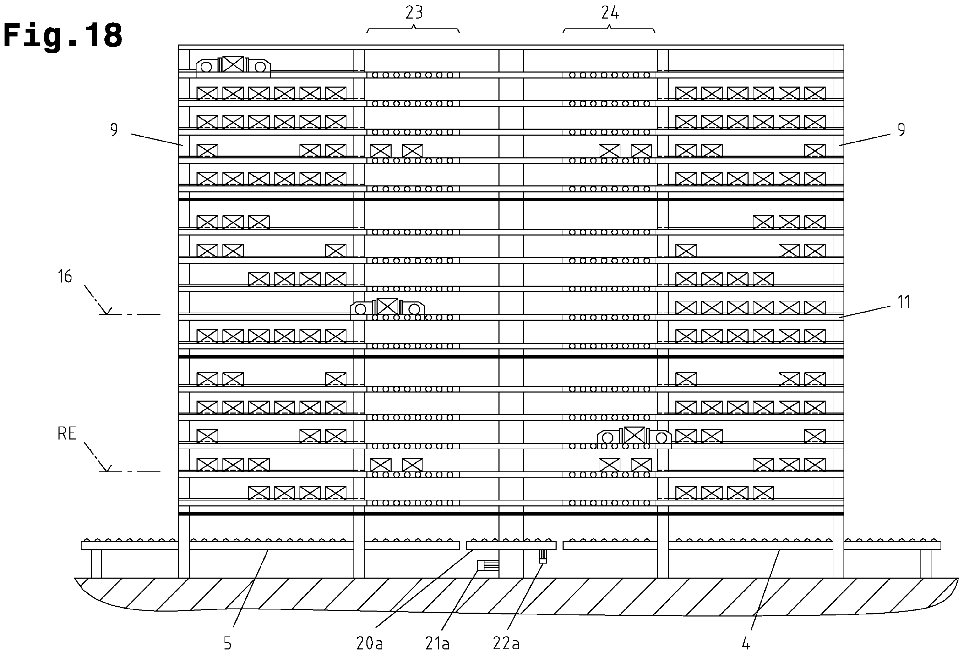

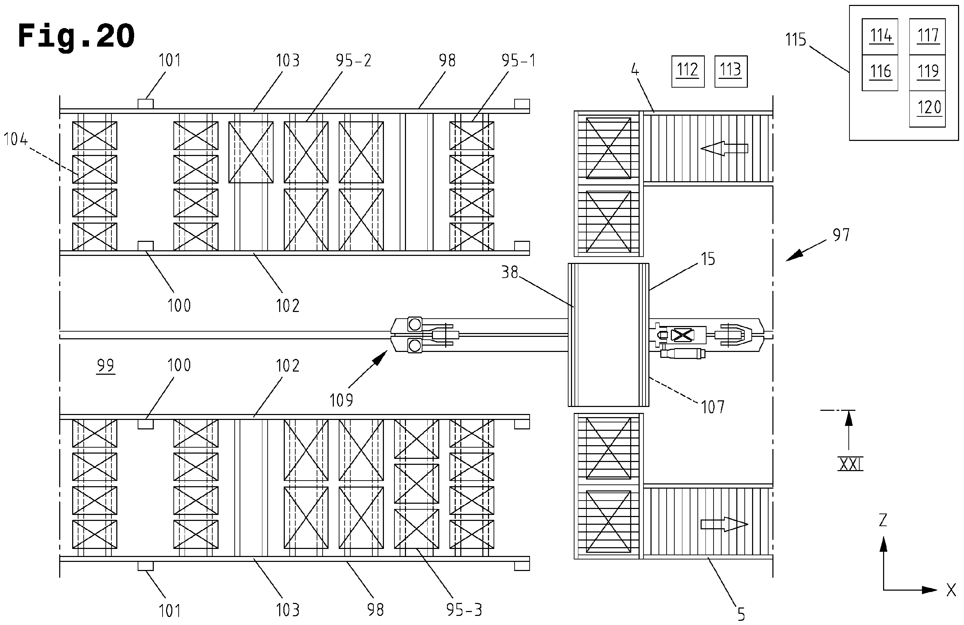

Im Nachfolgenden wird eine verfahrenstechnische Maßnahme für eine durch ein elektronisches Steuersystem 14; 115 koordinierte Verteilung von Stückgütern 95-1, 95-2, 95-3 auf Lagerplätze 96-1, 96-2 in einem Lagersystem, gemäß einem ersten Ausführungsbeispiel in einem Lagersystem (Fig. 17 bis19) mit Einebenenregalbediengeräten und gemäß einem zweiten Ausführungsbeispiel in einem Lagersystem (Fig. 20 bis21) mit einem Mehrebenenregalbediengerät, beschrieben, wobei die Verteilung der Stückgüter 95-1, 95-2, 95-3 abhängig von einem stückgutspezifischen Stückgut-Eigenschaftskennwert erfolgt. Die Stückgüter 95-1, 95-2, 95-3 weisen unterschiedliche Längen/Breiten/Höhenabmessungen (Volumenabmessungen) und/oder unterschiedliche Gewichte auf.

Die Stückgüter 95-1, 95-2, 95-3 sind Kartons (Packeinheiten) oder Ladehilfsmittel (LHM), wie Tablar oder Behälter, mittels welchen Einzelartikel oder je Ladehilfsmittel zumindest ein Karton gefördert und gelagert werden können. In den Kartons sind Einzelartikel, beispielweise aus der Textilbranche oder Lebensmittelindustrie bevorratet.

Die Fig. 17 bis 19 zeigen das Lagersystem, welches parallel angeordnete Lagerregale 1, eine Stückgut-Manipulationseinheit 2, zumindest eine zwischen den Lagerregalen 1 und entlang der Stückgut-Manipulationseinheit 2 in einer x-Richtung verlaufende Regalgasse 3, eine an die Stückgut-Manipulationseinheit 2 angeschlossene Fördertechnik 4, 5 zum Antransport von Stückgütern 95-1, 95-2, 95-3 und zum Abtransport von Stückgütern 95-1, 95-2, 95-3 und Stückgutaufnahmevorrichtungen (Transportfahrzeuge 7) zum Transport der Stückgüter 95-1, 95-2, 95-3 zu den Lagerplätzen 96-1, 96-2 bzw. Transport der Stückgüter 95-1, 95-2, 95-3 von den Lagerplätzen 96-1, 96-2 umfassen kann. Es sei an dieser Stelle hingewiesen, dass in den unterschiedlichen Ansichten gemäß den Fig. 17 bis 19 die Stückgüter 95-1, 95-2, 95-3 nur teilweise dargestellt sind.

Die Stückgutaufnahmevorrichtungen sind Einebenenregalbediengeräte. Im gezeigten Beispiel sind zwei Lagerregale 1 dargestellt. Im Rahmen der Erfindung können aber auch mehr als zwei Lagerregale 1 vorgesehen werden, wobei zwischen benachbarten Lagerregalen 1 jeweils eine Regalgasse 3 ausgebildet ist. Auch kann nur ein einziges Lagerregal 1 vorgesehen werden. Die Fördertechnik 4, 5 ist aus Gründen der besseren Übersicht in Fig. 17 nur abschnittsweise dargestellt.

Die beispielhaft gezeigten Lagerregale 1 können jeweils der Regalgasse 3 benachbarte, vertikale vordere Regalsteher 9 und von der Regalgasse 3 entfernte, vertikale hintere Regalsteher 10 umfassen. Die vorderen Regalsteher 9 sind mit in Richtung der Regalgasse 3 horizontal verlaufenden vorderen Längstraversen 11 und die hinteren Regalsteher 10 mit in Richtung der Regalgasse 3 horizontal verlaufenden hinteren Längstraversen 12 verbunden. Zwischen den Längstraversen 11, 12 können Querträger 13 vorgesehen werden, welche sich in Tiefenrichtung eines Lagerregales 1 (z-Richtung) erstrecken. In diesem Fall bilden die Querträger 13 eine Lagerfläche bzw. Lagerplätze 96-1, 96-2 aus. Ein Stückgut 95-1, 95-2, 95-3 lagert je nach Breitenabmessung auf zumindest zwei Querträgern 13.

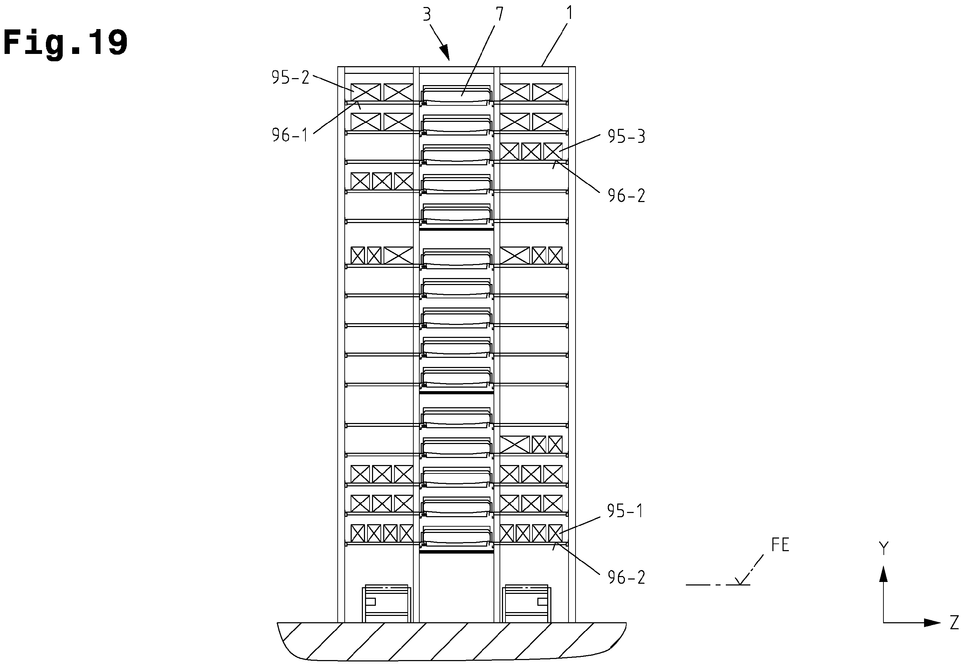

Somit bildet jedes Lagerregal 1 in übereinander liegenden Lagerebenen (RE) jeweils nebeneinander eine Vielzahl von Lagerplätzen 96-1, 96-2 aus. Dabei werden die Stückgüter 95-1, 95-2, 95-3 in Tiefenrichtung (z-Richtung) des Lagerregales 1 auf den an hintereinander liegenden Tiefenpositionen vorhandenen Lagerplätzen 96-1, 96-2 gelagert. Jedem Lagerplatz 96-1, 96-2 wird ein Stückgut 95-1, 95-2, 95-3 zugeteilt. Wie in den Fig. 17 und 19 ersichtlich, variiert die Anzahl der hintereinander liegenden Lagerplätze 96-1, 96-2 abhängig von einer Längenabmessung des Stückgutes 95-1, 95-2, 95-3. So können in Tiefenrichtung (z-Richtung) vier Stückgüter 95-1, drei Stückgüter 95-2 oder zwei Stückgüter 95-3 gelagert werden. Dem Fachmann ist diese Art der Lagerung als mehrfachtiefe Lagerung bekannt. Es wäre aber auch möglich, dass in Tiefenrichtung (z-Richtung) bloß ein Stückgut 95-1, 95-2, 95-3 gelagert wird. Dem Fachmann ist diese Art der Lagerung als einfachtiefe Lagerung bekannt. Auch wenn aus Gründen der besseren Übersicht die Stückgüter 95-1, 95-2, 95-3 in den Figuren mit gleicher Breite eingetragen sind, können diese auch unterschiedliche Breitenabmessungen haben.

Das Lagersystem umfasst nach gezeigter Ausführung in übereinander liegenden (horizontalen) Fahrebenen 16 vor dem Lagerregal 1 bewegbare und vom Steuersystem 14 unabhängig voneinander ansteuerbare Stückgutaufnahmevorrichtungen (Transportfahrzeuge 7) zum Einlagern der Stückgüter 95-1, 95-2, 95-3 auf die Lagerplätze 96-1, 96-2 bzw. Auslagern der Stückgüter 95-1, 95-2, 95-3 von den Lagerplätzen 96-1, 96-2. Es kann vorgesehen werden, dass jeder Regalebene (RE) zumindest eine Stückgutaufnahmevorrichtung zugeordnet ist. Somit bedient eine Stückgutaufnahmevorrichtung über die Transportvorrichtung 15 eine Regalebene.

Die Stückgutaufnahmevorrichtung entspricht dem oben beschriebenen Transportfahrzeug 7 und es wird auf diese Offenbarung Bezug genommen. Die Stückgutaufnahmevorrichtung ist mit der Transportvorrichtung 15 versehen, mittels welcher die Stückgüter 95-1, 95-2, 95-3 auf die Lagerplätze 96-1, 96-2 eingelagert oder die Stückgüter 95-1, 95-2, 95-3 von den Lagerplätzen 96-1, 96-2 ausgelagert werden. Die Transportvorrichtung 15 entspricht der oben beschriebenen Stückgut-Transportvorrichtung (Fig. 5) und es wird auf diese Offenbarung Bezug genommen. Die Transportvorrichtung 15 kann in einer Querrichtung (z-Richtung) aus einer Ausgangsstellung nach beiden Richtungen ausfahren / einfahren und ein oder mehrere Stückgüter 95-1, 95-2, 95-3 auf die Lagerplätze 96-1, 96-2 einlagern / von den Lagerplätzen 96-1, 96-2 auslagern.

Die Fahrebenen 16 und Regalebenen (RE) liegen im gezeigten Ausführungsbeispiel im Wesentlichen auf gleicher Höhenebene, wobei die in Längsrichtung der Regalgasse 3 (x-Richtung) verlaufenden und paarweise einander gegenüberliegenden Längstraversen 11 jeweils eine Fahrebene 16 ausbilden. Die Längstraversen 11 (Führungsschienen) sind mit dem Lagerregal 1 verbunden. Insbesondere sind die Führungsschienen an den vorderen Regalstehern 9 angeschraubt. Die Führungsschienen verlaufen parallel zum Lagerregal 1, daher in x-Richtung.

Die Stückgutaufnahmevorrichtung ist über eine Führungseinheit an zumindest einer der Längstraversen 11 (Führungsschienen) je Fahrebene 16 geführt und entlang der Längstraversen 11 je Fahrebene 16 verfahrbar. Hierzu kann vorgesehen werden, dass zumindest eine der Längstraversen 11 je Fahrebene 16 eine parallel zur Längsrichtung des Lagerregales 1 und in einer die Fahrebene 16 schneidenden Führungsebene verlaufende Führung 47; 88 (Fig. 7; 9; 11; 14; 15) aufweist. Die Führungseinheit ist über eine Lagervorrichtung am Grundrahmen 27 montiert und weist auf der Führung 47; 88 an voneinander abgewandten und parallel verlaufenden Führungsabschnitten 48 abrollbar anliegende Führungsräder 49 auf, wobei die Führungsräder 49 an der Lagervorrichtung 46; 61; 63; 75; 87 drehbar gelagert sind.

Die Stückgutaufnahmevorrichtung 7 ist entlang zumindest einer der Führungsschienen je Lagerebene bzw. Fahrebene vor dem Lagerregal 1 in einer ersten Richtung (x-Richtung) geführt bzw. bewegbar. Die Führungsschienen sind nach dieser Ausführung je Regalebene / Fahrebene horizontal nebeneinander angeordnet.

Die Lagervorrichtung kann gemäß einer der oben beschriebenen Ausführungen (Fig. 7; 9; 11; 13; 14 und 15) mit einem oder mehreren elastisch nachgiebigen Ausgleichselement(en) oder ohne elastisch nachgiebigem Ausgleichselement ausgestaltet werden.

Es sei an dieser Stelle auch erwähnt, dass nach einer anderen nicht gezeigten Ausführung auch weniger Transportfahrzeuge 7 als Regalebenen (RE) vorhanden sein können, wie oben beschrieben. Die Stückgut-Manipulationseinheit 2 entspricht der oben beschriebenen Stückgut-Manipulationseinheit und es wird auf diese Offenbarung Bezug genommen. Gleiches trifft auf die Fördertechnik 4, 5 zum Antransport von Stückgütern 95-1, 95-2, 95-3 und zum Abtransport von Stückgütern 95-1, 95-2, 95-3 zu.

Nach dieser Ausführung, werden die Stückgüter 95-1, 95-2, 95-3 auf der in einer ersten Richtung (x-Richtung) bewegbaren Aufnahmeplattform 28 (Fig. 5) zu den Lagerplätzen 96-1, 96-2 und mittels der Transportvorrichtung 15 (Fig. 5) von der Stückgutaufnahmevorrichtung 7 in einer dritten Richtung (z-Richtung) auf die Lagerplätze 96-1, 96-2 gefördert. Zuvor werden die Stückgüter 95-1, 95-2, 95-3 mittels der Stückgut-Hebevorrichtung 17a, 17b in der zweiten Richtung (y-Richtung) zu den entsprechenden Bereitstellvorrichtungen 23 gefördert, wie oben beschrieben.

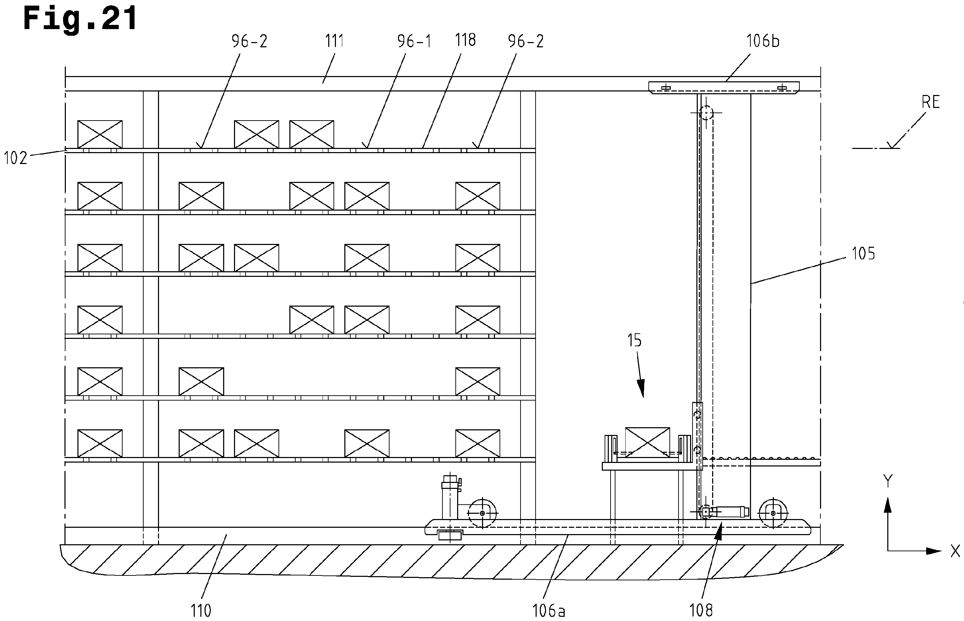

Die Fig. 20 und 21 zeigen eine andere Ausführung eines Lagersystems, welches parallel angeordnete Lagerregale 98, zumindest eine automatisierte Stückgutaufnahmevorrichtung 97 zum Transport der Stückgüter 95-1, 95-2, 95-3 zu den Lagerplätzen 96-1, 96-2 bzw. Transport der Stückgüter 95-1, 95-2, 95-3 von den Lagerplätzen 96-1, 96-2 und eine automatisierte Fördertechnik zum Antransport von Stückgütern 95-1, 95-2, 95-3 und zum Abtransport von Stückgütern 95-1, 95-2, 95-3 umfasst. Es sei an dieser Stelle hingewiesen, dass in den unterschiedlichen Ansichten gemäß den Fig. 20 und 21 die Stückgüter 95-1, 95-2, 95-3 nur teilweise dargestellt sind.

Die automatisierte Fördertechnik umfasst eine erste Fördervorrichtung 4 zum Antransport von Stückgütern 95-1, 95-2, 95-3 zur Stückgutaufnahmevorrichtung 97 und eine zweite Fördervorrichtung 5 zum Abtransport von Stückgütern 95-1, 95-2, 95-3 von der Stückgutaufnahmevorrichtung 97.

Die beispielhaft gezeigten Lagerregale 98 können jeweils der Regalgasse 99 benachbarte, vertikale vordere Regalsteher 100 und von der Regalgasse 99 entfernte, vertikale hintere Regalsteher 101 umfassen. Die vorderen Regalsteher 100 sind mit in Richtung der Regalgasse 99 horizontal verlaufenden vorderen Längstraversen 102 und die hinteren Regalsteher 101 mit in Richtung der Regalgasse 99 horizontal verlaufenden hinteren Längstraversen 103 verbunden. Zwischen den Längstraversen 102, 103 können Querträger 104 vorgesehen werden, welche sich in Tiefenrichtung eines Lagerregales 98 (z-Richtung) erstrecken. In diesem Fall bilden die Querträger 104 eine Lagerfläche bzw. Lagerplätze 96-1, 96-2 aus. Ein Stückgut 95-1, 95-2, 95-3 lagert je nach Breitenabmessung auf zumindest zwei Querträgern 104.

Somit bildet jedes Lagerregal 98 in übereinander liegenden Lagerebenen (RE) jeweils nebeneinander eine Vielzahl von Lagerplätzen 96-1, 96-2 aus. Dabei werden die Stückgüter 95-1, 95-2, 95-3 in Tiefenrichtung (z-Richtung) des Lagerregales 98 auf den an hintereinander liegenden Tiefenpositionen vorhandenen Lagerplätzen 96-1, 96-2 gelagert. Jedem Lagerplatz 96-1, 96-2 wird ein Stückgut 95-1, 95-2, 95-3 zugeteilt. Wie in den Fig. 20 und 21 ersichtlich, variiert die Anzahl der hintereinander liegenden Lagerplätze 96-1, 96-2 abhängig von einer Längenabmessung des Stückgutes 95-1, 95-2, 95-3. So können in Tiefenrichtung (z-Richtung) vier Stückgüter 95-1, drei Stückgüter 95-2 oder zwei Stückgüter 95-3 gelagert werden. Dem Fachmann ist diese Art der Lagerung als mehrfache tiefe Lagerung bekannt. Es wäre aber auch möglich, dass in Tiefenrichtung (z-Richtung) bloß ein Stückgut 95-1, 95-2, 95-3 gelagert wird. Dem Fachmann ist diese Art der Lagerung als einfachtiefe Lagerung bekannt. Auch wenn aus Gründen der besseren Übersicht die Stückgüter 95-1, 95-2, 95-3 in den Figuren mit gleicher Breite eingetragen sind, können diese auch unterschiedliche Breitenabmessungen haben.

Die in den Fig. 20 und 21 gezeigte Stückgutaufnahmevorrichtung 97 ist durch ein Regalbediengerät gebildet, wie es beispielweise aus der EP 2 419 365 B1 bekannt geworden ist. Das Regalbediengerät umfasst einen vertikalen Mast 105, ein am Mastfuß befestigtes unteres Fahrwerk 106a, ein am Mastkopf befestigtes oberes Fahrwerk 106b, zumindest eine am Mast 105 angeordnete Aufnahmeplattform 107, einen Hubantrieb 108 zum Bewegen der Aufnahmeplattform 107 in y-Richtung und einen Fahrantrieb 109 zum Bewegen des Regalbediengerätes in x-Richtung. Das untere Fahrwerk 106a ist an einer unteren Führungsschiene 110 und das obere Fahrwerk 106b an einer oberen Führungsschiene 111 geführt. Die untere Führungsschiene 110 wird über (nicht dargestellte) Befestigungsvorrichtungen am Boden eines Gebäudes montiert. Die obere Führungsschiene 111 kann entweder über (nicht dargestellte) Traversen an den Lagerregalen 98 befestigt oder über (nicht dargestellte) Befestigungsvorrichtungen an der Decke eines Gebäudes montiert werden.

Die Aufnahmeplattform 107 ist über den Hubantrieb 108 in y-Richtung höhenverstellbar am vertikalen Mast 105 gelagert. Der Hubantrieb ist durch einen Zugmitteltrieb und zumindest einen mit diesem gekuppelten elektrischen Antriebsmotor (Fig. 21) gebildet. Auf der Aufnahmeplattform 107 können ein einziges Stückgut 95-1, 95-2, 95-3 oder auch mehrere Stückgüter 95-1, 95-2, 95-3 transportiert werden.

Das Regalbediengerät ist über den Fahrantrieb 109 in x-Richtung verfahrbar an den Führungsschienen 110, 111 gelagert. Die Führungsschienen 110, 111 verlaufen parallel zum Lagerregal 98, daher in x-Richtung. Das untere Fahrwerk 106a umfasst den Fahrantrieb 109, welcher durch zumindest einen elektrischen Antriebsmotor und eine an diesen gekuppelte Antriebsrolle gebildet ist. Bevorzugt sind zwei Antriebsmotoren und zwei Antriebsrollen vorgesehen.

Die Stückgutaufnahmevorrichtung 97 ist demnach entlang der unteren Führungsschiene 109 und oberen Führungsschiene 111 vor dem Lagerregal 98 in einer ersten Richtung (x-Richtung) geführt bzw. bewegbar. Die Führungsschienen 109, 111 sind nach dieser Ausführung vertikal übereinander angeordnet.

Wie aus den Figuren ersichtlich, ist die Stückgutaufnahmevorrichtung 97 mit einer Transportvorrichtung 15 versehen, mittels welcher die Stückgüter 95-1, 95-2, 95-3 auf die Lagerplätze 96-1, 96-2 eingelagert oder die Stückgüter 95-1, 95-2, 95-3 von den Lagerplätzen 96-1, 96-2 ausgelagert werden. Die Transportvorrichtung 15 kann in einer Querrichtung (z-Richtung) aus einer Ausgangsstellung nach beiden Richtungen synchron ausfahrbare Teleskopiereinheiten 38 umfassen, sodass in die zu beiden Seiten des Regalbediengerätes angeordneten Lagerregale 98 Stückgüter 95-1, 95-2, 95-3 eingelagert bzw. Stückgüter 95-1, 95-2, 95-3 ausgelagert werden können. Die Transportvorrichtung 15 entspricht der oben beschriebenen Stückgut-Transportvorrichtung (Fig. 5) und es wird auf diese Offenbarung Bezug genommen.

Nach dieser Ausführung, werden die Stückgüter 95-1, 95-2, 95-3 auf der in einer ersten Richtung (x-Richtung) und zweiten Richtung (y-Richtung) bewegbaren Aufnahmeplattform 107 zu den Lagerplätzen 96-1, 96-2 und mittels der Transportvorrichtung 15 von der Stückgutaufnahmevorrichtung 97 in einer dritten Richtung (z-Richtung) auf die Lagerplätze 96-1, 96-2 gefördert.

Wie in den Figuren 17 und 20 eingetragen, ist zumindest eine Erfassungsvorrichtung 112 zur Identifizierung der Stückgüter 95-1, 95-2, 95-3 vorgesehen. Die Erfassungsvorrichtung 112 kann einen am Stückgut 95-1, 95-2, 95-3 angeordneten (nicht dargestellten) Datenträger lesen und das Steuersystem 14; 115 das Stückgut 95-1, 95-2, 95-3 eindeutig identifizieren. Der Datenträger ist beispielweise ein Barcode oder RFID (Radio Frequency Identification Device) und die Erfassungsvorrichtung 112 ist beispielsweise ein Barcode-Lesegerät, RFID-Lesegerät oder ein Kamerasystem. Die Erfassungsvorrichtung 112 ist mit dem elektronischen Steuersystem 14; 115 verbunden, um dieser die Identifikationsdaten zu jedem Stückgut 95-1, 95-2, 95-3 zu übermitteln.

Ferner kann zur Erfassung eines stückgutspezifischen Stückgut-Eigenschaftskennwertes eine Messvorrichtung 113 vorgesehen werden, mittels welcher zu jedem Stückgut 95-1, 95-2, 95-3 die Abmessungen (Länge, Breite, Höhe) oder das Gewicht, oder die Abmessungen (Länge, Breite, Höhe) und das Gewicht erfasst werden. Die Abmessungen der Stückgüter 95-1, 95-2, 95-3 werden berührungslos und bevorzugt während der Transportbewegung auf der Fördervorrichtung 4 erfasst, beispielweise mittels eines optoelektronischen Messsystems. Die Gewichtsmessung kann bevorzugt ebenso während der Transportbewegung auf der Fördervorrichtung 4 erfolgen. Die Längen/Breiten/Höhenabmessungen zu jedem Stückgut 95-1, 95-2, 95-3 kann entweder durch Bildverarbeitungsalgorithmen aus dem Bild eines Kamerasystems ermittelt werden. Alternativ und/oder ergänzend kann ein nicht näher gezeigtes und bezeichnetes vertikales Lichtgitter vorgesehen werden, welches vom Stückgut 95-1, 95-2, 95-3 während dem Transport durchquert wird und das dazu eingerichtet ist, eine Außenkontur des Stückgutes 95-1, 95-2, 95-3 zu erfassen.

Die Messvorrichtung 113 ist mit dem elektronischen Steuersystem 14; 115 verbunden, um diesem Messsignale (Messinformationen) zur Auswertung/Berechnung einer Längen/Breiten/Höhenabmessung (Volumenabmessung) zu jedem Stückgut 95-1, 95-2, 95-3 und/oder Messsignale zur Auswertung/Berechnung eines Gewichtes zu jedem Stückgut 95-1, 95-2, 95-3 zu übermitteln. Bevorzugt erfolgt eine Volumenmessung und Gewichtsmessung zu jedem Stückgut 95-1, 95-2, 95-3.

Das elektronische Steuersystem 14; 115 umfasst ein Auswertemodul 114, welches eingerichtet ist, einen Stückgut-Eigenschaftskennwert basierend auf der ermittelten Längen/Breiten/Höhenabmessungen und/oder dem ermittelten Gewicht zu berechnen. Demnach beruht die Erfassung des Stückgut-Eigenschaftskennwertes zu jedem Stückgut 95-1, 95-2, 95-3 auf Istwerten. Das Auswertemodul 114 kann aus den direkt gemessenen oder bestimmten (gerechneten) Längen/Breiten /Höhenabmessungen und dem gemessenen Gewicht eine Dichte zu jedem Stückgut 95-1, 95-2, 95-3 berechnen, wobei die Dichte den Stückgut-Eigenschaftskennwert bildet.

Während nach der oben beschriebenen ersten Ausführung eine Volumenmessung und Gewichtsmessung oder eine Volumenmessung oder Gewichtsmessung zu jedem Stückgut 95-1, 95-2, 95-3 erfolgt, kann nach einer zweiten Ausführung, auf in einer Datenbank hinterlegte Daten zu jedem Stückgut 95-1, 95-2, 95-3 zurückgegriffen werden. Die Daten enthalten Daten zu jedem Stückgut 95-1, 95-2, 95-3 über eine Längen/Breiten/Höhenabmessungen und/oder das Gewicht. In diesem Fall kann das Vermessen entfallen und wird vom Auswertemodul 114 der Stückgut-Eigenschaftskennwert basierend auf der hinterlegten Längen/Breiten/Höhen- abmessungen und/oder dem hinterlegten Gewicht berechnet. Als Stückgut-Eigenschaftskennwert wird die Dichte ermittelt. Demnach beruht die Erfassung des Stückgut-Eigenschaftskennwertes zu jedem Stückgut 95-1, 95-2, 95-3 auf Sollwerten. In diesem Fall genügt es, wenn die Stückgüter 95-1, 95-2, 95-3 anhand eines Datenträgers, beispielweise Barcode oder einem RFID (Radio Frequency Identification Device) und der Erfassungsvorrichtung 112 (Stückgut-Identifikationseinrichtung), beispielsweise ein Lesegerät oder Bildverarbeitungssystem, identifiziert werden. Insbesondere wird aus einem vom Lieferanten direkt auf das Stückgut 95-1, 95-2, 95-3 (Colli) oder einen Ladungsträger (beispielsweise Palette), auf welchem gleichartige Stückgüter 95-1, 95-2, 95-3 gestapelt sind, angebrachten Datenträger ein Identifikationscode ausgelesen, insbesondere ein Barcode gescannt. Anhand dieses Identifikationscodes wird auf die Datenbank und die gespeicherten Sollwerte der Längen/Breiten/Höhenabmessungen und/oder das Gewicht zu jeweiligen Stückgut 95-1, 95-2, 95-3 zurückgegriffen.

Grundsätzlich ist auch eine Kombination aus der ersten Ausführung und zweiten Ausführung möglich. Beispielweise können die Längen/Breiten/Höhenabmessungen, welche in einer Datenbank hinterlegt sind, daher die Sollwerte herangezogen werden, während das Gewicht gemessen wird, daher die Istwerte herangezogen werden. Diese Ausführung findet vor allem Anwendung, wenn ein Kommissioniervorgang durchgeführt und eine Restmenge in das Lagerregal 1; 98 rückgelagert wird. Der Istwert nach dem Kommissioniervorgang ist kleiner als der Istwert vor dem Kommissioniervorgang. Der Istwert vor dem Kommissioniervorgang entspricht demnach dem Sollwert.

Es ist vorgesehen, dass die Stückgüter 95-1, 95-2, 95-3 abhängig von einem Stückgut-Eigenschaftskennwert je Stückgut 95-1, 95-2, 95-3 selektiv auf die Lagerplätze 96-1, 96-2 verteilt werden. Dadurch werden unzulässige Verlagerungen der Stückgüter 95-1, 95-2, 95-3 im Lagerregal 1; 98, wenn diese auf den Lagerplätzen 96-1, 96-2 abgestellt sind, vermieden. Dies selbst dann, wenn durch die Fahrbewegung der Einebenenregalbediengeräte (Fig. 17 bis19) oder durch die Fahrbewegung des Regalbediengerätes (Fig. 20, 21) Schwingungen im Lagerregal 1; 98 angeregt werden und/oder durch die Fahrbewegung der Einebenenregalbediengeräte oder durch die Fahrbewegung des Regalbediengerätes turbulente Luftströmungen entstehen.

Das elektronische Steuersystem 14; 115 umfasst hierzu ein Speichermodul 117, in welchem eine Werteliste mit unterschiedlichen Identifikationswerten für die Lagerplätze 96-1, 96-2 gespeichert ist. Diese Werteliste wird vor Inbetriebnahme des Lagersystems erstellt und im Speichermodul 117 abrufbar hinterlegt. Die Identifikationswerte sind nun derart bestimmt, dass die Lagerplätze 96-1, 96-2 entweder Lagerplätze 96-1, 96-2 einer ersten Lagerplatzkategorie oder Lagerplätze 96-1, 96-2 einer zweiten Lagerplatzkategorie angehören. Es wird zumindest zu einigen, bevorzugt zu jedem Lagerplatz 96-1, 96-2 im Lagerregal 1; 98 die Lagerplatzkategorie durch das Steuersystem 14; 115 erfasst. Mit anderen Worten, entspricht die Werteliste einer Zuordnungsliste, welche die Zuordnung der vorhandenen Lagerplätze 96-1, 96-2 jeweils zu einem Lagerplatz 96-1 der ersten Lagerplatzkategorie und Lagerplatz 96-1 der zweiten Lagerplatzkategorie vorgibt.

In diesem Speichermodul 117 können auch die gemessenen / ermittelten Längen/Breiten/Höhenabmessungen und/oder das gemessene Gewicht oder der berechnete Stückgut-Eigenschaftskennwert, nämlich die Dichte zu jedem Stückgut 95-1, 95-2 gespeichert werden.

Ebenso kann im Speichermodul 117 ein (noch näher zu beschreibender) Grenzwert für den Stückgut-Eigenschaftskennwert gespeichert werden.

Ein Lagerplatz der ersten Lagerplatzkategorie ist ein Lagerplatz 96-1, auf welchem ein darauf abgestelltes Stückgut 95-2 eher dazu neigt, sich aufgrund der Fahrbewegungen der zumindest einen Stückgutaufnahmevorrichtung 7; 97 zu verlagern, und ein Lagerplatz der zweiten Lagerplatzkategorie ist ein Lagerplatz 96-2, auf welchem ein darauf abgestelltes Stückgut 95-1 weniger dazu neigt, sich aufgrund der Fahrbewegungen der zumindest einen Stückgutaufnahmevorrichtung 7; 97 zu verlagern. Man kann die ersten Lagerplätze 96-1 auch als "kritische" Lagerplätze und die zweiten Lagerplätze 96-2 auch als "unkritische" Lagerplätze bezeichnen.

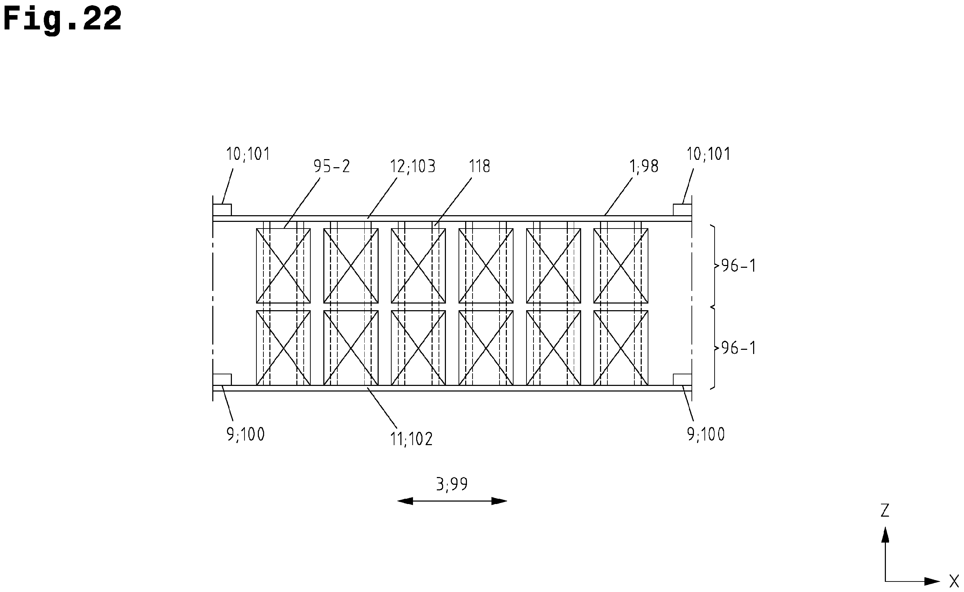

In den nachfolgenden Fig. 22 bis 25 sind Beispiele unterschiedlicher Lagerplatzverteilungen gezeigt. Diese nachfolgenden Ausführungen beziehen sich auf das Lagersystem gemäß den Fig. 17 bis 19 und auf das Lagersystem gemäß den Fig. 20 und 21.

Fig. 22 zeigt eine Draufsicht auf eine Lagerfläche 118 einer der Lagerebenen des Lagerregales 1; 98 beispielweise im oberen Höhenbereich des Lagerregales 1; 98, wobei die Lagerfläche 118 eine Vielzahl nebeneinander und hintereinander angeordneter Lagerplätze aufweist. Zu erkennen ist, dass sämtliche Lagerplätze 96-1 auf dieser Lagerfläche 118 erste Lagerplätze 96-1 sind, daher "kritische" Lagerplätze. Auf diesen Lagerplätzen 96-1 werden, wie im Nachfolgenden noch beschrieben wird, zweite Stückgüter 95-2 gelagert.

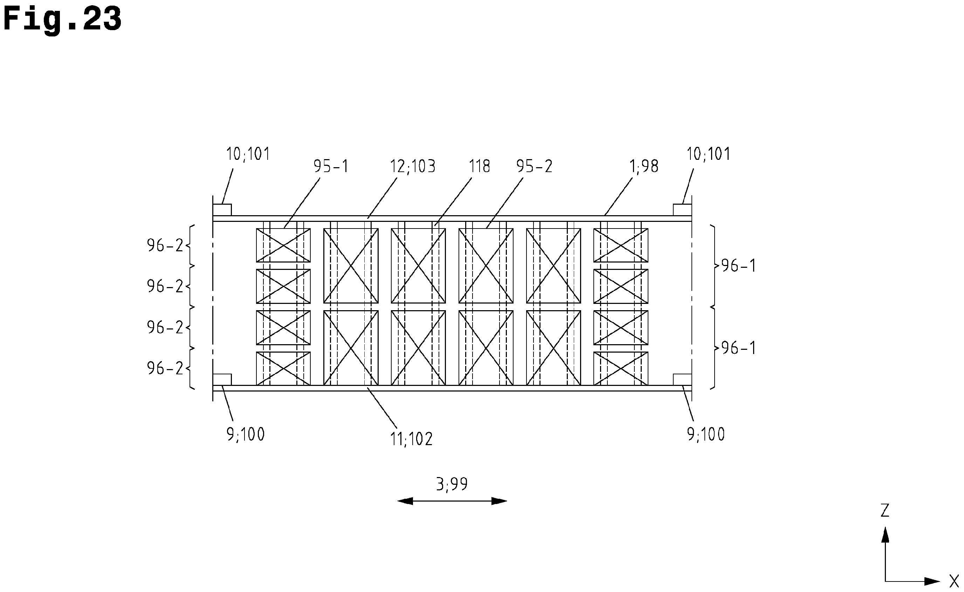

Fig. 23 zeigt eine Draufsicht auf eine Lagerfläche 118 einer der Lagerebenen des Lagerregales 1; 98 beispielweise im mittleren Höhenbereich des Lagerregales 1; 98, wobei die Lagerfläche 118 eine Vielzahl nebeneinander und hintereinander angeordneter Lagerplätze aufweist. Die zweiten Lagerplätze 96-2 (unkritische Lagerplätze) sind in diesem Ausführungsbeispiel im Nahbereich der Regalsteher 9, 10; 100, 101 und die ersten Lagerplätze 96-1 (kritische Lagerplätze) entfernt von den Regalstehern 9, 10; 100, 101 angeordnet. Auf den ersten Lagerplätzen 96-1 werden, wie im Nachfolgenden noch beschrieben wird, zweite Stückgüter 95-2 gelagert, und auf den zweiten Lagerplätzen 96-2 werden, wie im Nachfolgenden noch beschrieben wird, erste Stückgüter 95-1 gelagert.

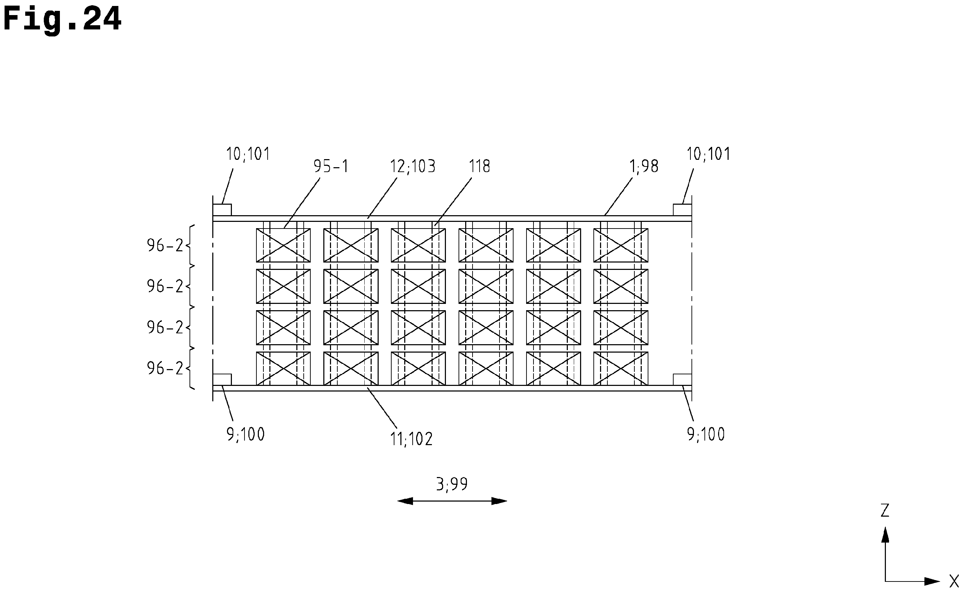

Fig. 24 zeigt eine Draufsicht auf eine Lagerfläche 118 einer der Lagerebenen des Lagerregales 1; 98 beispielweise im unteren Höhenbereich des Lagerregales 1; 98, wobei die Lagerfläche 118 eine Vielzahl nebeneinander und hintereinander angeordneter Lagerplätze aufweist. Zu erkennen ist, dass sämtliche Lagerplätze 96-2 auf dieser Lagerfläche 118 zweite Lagerplätze 96-2 sind, daher "unkritische" Lagerplätze. Auf diesen Lagerplätzen 96-2 werden, wie im Nachfolgenden noch beschrieben wird, erste Stückgüter 95-1 gelagert.

Mit anderen Worten, können sich in einem Lagerregal 1; 98 auf unterschiedlichen Lagerebenen / Lagerflächen 118 verschiedene Lagerplatzverteilungen gemäß den Fig. 22 bis 24 ergeben.

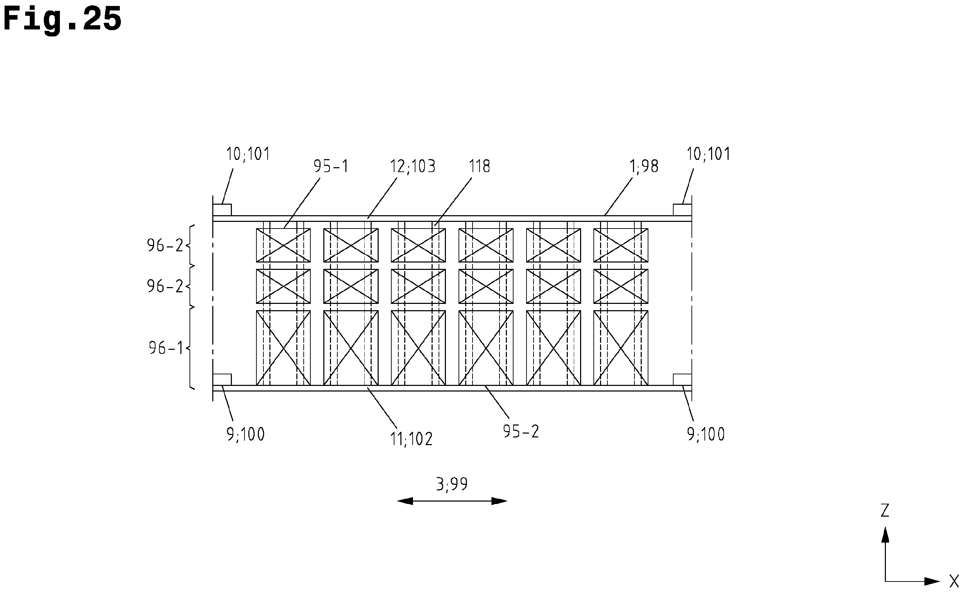

Fig. 25 zeigt eine Draufsicht auf eine Lagerfläche 118 einer der Lagerebenen des Lagerregales 1; 98, wobei die Lagerfläche 118 eine Vielzahl nebeneinander und hintereinander angeordneter Lagerplätze 96-1, 96-2 aufweist. Zu erkennen ist, dass jene der Stückgutaufnahmevorrichtung 7; 97 benachbarten Lagerplätze erste Lagerplätze 96-1, daher "kritische" Lagerplätze sind, und jene von der Stückgutaufnahmevorrichtung 7; 97 entfernten Lagerplätze zweite Lagerplätze 96-2, daher "unkritische" Lagerplätze sind. Auf den ersten Lagerplätzen 96-1 werden, wie im Nachfolgenden noch beschrieben wird, zweite Stückgüter 95-2 gelagert, und auf den zweiten Lagerplätzen 96-2 werden, wie im Nachfolgenden noch beschrieben wird, erste Stückgüter 95-1 gelagert.

Mit anderen Worten, können sich in einem Lagerregal 1; 98 auf zumindest einigen der Lagerebenen / Lagerflächen 118 die Lagerplatzverteilungen gemäß Fig. 25 ergeben.

Nach einer anderen Ausführung, kann eine Lagerplatzverteilung in Lagerrealen 1; 98 derart vorgesehen werden, dass in einem ersten Lagerregal 1; 98 eine der oben beschriebene Lagerplatzverteilung oder eine Kombination aus diesen Lagerplatzverteilungen festgelegt wird, während in einem zweiten Lagerregal 1; 98 eine andere Lagerplatzverteilung festgelegt wird.

Dies ist beispielweise der Fall, wenn die Stückgutaufnahmevorrichtung 7; 97 derart geführt ist, dass durch die Fahrbewegung der Stückgutaufnahmevorrichtung 7; 97 (Fig. 20, 21) Schwingungen entweder nur im ersten Lagerregal 1; 98 oder nur im zweiten Lagerregal 1; 98 angeregt werden. Demnach ist die Führungsschiene, entlang welcher die Stückgutaufnahmevorrichtung 7; 97 geführt bewegt wird, entweder mit dem ersten Lagerregal 1; 98 oder dem zweiten Lagerregal 1; 98 verbunden. Das erste Lagerregal 1; 98 und zweite Lagerregal 1; 98 sind dabei zu beiden Seiten der Regalgasse 3; 99 angeordnet, so wie in Fig. 17 und 20 gezeigt.

Beispielweise ist nach Fig. 6, die Führungsschiene mit dem (linken) zweiten Lagerregal 1 verbunden und die Stückgutaufnahmevorrichtung 7 entlang dieser Führungsschiene geführt. Hierzu kann die Führungseinheit, welche auf der linke Seite des Grundrahmen 27 montiert ist, vorgesehen werden. Auf der rechten Seites des Grundrahmens 27 ist keine Führungseinheit vorgesehen und liegen lediglich die Laufräder 29 auf der Führungsschiene abrollbar auf. Eine Seitenführung ist nicht vorhanden. Somit werden aber auch nur im (linken) zweiten Lagerregal 1 Schwingungen angeregt. Die im (rechten) ersten Lagerregal 1 angeregten Schwingungen sind vernachlässigbar.

Dies bedeutet, dass einerseits das erste Lagerregal 1; 98, in welchem durch die Fahrbewegung der Stückgutaufnahmevorrichtung 7; 97 (Fig. 20, 21) keine Schwingungen angeregt werden, über die Mehrzahl der Regalebenen nur Lagerplätze 96-2 der zweiten Lagerplatzkategorie vorhanden sein können, daher ein Vervielfachung der Lagerplatzverteilung über die Mehrzahl der Regalebenen, bevorzugt sämtliche Regalebenen, wie in Fig. 24 dargestellt. Daher werden dort vorwiegend oder ausschließlich Stückgüter 95-1 gelagert, welche am Lagerplatz eher zur Verlagerung neigen würden.

Wird also ein nachfolgend beschriebener Grenzwert unterschritten, so wird das Stückgut 95-1 mittels der Stückgutaufnahmevorrichtung 7; 97 / Transportvorrichtung 15 auf einen unbelegten Lagerplatz der zweiten Lagerplatzkategorie im ersten Lagerregal 1; 98 eingelagert. Sind alle diese Lagerplätze belegt, können nachfolgende Stückgüter 95-1 auf einen unbelegten Lagerplatz der zweiten Lagerplatzkategorie im zweiten Lagerregal 1; 98 eingelagert werden, wie oben beschrieben. Die Stückgutaufnahmevorrichtung (7; 97) / Transportvorrichtung 15 wird hierzu mit entsprechenden Steuerbefehlen von dem Steuersystem 14; 115, insbesondere einem Steuermodul angesteuert.

Die endgültige Lagerplatzverteilungen über sämtliche Lagerebenen / Lagerflächen 118 und/oder Lagerregale 1; 98 wird beispielweise durch die Steifigkeit des Lagerregales 1; 98 bzw. dessen Schwingungsverhalten und/oder durch die Kenntnis der durch die dynamische Fahrbewegung der Stückgutaufnahmevorrichtung(en) 7; 97 hervorgerufenen Luftströmungen / Luftwirbel und/oder durch die Kenntnis der Anordnung der Führungsschiene(n) am Lagerregal bestimmt.

So können nun die Lagerplätze 96-1 der ersten Lagerplatzkategorie in jenen Bereichen des Lagerregales 1; 98 liegen, in welchen die durch die Fahrbewegung der Stückgutaufnahmevorrichtung(en) 7; 97 im Lagerregal 1; 98 angeregte Schwingung eine maximale Schwingungsamplitude aufweisen.

Die Lagerplätze 96-2 der zweiten Lagerplatzkategorie können in jenen Bereichen des Lagerregales 1; 98 liegen, in welchen die durch die Fahrbewegung der Stückgutaufnahmevorrichtung(en) 7; 97 im Lagerregal 1; 98 angeregte Schwingung eine minimale Schwingungsamplitude aufweist.

Das Steuerungssystem 14; 115 umfasst einen Lagerverwaltungsrechner 116, welcher eingerichtet ist, unbelegte Lagerplätze 96-1, 96-2 der ersten Lagerplatzkategorie und unbelegte Lagerplätze 96-1, 96-2 der zweiten Lagerplatzkategorie zu ermitteln.

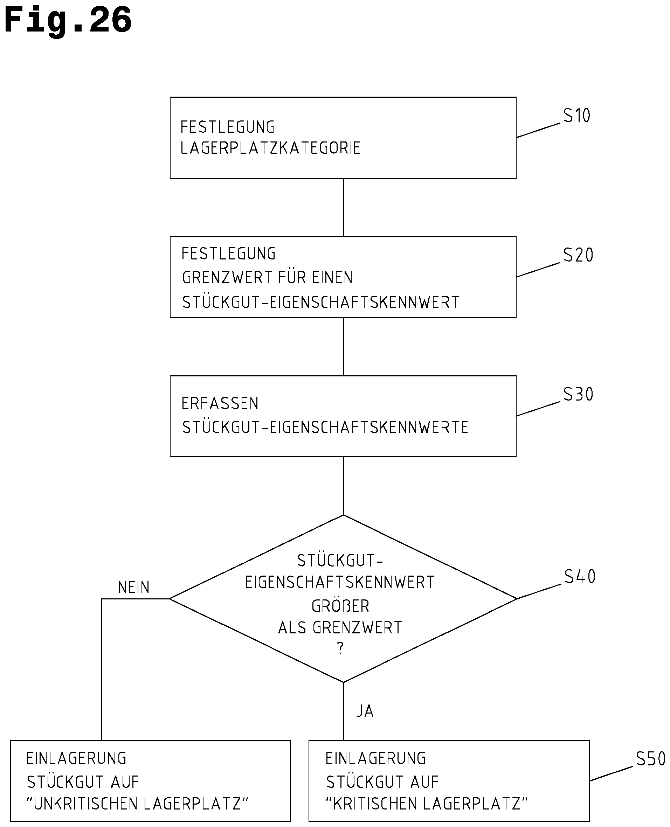

Das Steuerungssystem 14; 115 umfasst ein elektronisches Steuermodul 119, welches eingerichtet ist, die Stückgutaufnahmevorrichtung(en) 7; 97 und die Transportvorrichtung 15 anzusteuern und um die Stückgüter 95-1, 95-2 auf die unbelegten Lagerplätze 96-1, 96-2 der ersten Lagerplatzkategorie und unbelegten Lagerplätze 96-1, 96-2 der zweiten Lagerplatzkategorie selektiv einzulagern, wie in Fig 26 näher beschrieben wird.

Um diese selektive Einlagerung der Stückgüter 95-1, 95-2 auf die Lagerplätze 96-1, 96-2 der ersten Lagerplatzkategorie und unbelegten Lagerplätze 96-1, 96-2 der zweiten Lagerplatzkategorie zu ermöglichen, umfasst das Steuerungssystem 14; 115 ein Vergleichsmodul 120, welches eingerichtet ist, den zu jedem Stückgut 95-1, 95-2 ermittelten stückgutspezifischen Stückgut-Eigenschaftskennwert mit einem Grenzwert für einen Stückgut-Eigenschaftskennwert auszuwerten.

Wird vom Vergleichsmodul 120 eine einen Grenzwert unterschreitende Abweichung des ermittelten stückgutspezifischen Stückgut-Eigenschaftskennwert vom Grenzwert für den Stückgut-Eigenschaftskennwert ermittelt, so wird das Stückgut 95-1 mittels der Stückgutaufnahmevorrichtung 7; 97 / Transportvorrichtung 15 auf einen unbelegten Lagerplatz 96-2 der zweiten Lagerplatzkategorie eingelagert. Mit anderen Worten wird jenes (erstes) Stückgut 95-1, welches am Lagerplatz abgestellt wurde und dort eher zur Verlagerung neigt, wenn im Lagerregal Schwingungen angeregt werden oder eine turbulente Luftströmung auftritt, als jenes (zweites) Stückgut 95-2, welches am Lagerplatz abgestellt wurde und dort weniger zur Verlagerung neigt, wenn im Lagerregal Schwingungen angeregt werden oder eine turbulente Luftströmung auftritt, auf einen "unkritischen" Lagerplatz 96-2 gelagert.

Wird hingegen vom Vergleichsmodul 120 eine einen Grenzwert überschreitende Abweichung des ermittelten stückgutspezifischen Stückgut-Eigenschaftskennwert vom Grenzwert für den Stückgut-Eigenschaftskennwert ermittelt, so wird das Stückgut 95-2 mittels der Stückgutaufnahmevorrichtung 7; 97 / Transportvorrichtung 15 auf einen unbelegten Lagerplatz 96-1 der ersten Lagerplatzkategorie eingelagert. Mit anderen Worten wird (bzw. kann) jenes (zweites) Stückgut 95-2, welches am Lagerplatz abgestellt wurde und dort weniger zur Verlagerung neigt, wenn im Lagerregal Schwingungen angeregt werden oder eine turbulente Luftströmung auftritt, als jenes (erstes) Stückgut 95-1, welches am Lagerplatz abgestellt wurde und dort eher zur Verlagerung neigt, wenn im Lagerregal Schwingungen angeregt werden oder eine turbulente Luftströmung auftritt, auf einen "kritischen" Lagerplatz 96-1 gelagert (bzw. werden).

In der Praxis hat sich ein Grenzwert für den Stückgut-Eigenschaftskennwert von etwa 50 g/dm³ bzw. 0,05 kg/l bewährt.

Fig. 26 zeigt ein Ablaufdiagramm für die Festlegung der Lagerplatzkonfiguration / des Grenzwertes für den Stückgut-Eigenschaftskennwert und den Einlagervorgang von Stückgütern 95-1, 95-2.

Der Schritt S10 ist vor der Inbetriebnahme des Lagersystems durchzuführen, in welchem für einige der Lagerplätze 96-1, 96-2, bevorzugt für jeden Lagerplatz 96-1, 96-2 im Lagerregal 1; 98 oder bevorzugt für jeden Lagerplatz 96-1, 96-2 in den Lagerregalen 1; 98, sofern zu beiden Seiten der Regalgasse 3; 99 Lagerregal vorhanden sind, eine Lagerplatzkategorie festgelegt wird. Wie oben beschrieben, bestimmt sich die Lagerplatzkategorie aus dem Schwingungsverhalten bzw. Steifigkeit des Lagerregales 1; 98 und/oder durch die Kenntnis der durch die dynamische Fahrbewegung der Stückgutaufnahmevorrichtung(en) 7; 97 hervorgerufenen Luftströmungen / Luftwirbel und/oder durch die Kenntnis der Anordnung der Führungsschiene(n) am Lagerregal 1; 98. Eine entsprechende Werteliste mit unterschiedlichen Identifikationswerten / Lagerplatzkategorien für die Lagerplätze 96-1, 96-2 wird im Speichermodul 117 gespeichert. Demnach wird zwischen "kritischen" Lagerplätzen und "unkritischen" Lagerplätzen unterschieden. Die Zuweisung / Zuordnung der vorhandenen Lagerplätze 96-1, 96-2 jeweils zu einem Lagerplatz 96-1 der ersten Lagerplatzkategorie und Lagerplatz 96-1 der zweiten Lagerplatzkategorie kann in der oben beschriebenen Werteliste / Zuordnungsliste definiert werden.

Im Schritt S20 wird ein Grenzwert für den Stückgut-Eigenschaftskennwert festgelegt und im Speichermodul 117 gespeichert. Dieser Schritt wird bevorzugt ebenfalls vor der Inbetriebnahme des Lagersystems durchgeführt. Der Grenzwert kann als Festwert oder als Variable definiert werden.

Im Schritt S30 werden die Stückgut-Eigenschaftskennwerte zu den Stückgütern 95-1, 95-2, 95-3 erfasst, wie oben beschrieben entweder basierend auf den Istwerten oder Sollwerten der Volumenabmessung / dem Gewicht oder den Istwerten und Sollwerten der Volumenabmessung / dem Gewicht.

Im Schritt S40 erfolgt zu den Stückgütern 95-1, 95-2, 95-3 der Vergleich zwischen den berechneten stückgutspezifischen Stückgut-Eigenschaftskennwerten und dem festgelegten Grenzwert für den Stückgut-Eigenschaftskennwert.

Wird der Grenzwert (50 g/dm³) unterschritten, beispielweise beträgt der berechnete stückgutspezifischen Stückgut-Eigenschaftskennwert 30 g/dm³, so wird in einem Schritt S50 das Stückgut 95-1 mittels der Stückgutaufnahmevorrichtung 7; 97 / Transportvorrichtung 15 auf einen unbelegten Lagerplatz der zweiten Lagerplatzkategorie, daher einen "unkritischen" Lagerplatz 96-2 eingelagert. Die Stückgutaufnahmevorrichtung 7; 97 / Transportvorrichtung 15 wird hierzu mit entsprechenden Steuerbefehlen von dem Steuersystem 14; 115, insbesondere dem Steuermodul 119 angesteuert. In den Fig. 17 und 19 ist dieser Fall auch für die Stückgüter 95-3 eingezeichnet. Dieser Lagerplatz 96-2 kann sich in irgendeiner der Lagerebenen und in einem der Lagerregale 1; 98, sofern mehrere Lagerregale 1; 98 vorgesehen sind, befinden.

Wird der Grenzwert (50 g/dm³) überschritten, beispielweise beträgt der berechnete stückgutspezifischen Stückgut-Eigenschaftskennwert 70 g/dm³, so wird in einem Schritt S50 das Stückgut 95-2 mittels der Stückgutaufnahmevorrichtung 7; 97 / Transportvorrichtung 15 auf einen unbelegten Lagerplatz der ersten Lagerplatzkategorie, daher einen "kritischen" Lagerplatz 96-1 eingelagert. Die Stückgutaufnahmevorrichtung 7; 97 / Transportvorrichtung 15 wird hierzu mit entsprechenden Steuerbefehlen von dem Steuersystem 14; 115, insbesondere dem Steuermodul 119 angesteuert. Dieser Lagerplatz 96-1 kann sich in irgendeiner der Lagerebenen und in einem der Lagerregale 1; 98, sofern mehrere Lagerregale 1; 98 vorgesehen sind, befinden.

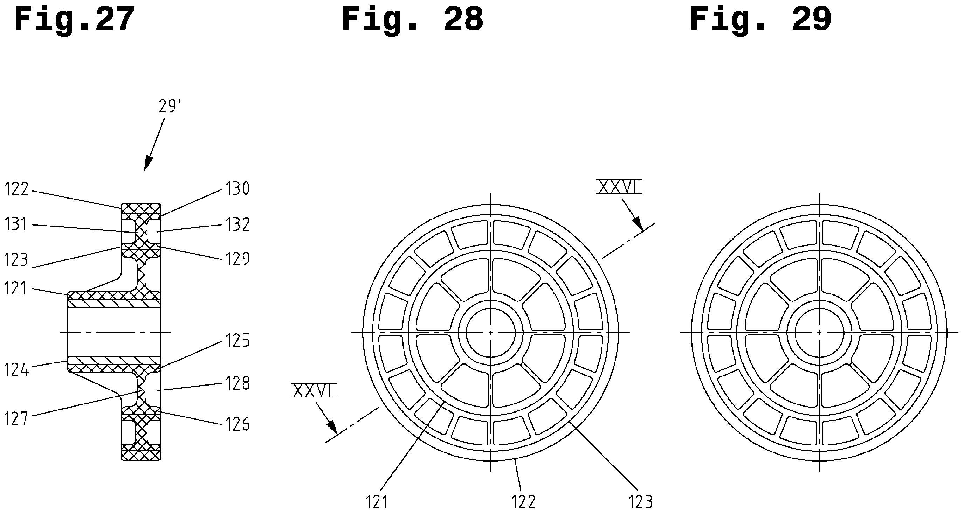

In den Fig. 27 bis 29 ist eines der Laufräder 29' in einer modifizierten Ausführung gezeigt. Dieses modifizierte Laufrad 29' kann anstatt der Laufräder 29, wie in Fig. 5 eingetragen, eingesetzt werden.

Das modifizierte Laufrad 29` umfasst eine Radnabe 121 und einen koaxial zur Radnabe 121 angeordneten Laufbelag 122 und zusätzlich zwischen der Radnabe 121 und dem Laufbelag 122 ein (durch radiale Kräfte federnd nachgiebiges) elastisches Dämpfungselement 123. Das elastische Dämpfungselement 123 ist koaxial zur Radnabe 121 angeordnet. Die Laufräder 29` liegen mit dem Laufbelag 122 auf der ersten Führung 36 (siehe beispielweise Fig. 7) abrollbar auf. Das Laufrad 29' kann auch in der Durchgangsbohrung der Radnabe 121 eine Lagerbuchse 124 umfassen. Die Laufräder 29' werden an einer Antriebswelle (siehe Fig. 30) befestigt, bevorzugt an den Enden der Antriebswelle aufgepresst.

Die Radnabe 121 umfasst einen Innenring 125, einen Außenring 126, einen Mittelsteg 127 und Rippen 128. Der Mittelsteg 127 und die Rippen 128 verbinden den Innenring 125 und Außenring 126. Bevorzugt ist der Innenring 125 länger als der Außenring 126 ausgebildet. Die radial ausgerichteten Rippen 128 verlaufen voneinander getrennt in axialer Richtung der Innen- und Außenringe 125, 126.

Das elastische Dämpfungselement 123 umfasst einen Innenring 129, einen Außenring 130, einen Mittelsteg 131 und Rippen 132. Der Mittelsteg 131 und die Rippen 132 verbinden den Innenring 129 und Außenring 130. Die radial ausgerichteten Rippen 132 verlaufen voneinander getrennt in axialer Richtung der Innen- und Außenringe 129, 130.

Der Laufbelag 122 ist koaxial zum elastischen Dämpfungselement 123 angeordnet und ummantelt das elastische Dämpfungselement 123.

Der Laufbelag 122 und das elastische Dämpfungselement 123 weisen unterschiedliche Materialeigenschaften auf, insbesondere ist eine Federsteifigkeit (Federkonstante) vom Laufbelag 122 höher als eine Federsteifigkeit (Federkonstante) vom Dämpfungselement 123.

Der Laufbelag 122 ist aus einem verschleißfesten Kunststoff, beispielweise Polyurethan, mit einer Härte von mindestens 70 Shore A (DIN 53505). Bevorzugt wird ein Kunststoff mit einer Härte im Bereich von 60 bis 100 Shore A (DIN 53505) gewählt.

Das elastische Dämpfungselement 123 ist aus einem elastomeren Material mit einer Härte bis maximal 50 Shore A (DIN 53505). Bevorzugt wird ein Kunststoff mit einer Härte im Bereich von 30 bis 50 Shore A (DIN 53505) gewählt. Bei dem elastomeren Material kann es sich um Polyurethan oder eine Kautschuk- oder Silikongummimischung handeln.

Die Radnabe 121 kann aus Metall oder einem Kunststoff hergestellt werden. Der Kunststoff der Radnabe 121 kann beispielweise Polyamid sein. Bevorzugt wird ein faserverstärkter Kunststoff verwendet. Ist die Radnabe 121 aus Kunststoff, wie dargestellt, wird die Lagerbuchse 124 in die Durchgangsbohrung der Radnabe 121 eingepresst. Ist die Radnabe 121 aus Metall, beispielweise eine Aluminiumlegierung, kann die Lagerbuchse 124 entfallen, wobei dann das Laufrad 29' direkt auf die Antriebswelle aufgepresst wird.

Das Laufrad 29' (Radnabe 121, Laufbelag 122 und Dämpfungselement 123) kann einteilig im Spritzguss, insbesondere Mehrkomponenten-Spritzguss hergestellt werden. Das Kunststoffmaterial wird dabei auf die Lagerbuchse 124 aufgespritzt. Die Lagerbuchse 124 ist somit im Kunststoffmaterial eingebettet.

Möglich ist auch, dass nur der Laufbelag 122 und das Dämpfungselement 123 aus Kunststoff einteilig im Spritzguss, insbesondere Mehrkomponenten-Spritzguss hergestellt werden, und die Radnabe 121 aus Metall gebildet ist. Das Kunststoffmaterial wird dabei auf die Radnabe 121 am Außenring 126 aufgespritzt. Ist hingegen auch die Radnabe 121 aus Kunststoff, können die vorgefertigten Bauteile, nämlich der erste Bauteil bestehend aus Laufbelag 122 und Dämpfungselement 123 und der zweite Bauteil bestehend aus der Radnabe 121 durch Fügen miteinander verbunden werden. Das Fügen kann mit oder ohne Zusatzwerkstoff, insbesondere Kleber, erfolgen.

Andererseits kann die Radnabe 121, der Laufbelag 122 und das Dämpfungselement 123 jeweils aus Kunststoff im Spritzguss hergestellt werden, wobei die vorgefertigten Bauteile schließlich durch Fügen miteinander verbunden werden. Das Fügen kann mit oder ohne Zusatzwerkstoff, insbesondere Kleber, erfolgen.

Wie nicht weiter dargestellt, kann das elastische Dämpfungselement 123 auch durch einen einfachen zylindrischen Kunststoffmantel (elastomeres Material) zwischen der Radnabe 121 und dem Laufbelag 122 gebildet sein. Der Kunststoffmantel ist mit einer Härte bis maximal 50 Shore A (DIN 53505) ausgeführt.

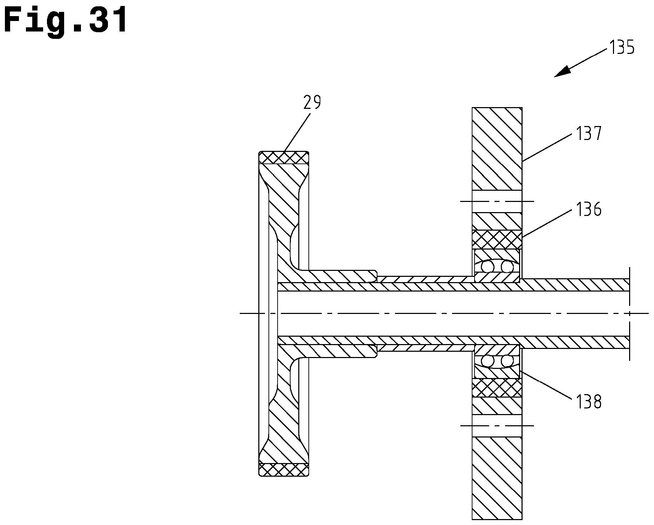

In den Fig. 30 und 31 ist eine mögliche Ausführung für den Grundrahmen 27 und den Fahrantrieb 133 des Transportfahrzeuges 7 gezeigt. Wie in Fig. 30 ersichtlich, ist an einer ersten Seite des Grundrahmens 27 der Fahrantrieb 133 und an einer zweiten Seite des Grundrahmens 27 die Führungseinheit, beispielweise die Führungseinheit 31 (oder die Führungseinheit 60; 62; 74; 86), wie oben beschrieben, angeordnet. Bevorzugt sind zwei Führungseinheiten 31 (oder die Führungseinheiten 60; 62; 74; 86) vorgesehen, welche an einer der Seiten des Grundrahmens 27 angeordnet sind. Die Führungseinheiten 31 (oder die Führungseinheiten 60; 62; 74; 86) sind dabei im Nahbereich der Laufräder 29 angeordnet, welche auf der (zweiten) Seite des Grundrahmens 27 vorgesehen sind. An dieser Seite des Grundrahmens 27 befindet sich auch die oben beschriebene Schleifleitungsanordnung 37 (Fig. 6).

Je zwei Laufräder 29 sind auf einer Antriebswelle 134 befestigt. Die Antriebswellen 134 sind jeweils über Lagervorrichtungen 135 am Grundrahmen 27 gelagert. Die Lagervorrichtungen 135 weisen je Antriebswelle 134 jeweils zumindest ein elastisches nachgiebiges Ausgleichselement 136 (Fig. 31) auf, welches derart angeordnet und gestaltet ist, dass die Laufräder 29 in radialer Richtung relativ zum Grundrahmen 27 beweglich sind. Es sei hingewiesen, dass anstatt der Laufräder 29 auch die Laufräder 29' verwendet werden können.

In Fig. 31 ist eine mögliche Ausführung der Lagervorrichtungen 135 dargestellt. Die Lagervorrichtungen 135 sind nach gezeigter Ausführung am Grundrahmen 27 fest montiert und umfassen jeweils einen Lagerhalter 137, an welchem in einer Aufnahmebohrung das elastisch nachgiebige Ausgleichselement 136 vorgesehen ist. Das Ausgleichselement 136 ist als elastisch nachgiebiger Dämpfungsring ausgebildet, welcher koaxial zur Antriebswelle 134 angeordnet ist. Zusätzlich ist zur Lagerung der Antriebswelle 134 je Lagervorrichtung 135 ein Lager 138 vorgesehen. Das Ausgleichselement 136 ist zwischen dem Lagerhalter 137 und dem Lager 138 angeordnet. Das Ausgleichselement 136 ist aus einem elastomeren Material mit einer Härte bis maximal 50 Shore A (DIN 53505). Bevorzugt wird ein Kunststoff mit einer Härte im Bereich von 30 bis 50 Shore A (DIN 53505) gewählt. Bei dem elastomeren Material kann es sich um Polyurethan oder eine Kautschuk- oder Silikongummimischung handeln.

Beispielweise kann das Lager 138 mit einem einfachen zylindrischen Kunststoffmantel (welcher den Dämpfungsring bildet) umspritzt und dieser vorgefertigte Bauteil mit einem aus Metall hergestellten Lagerhalter 137 durch Fügen miteinander verbunden werden. Das Fügen kann mit oder ohne Zusatzwerkstoff, insbesondere Kleber, erfolgen.

Wie in Fig. 30 ersichtlich, umfasst der Fahrantrieb 133 beispielweise einen Antriebsmotor 30 und einen Zugmitteltrieb, welcher mit dem Antriebsmotor 30 gekoppelt ist. Die in einer Fahrtrichtung (Doppelpfeil) hintereinander angeordneten Laufräder 29 sind an einer ersten Seite des Grundrahmens 27 über ein Zugmittel 139 des Zugmitteltriebes antriebsverbunden, wobei zusätzlich jene Laufräder 29 an der zweiten Seite des Grundrahmens 27 über jeweils eine Antriebswelle 134 mit den Laufrädern 29 an der ersten Seite des Grundrahmens 27 antriebsverbunden sind. Das Zugmittel 139 ist mit dem Antriebsmotor 30 gekoppelt.

Grundsätzlich wäre aber auch ein Antriebskonzept möglich, bei dem nur eine der Antriebswellen 134 motorisch angetrieben ist.

Abschließend sei noch erwähnt, dass sich auch eine Kombination aus mechanischer Maßnahme (Fig. 7, 8; 9, 10; 11, 12; 13; 14; 15; 27; 30) und verfahrenstechnischer Maßnahme (Fig. 17 bis 26) als vorteilhaft erweisen kann. Insbesondere ist dies der Fall, wenn die Stückgutaufnahmevorrichtungen 7 hochdynamisch bewegt und dabei turbulente Luftwirbel erzeugt werden. Dabei können die durch die Fahrbewegung im Lagerregal 1 angeregten Schwingungen durch das Vorsehen der Lagervorrichtung 46; 61; 63; 75; 87, wie oben beschrieben, minimiert und eine Verlagerung der Stückgüter 95-1, 95-2 weitestgehend verhindert werden, wenn die Stückgüter 95-1 mit einem berechneten stückgutspezifischen Stückgut-Eigenschaftskennwert kleiner als der festgelegte Grenzwert, auf die "unkritischen" Lagerplätze 96-2 abgestellt werden (siehe Fig. 25). Ebenso ist auch eine Kombination der mechanischen Maßnahme für die Führungseinheiten 31; 60; 62; 74; 86 (Fig. 7, 8; 9, 10; 11, 12; 13; 14; 15) und der mechanischen Maßnahme für die Laufräder 29' (Fig. 27 bis 29) bzw. die Lagerung der Laufräder 29 (Fig. 30 und 31) möglich.

Der Ordnung halber sei abschließend darauf hingewiesen, dass zum besseren Verständnis des Aufbaus des Transportfahrzeuges bzw. der Führungseinheit dieses bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Lagerregal | 25 | Förderantrieb |
| 2 | Stückgut-Manipulationseinheit | 26 | Förderantrieb |
| 3 | Regalgasse | 27 | Grundrahmen |
| 4 | Fördertechnik | 28 | Aufnahmeplattform |
| 5 | Fördertechnik | 29 | Laufrad |
| 6 | Stückgut | 30 | Antriebsmotor (Fahrantrieb) |
| 7 | Transportfahrzeug | 31 | Führungseinheit |
| 8 | Lagerkanal | 32 | Antriebsmotor (Transportvorrichtung) |
| 9 | vorderer Regalsteher | 33 | Steuerelektronik |
| 10 | hinterer Regalsteher | 34 | Sensor |
| 11 | vordere Längstraverse | 35 | Sensor |
| 12 | hintere Längstraverse | 36 | erste Führung |
| 13 | Querträger | 37 | Schleifleitungsanordnung |
| 14 | Steuereinheit / Steuersystem | 38 | Teleskopiereinheit |
| 15 | Transportvorrichtung | 39 | Grundrahmen |
| 16 | Fahrebene | 40 | erster Schlitten |
| 17 | Stückgut-Hebevorrichtung | 41 | zweiter Schlitten |
| 18 | Puffervorrichtung | 42 | Antriebsvorrichtung |
| 19 | Hubantrieb | 43 | erster Riemen |
| 20 | Transportvorrichtung | 44 | zweiter Riemen |
| 21 | Antriebsmotor | 45 | Transportorgan |
| 22 | Förderantrieb | 46 | Lagervorrichtung |
| 23 | Bereitstellvorrichtung | 47 | zweite Führung |
| 24 | Bereitstellvorrichtung | 48 | Führungsabschnitt |
| 49 | Führungsrad | 75 | Lagervorrichtung |
| 50 | Montagebohrung | 76 | Lagerkörper |
| 51 | Ausnehmung | 77 | Lagerarm |
| 52 | Lagerkörper | 78 | Lagerarm |
| 53 | Ausgleichselement | 79 | Ausgleichselement |
| 54 | Ausgleichselement | 80 | Ausgleichselement |
| 55 | Anschlagplatte | 81 | Radachse |
| 56 | Anschlagplatte | 82 | Lagerhülse |
| 57 | Befestigungselement | 83 | Innenhülse |
| 58 | Distanzhülse | 84 | Elastomerring |
| 59 | Ausnehmung | 85 | Lagerbund |
| 60 | Führungseinheit | 86 | Führungseinheit |
| 61 | Lagervorrichtung | 87 | Lagervorrichtung |
| 62 | Führungseinheit | 88 | zweite Führung |
| 63 | Lagervorrichtung | 89 | erster Lagerkörper |
| 64 | Lagerkörper | 90 | zweiter Lagerkörper |
| 65 | Lagerarm | 95 | Stückgut |
| 66 | Lagerarm | 96 | Lagerplatz |
| 67 | Ausgleichselement | 97 | Stückgutaufnahmevorrichtung |
| 68 | Ausgleichselement | 98 | Lagerregal |
| 69 | Montagestelle | 99 | Regalgasse |
| 70 | Montageblock | 100 | vorderer Regalsteher |
| 71 | Befestigungselement | 101 | hinterer Regalsteher |
| 72 | Montageplatte | 102 | vordere Längstraverse |
| 73 | Befestigungsmittel | 103 | hintere Längstraverse |
| 74 | Führungseinheit | 104 | Querträger |
| 105 | Mast | 131 | Mittelsteg Dämpfungselement |
| 106 | Fahrwerk | 132 | Rippen Dämpfungselement |
| 107 | Aufnahmeplattform | 133 | Fahrantrieb |
| 108 | Hubantrieb | 134 | Antriebswelle |
| 109 | Fahrantrieb | 135 | Lagervorrichtung |
| 110 | untere Führungsschiene | 136 | Ausgleichselement |
| 111 | obere Führungsschiene | 137 | Lagerhalter |
| 112 | Erfassungsvorrichtung | 138 | Lager |
| 113 | Messvorrichtung | 139 | Zugmittel |
| 114 | Auswertemodul | | |
| 115 | Steuersystem | | |
| 116 | Lagerverwaltungsrechner | | |
| 117 | Speichermodul | | |
| 118 | Lagerfläche | | |
| 119 | Steuermodul | | |
| 120 | Vergleichsmodul | | |
| 121 | Radnabe | | |
| 122 | Laufbelag | | |
| 123 | Dämpfungselement | | |
| 124 | Lagerbuchse | | |
| 125 | Innenring Radnabe | | |
| 126 | Außenring Radnabe | | |
| 127 | Mittelsteg Radnabe | | |
| 128 | Rippen Radnabe | | |
| 129 | Innenring Dämpfungselement | | |
| 130 | Außenring Dämpfungselement | | |

## Patentansprüche

1. Verfahren zum Einlagern unterschiedlicher Stückgüter (95-1, 95-2, 95-3) in zumindest ein Lagerregal (1; 98) mit in übereinander liegenden Lagerebenen und nebeneinander ausgebildeten Lagerplätzen (96-1, 96-2), bei dem die Stückgüter (95-1, 95-2, 95-3) mittels zumindest einer entlang einer Führungsschiene (11; 110, 111) vor dem Lagerregal (1; 98) bewegbaren Stückgutaufnahmevorrichtung (7; 97) zu den Lagerplätzen (96-1, 96-2) und mittels einer Transportvorrichtung (15) von der Stückgutaufnahmevorrichtung (7; 97) in das Lagerregal (1; 98) auf die Lagerplätze (96-1, 96-2) gefördert werden,
**gekennzeichnet durch** die Schritte
- Erfassung der Dichte zu jedem Stückgut (95-1, 95-2, 95-3) durch ein Steuersystem (14; 115),
- Erfassung zumindest eines Grenzwertes für die Dichte des Stückgutes durch das Steuersystem (14; 115),
- Vergleichen der erfassten Dichte zu jedem Stückgut (95-1, 95-2, 95-3) mit dem zumindest einen Grenzwert für die Dichte des Stückgutes (95-1, 95-2, 95-3) durch das Steuersystem (14; 115),
- Zuordnung der Lagerplätze (96-1, 96-2) zu einer ersten Lagerplatzkategorie und zu einer zweiten Lagerplatzkategorie und Erfassung dieser Lagerplatzkategorien durch das Steuersystem (14; 115),
- Ermittlung unbelegter Lagerplätze (96-1) der ersten Lagerplatzkategorie und Ermittlung unbelegter Lagerplätze (96-2) der zweiten Lagerplatzkategorie durch das Steuersystem (14; 115),
- Einlagerung erster Stückgüter (95-1) mittels der Stückgutaufnahmevorrichtung (7; 97) und Transportvorrichtung (15) auf unbelegte Lagerplätze (96-2) der zweiten Lagerplatzkategorie, sofern eine einen Grenzwert unterschreitende Abweichung ermittelt wird, und
- Einlagerung zweiter Stückgüter (95-2) mittels der Stückgutaufnahmevorrichtung (7; 97) und Transportvorrichtung (15) auf unbelegte Lagerplätze (96-1) der ersten Lagerplatzkategorie, sofern eine einen Grenzwert überschreitende Abweichung ermittelt wird.

2. Verfahren nach Anspruch 1, **dadurch gekennzeichnet, dass** das Lagerregal (1; 98) in den übereinander liegenden Lagerebenen an einer ersten Tiefenposition und einer dahinter liegenden zweiten Tiefenposition jeweils nebeneinander Lagerplätze (96-1, 96-2) ausbildet, wobei die Lagerplätze (96-2) der zweiten Lagerplatzkategorie in der zweiten Tiefenposition liegen und die ersten Stückgüter (95-1) auf den Lagerplätzen (96-2) in der zweiten Tiefenposition gelagert werden.

3. Verfahren nach Anspruch 1, **dadurch gekennzeichnet, dass** zu jedem Stückgut (95-1, 95-2, 95-3) eine Längen/Breiten/Höhenabmessung und ein Gewicht erfasst werden, wobei die Dichte des Stückgutes (95-1, 95-2, 95-3) aus der Volumenabmessung und Gewichtsmessung bestimmt wird.

4. Verfahren nach Anspruch 1 oder 3, **dadurch gekennzeichnet, dass** zu jedem Stückgut (95-1, 95-2, 95-3) nach einem Kommissioniervorgang mittels einer Messvorrichtung (113) ein Gewicht ermittelt und vor der Einlagerung die Dichte des Stückgutes (95-1, 95-2, 95-3) neuerlich aus der Volumenabmessung und dem erfassten Gewicht bestimmt wird.

5. Verfahren nach Anspruch 1, **dadurch gekennzeichnet, dass** die Stückgutaufnahmevorrichtung (7; 97) ein Transportfahrzeug zum Einlagern von Stückgütern (95-1, 95-2, 95-3) in das Lagerregal (1; 98) und Auslagern von Stückgütern (95-1, 95-2, 95-3) aus dem Lagerregal (1; 98) in einem Lagersystem ist, wobei das Lagersystem übereinander liegende und vor dem Lagerregal (1) horizontal verlaufende Fahrebenen (16) umfasst, entlang welcher das Transportfahrzeug (7) bewegbar ist, welches Transportfahrzeug (7) umfasst
- einen Grundrahmen (27),
- Laufräder (29), welche auf einer ersten Führung (36) abrollbar aufliegen und am Grundrahmen (27) drehbar gelagert sind, wobei sich die erste Führung (36) parallel zur Längsrichtung des Lagerregales (1; 98) und in einer parallel zur Fahrebene (16) verlaufenden ersten Führungsebene erstreckt,
- einen Fahrantrieb (30), welcher mit zumindest einem Laufrad (29) gekoppelt ist,
- zumindest eine Führungseinheit (31; 60; 62; 74; 86), welche über eine Lagervorrichtung (46; 61; 63; 75; 87) am Grundrahmen (27) montiert ist und welche auf einer zweiten Führung (47; 88) an voneinander abgewandten Führungsabschnitten (48) abrollbar anliegende Führungsräder (49) aufweist, wobei die Führungsräder (49) an der Lagervorrichtung (46; 61; 63; 75; 87) drehbar gelagert sind und wobei sich die zweite Führung (47; 88) parallel zur Längsrichtung des Lagerregales (1) und in einer die Fahrebene (16) schneidenden zweiten Führungsebene erstreckt, um das Transportfahrzeug (7) auf der Fahrbewegung entlang des Lagerregales (1) quer zur zweiten Führungsebene geführt zu bewegen,
- wobei die Lagervorrichtung (46; 61; 63; 75; 87) zumindest ein elastisch nachgiebiges Ausgleichselement (53; 54; 67, 68; 79, 80) aufweist, welches derart angeordnet und gestaltet ist, dass zumindest eines der Führungsräder (49) relativ zum Grundrahmen (27) beweglich ist.

## Claims

1. A method for storing different unit loads (95-1, 95-2, 95-3) in at least one storage rack (1; 98) having adjacently disposed storage spaces (96-1, 96-2) in storage levels lying one above the other, whereby the unit loads (95-1, 95-2, 95-3) are conveyed to the storage spaces (96-1, 96-2) by means of at least one unit load receiving device (7; 97) which can be moved along a guide track (11; 110, 111) in front of the storage rack (1; 98) and from the unit load receiving device (7; 97) into the storage rack (1; 98) onto the storage spaces (96-1, 96-2) by means of a transport device (15),
**characterized by** the steps
- acquiring the density for each unit load (95-1, 95-2, 95-3) by means of a control system (14; 115),
- acquiring at least one threshold value for the density of the unit load by means of the control system (14; 115),
- comparing the density acquired for each unit load (95-1, 95-2, 95-3) with the at least one threshold value for the density of the unit load (95-1, 95-2, 95-3) by means of the control system (14; 115),
- assigning the storage spaces (96-1, 96-2) to a first storage space category and to a second storage space category and acquiring these storage space categories by means of the control system (14; 115),
- determining unoccupied storage spaces (96-1) of the first storage space category and determining unoccupied storage spaces (96-2) of the second storage space category by means of the control system (14; 115),
- storing first unit loads (95-1) by means of the unit load receiving device (7; 97) and transport device (15) in unoccupied storage spaces (96-2) of the second storage space category if a deviation falling below a threshold value is determined, and
- storing second unit loads (95-2) by means of the unit load receiving device (7; 97) and transport device (15) in unoccupied storage spaces (96-1) of the first storage space category if a deviation exceeding a threshold value is determined.

2. The method according to claim 1, **characterized in that** in the storage levels lying one above the other, the storage rack (1; 98) has adjacent storage spaces (96-1, 96-2) respectively at a first depth position and a second depth position lying behind the first depth position, wherein the storage spaces (96-2) of the second storage space category lie in the second depth position and the first unit loads (95-1) are stored in the storage spaces (96-2) in the second depth position.

3. The method according to claim 1, **characterized in that** a length/width/height dimension and a weight are acquired for each unit load (95-1, 95-2, 95-3), wherein the density of the unit load (95-1, 95-2, 95-3) is determined from the volume dimension and weight measurement.

4. The method according to claim 1 or 3, **characterized in that** a weight for each unit load (95-1, 95-2, 95-3) is determined by means of a measuring device (113) after a picking operation and the density of the unit load (95-1, 95-2, 95-3) is determined again from the volume dimension and the acquired weight prior to storage.

5. The method according to claim 1, **characterized in that** the unit load receiving device (7; 97) is a transport vehicle for storing unit loads (95-1, 95-2, 95-3) in the storage rack (1; 98) and retrieving unit loads (95-1, 95-2, 95-3) from the storage rack (1; 98) in a storage system, wherein the storage system comprises driving planes (16) lying one above the other and extending horizontally in front of the storage rack (1), along which driving planes (16) the transport vehicle (7) is movable, the transport vehicle (7) comprising
- a base frame (27),
- running wheels (29), which lie in a rollable manner on a first guide (36) and are rotatably mounted on the base frame (27), wherein the first guide (36) extends parallel to the longitudinal direction of the storage rack (1; 98) and in a first guide plane extending parallel to the driving plane (16),
- a traction drive (30), which is coupled with at least one running wheel (29),
- at least one guide unit (31; 60; 62; 74; 86), which is mounted on the base frame (27) via a bearing device (46; 61; 63; 75; 87) and which has guide wheels (49) resting on a second guide (47; 88) in a rollable manner on guide sections (48) facing away from one another, wherein the guide wheels (49) are rotatably mounted on the bearing device (46; 61; 63; 75; 87) and wherein the second guide (47; 88) extends parallel to the longitudinal direction of the storage rack (1) and in a second guide plane intersecting the driving plane (16) in order to move the transport vehicle (7) in a guided manner on the travel movement along the storage rack (1) transversely to the second guide plane,
- wherein the bearing device (46; 61; 63; 75; 87) comprises at least one elastically flexible compensating element (53; 54; 67, 68; 79, 80), which is arranged and configured in such a way that at least one of the guide wheels (49) is movable relative to the base frame (27).

## Revendications

1. Procédé pour le stockage de différentes pièces (95-1, 95-2, 95-3) dans au moins un rayonnage de stockage (1 ; 98) avec des niveaux de stockage superposés et des emplacements de stockage (96-1, 96-2) juxtaposés, dans lequel les pièces (95-1, 95-2, 95-3) sont convoyées au moyen d'au moins un dispositif de prise en charge de pièces (7 ; 97) pouvant être déplacé, le long d'un rail de guidage (11 ; 110, 111) devant le rayonnage de stockage (1 ; 98), vers les emplacements de stockage (96-1, 96-2) et, au moyen d'un dispositif de transport (15), du dispositif de prise en charge de pièces (7 ; 97) vers le rayonnage de stockage (1 ; 98) sur les emplacements de stockage (96-1, 96-2), **caractérisé par** les étapes suivantes :
- mesure de la densité de chaque pièce (95-1, 95-2, 95-3) par un système de commande (14 ; 115),
- mesure d'au moins une valeur limite pour la densité de la pièce par le système de commande (14 ; 115),
- comparaison de la densité mesurée pour chaque pièce (95-1, 95-2, 95-3) avec l'au moins une valeur limite pour la densité de la pièce (95-1, 95-2, 95-3) par le système de commande (14 ; 115),
- attribution des emplacements de stockage (96-1, 96-2) à une première catégorie d'emplacements de stockage et à une deuxième catégorie d'emplacements de stockage et détection de ces catégories d'emplacements de stockage par le système de commande (14 ; 115),
- détermination des emplacements de stockage (96-1) non occupés de la première catégorie d'emplacements de stockage et détermination des emplacements de stockage (96-2) non occupés de la deuxième catégorie d'emplacements de stockage par le système de commande (14 ; 115),
- stockage de premières pièces (95-1) au moyen du dispositif de prise en charge de pièces (7 ; 97) et du dispositif de transport (15) sur des emplacements de stockage (96-2) non occupés de la deuxième catégorie d'emplacements de stockage si un écart inférieur à une valeur limite est déterminé et
stockage de deuxièmes pièces (95-2) au moyen du dispositif de prise en charge de pièces (7 ; 97) et du dispositif de transport (15) sur des emplacements de stockage (96-1) non occupés de la première catégorie d'emplacements de stockage si un écart inférieur à une valeur limite est déterminé.

2. Procédé selon la revendication 1, **caractérisé en ce que** le rayonnage de stockage (1 ; 98) forme respectivement, dans les niveaux de stockage superposés, au niveau d'une première position de profondeur et d'une deuxième position de profondeur située derrière celle-ci, des emplacements de stockage (96-1, 96-2) juxtaposés, dans lequel les emplacements de stockage (96-2) de la deuxième catégorie d'emplacements de stockage se trouvent dans la deuxième position de profondeur et les premières pièces (95-1) sont stockés sur les emplacements de stockage (96-2) dans la deuxième position de profondeur.

3. Procédé selon la revendication 1, **caractérisé en ce que**, pour chaque pièce (95-1, 95-2, 95-3), sont mesurés des dimensions de longueur/largeur/hauteur et un poids, dans lequel la densité de la pièce (95-1, 95-2, 95-3) est déterminée à partir du volume et du poids.

4. Procédé selon la revendication 1 ou 3, **caractérisé en ce que**, pour chaque pièce (95-1, 95-2, 95-3), après un processus de préparation de commande, au moyen d'un dispositif de mesure (113), un poids est déterminé et, avant le stockage, la densité de la pièce (95-1, 95-2, 95-3) est à nouveau déterminée à partir du volume et du poids déterminé.

5. Procédé selon la revendication 1, **caractérisé en ce que** le dispositif de prise en charge de pièces (7 ; 97) est un véhicule de transport pour le stockage de pièces (95-1, 95-2, 95-3) dans le rayonnage de stockage (1 ; 98) et le déstockage de pièces (95-1, 95-2, 95-3) hors du rayonnage de stockage (1 ; 98) dans un système de stockage, dans lequel le système de stockage comprend des niveaux mobiles (16) superposés et se déplaçant horizontalement devant le rayonnage de stockage (1), le long desquels le véhicule de transport (7) peut être déplacé, ce véhicule de transport (7) comprenant
- un châssis de base (27),
- des roues (29) qui reposent de manière roulante sur un premier guidage (36) et qui sont logées de manière rotative au niveau du châssis de base (27), dans lequel le premier guidage (36) s'étend parallèlement à la direction longitudinale du rayonnage de stockage (1 ; 98) dans un premier plan de guidage s'étendant parallèlement au niveau mobile (16),
- un entraînement (30) qui est couplé avec au moins une roue (29),
- au moins une unité de guidage (31, 60, 62, 74, 86) qui est montée sur le châssis de base (27) par l'intermédiaire d'un dispositif de palier (46, 61, 63, 75, 87) et qui comprend, sur un deuxième guidage (47 ; 88), au niveau de portions de guidage (48) opposées entre elles, des roues de guidage (49) s'appuyant de manière roulante, dans lequel les roues de guidage (49) sont logées de manière rotative au niveau du dispositif de palier (46, 61, 63, 75, 87) et dans lequel le deuxième guidage (47 ; 88) s'étend parallèlement à la direction longitudinale du rayonnage de stockage (1) et dans un deuxième plan de guidage qui croise le niveau mobile (16), afin de déplacer le véhicule de transport (7) de manière guidée sur le mouvement de déplacement le long du rayonnage de stockage (1) transversalement par rapport au deuxième plan de guidage,
- dans lequel le dispositif de palier (46, 61, 63, 75, 87) comprend au moins un élément de compensation (53 ; 54 ; 67, 68 ; 79, 80) flexible de manière élastique, qui est disposé et conçu de sorte qu'au moins une des roues de guidage (49) est mobile par rapport au châssis de base (27).
